# EUROPÄISCHE PATENTSCHRIFT

(11) **EP 2 794 431 B1**
(45) Veröffentlichungstag und Bekanntmachung des Hinweises auf die Patenterteilung: **03.05.2017**
(21) Anmeldenummer: 12797678.5
(22) Anmeldetag: 24.10.2012
(51) Int. Cl.: B65G 1/04

(54) **REGALLAGERSYSTEM UND VERFAHREN ZUM BETREIBEN DESSELBEN**
RACK STORAGE SYSTEM AND METHOD FOR OPERATING IT
SYSTÈME DE STOCKAGE SUR RAYONNAGES ET SON PROCÉDÉ DE FONCTIONNEMENT

(30) Priorität: 21.12.2011 AT 18642011; 16.05.2012 WO PCT/AT2012/050072
(43) Veröffentlichungstag der Anmeldung: 29.10.2014
(73) Patentinhaber: TGW Logistics Group GmbH, 4600 Wels (AT)
(72) Erfinder: AHAMMER, Christian, A-4623 Gunskirchen (AT); HANSL, Rudolf, A-4020 Linz (AT)
(74) Vertreter: Burger, Hannes
(86) Internationale Anmeldenummer: PCT/AT2012/050168
(87) Internationale Veröffentlichungsnummer: WO 2013/090959

(56) Entgegenhaltungen:
- WO-A1-2009/143548
- WO-A1-2011/108636
- JP-A- H08 175 620
- JP-A- 2004 123 240
- US-A1- 2011 008 137

## Beschreibung

Die Erfindung betrifft ein Verfahren und ein Regallagersystem mit Lagerregalen, welche in übereinander liegenden Regalebenen Lagerplätze für Ladegüter aufweisen, und einer Ladegut-Manipulationseinheit, welche zumindest eine erste Ladegut-Hebevorrichtung mit einer Transportvorrichtung und eine erste Puffervorrichtung mit Bereitstellfördervorrichtungen aufweist, und zumindest einer zwischen den Lagerregalen und entlang der Ladegut-Hebevorrichtung sowie Puffervorrichtung verlaufenden Regalgasse, und in Längsrichtung der Regalgasse in zumindest einigen der Regalebenen verlaufenden Führungsbahnen, und zumindest einem entlang der Führungsbahnen verfahrbaren Einebenenregalbediengerät zum Transport von Ladegütern zwischen den Lagerplätzen in den Lagerregalen und der Puffervorrichtung in der Ladegut-Manipulationseinheit sowie einer an die Ladegut-Hebevorrichtung angeschlossenen Fördertechnik zum Antransport und Abtransport von Ladegütern zu bzw. von der Ladegut-Hebevorrichtung.

Die WO 2011/108636 A1 beschreibt ein Regallagersystem mit Lagerregalen, welches in übereinander liegenden Regalebenen eine Vielzahl von Lagerplätzen für Ladegüter aufweist. Eine Ladegut-Manipulationseinheit umfasst eine Ladegut-Hebevorrichtung mit daran verfahrbaren, heb- und senkbaren Transportvorrichtungen. Zwischen den Lagerregalen ist eine Regalgasse ausgebildet, wobei in zumindest einigen der Regalebenen verlaufende Führungsbahnen für daran entlang verfahrbare (erste) Förderfahrzeuge zum Transport von Ladegütern vorgesehen sind. An der Stirnseite der einzelnen Lagerregale sind Puffervorrichtungen mit Pufferspeicherplätzen vorgesehen. Der Mast der Ladegut-Hebevorrichtung ist innerhalb der Regalgasse angeordnet, wobei die heb- und senkbaren Transportvorrichtungen jeweils in Längsrichtung der Lagerregale vor den Pufferspeicherplätzen angeordnet sind. Anschließend an die Ladegut-Manipulationseinheit kann entweder eine Fördertechnik für den An- und Abtransport der Ladegüter oder aber weitere Lagerregale angeordnet sein. Sind weitere Lagerregale vorgesehen, so ist zwischen diesen jeweils eine Regalgasse ausgebildet, wobei in zumindest einigen der Regalebenen verlaufende Führungsbahnen für daran entlang verfahrbare (zweite) Förderfahrzeuge zum Transport von Ladegütern vorgesehen sind. An der Stirnseite der weiteren Lagerregale sind Puffervorrichtungen mit Pufferspeicherplätzen vorgesehen. Die (ersten/zweiten) Förderfahrzeuge können zum Einlagern sowie Auslagern der Ladegüter in bzw. aus den Lagerregalen die entsprechenden Ladegüter von den Lagerplätzen zu einem der Pufferspeicherplätze bzw. von einem der Pufferspeicherplätze auf den dafür vorgesehenen Lagerplatz auf der jeweiligen Seite der Ladegut-Hebevorrichtung verbringen. Die Führungsbahnen enden jeweils im Bereich der Pufferspeicherplätze.

Aus der EP 2 327 643 A1, US 2011/008137 A1, WO 2011/086009 A1, JP 8-175620 A und JP 2004-123240 A ist ein Regallagersystem bekannt, welches ein Regallager mit benachbart zueinander angeordneten Lagerregalen und in Regalebenen entlang einer Regalgasse verlaufende Führungsbahnen sowie zumindest ein entlang der Führungsbahnen verfahrbares, autonomes Förderfahrzeug zum Transport der Ladegüter zu den Lagerplätzen umfasst. An einer der Regallagerseiten ist stirnseitig vor dem Regallager eine Puffervorrichtung mit Bereitstellfördervorrichtungen vorgesehen, wobei die Bereitstellfördervorrichtungen auf Höhe der Regalebenen angeordnet sind.

Ferner ist aus der EP 2 287 093 A1 ein gattungsgemäßes Regallagersystem bekannt, bei dem eine Ladegut-Manipulationseinheit zwischen den stirnseitigen Regallagerseiten im Regallager integriert angeordnet ist und eine erste Ladegut-Hebevorrichtung mit einer Transportvorrichtung und eine erste Puffervorrichtung mit Bereitstellfördervorrichtungen umfasst. Führungsbahnen erstrecken sich in Längsrichtung der Regalgasse und laufen an der ersten Ladegut-Hebevorrichtung vorbei, sodass ein Förderfahrzeug eine Position vor der Ladegut-Hebevorrichtung anfahren kann.

Ein Regallagersystem ist auch aus EP 0 733 563 A1 bekannt, welches ein Regallager mit benachbart zueinander angeordneten Lagerregalen und in Regalebenen entlang einer Regalgasse verlaufende Führungsbahnen sowie in jeder Regalebenen ein entlang der Führungsbahnen verfahrbares, autonomes Förderfahrzeug zum Transport der Ladegüter zu den Lagerplätzen umfasst. In die Lagerregale ist jeweils eine Puffervorrichtung mit Bereitstellfördervorrichtungen vorgesehen, wobei die Bereitstellfördervorrichtungen auf Höhe der Regalebenen angeordnet sind. Wie die Ein- und Auslagervorgänge für die Ladegüter vonstattengehen, ist nicht näher beschrieben.

Diese bekannten Regallagersysteme erfüllen zwar das Erfordernis an eine hohe Durchsatzleistung, sind diese jedoch sehr komplex im Aufbau und ist auch der steuerungstechnische Aufwand hoch. Damit verbunden sind auch hohe Investitionskosten.

Schließlich ist aus der WO 2009/143548 A1 ein Regallagersystem bekannt, bei dem ein Mehrebenen-Regalbediengerät zum Einlagern und Auslagern von Ladegütern eingesetzt wird. Aufgabe der vorliegenden Erfindung ist es, ein Regallagersystem und ein Verfahren zum Betreiben desselben zu schaffen, das sich mit geringem steuerungstechnischen und mechanischen Aufwand kostengünstig realisieren und betreiben lässt.

Die Aufgabe der Erfindung wird durch das Regallagersystem nach Anspruch 1 und durch das Verfahren nach Anspruch 18 gelöst, wobei die Führungsbahnen in jenen Regalebenen, in welchen die Bereitstellvorrichtungen angeordnet sind, entlang der Regalgasse und der Ladegut-Hebevorrichtung sowie den Bereitstellvorrichtungen durchgehend verlaufen und der erste Pufferstreckenabschnitt mit den Bereitstellvorrichtungen und der zweite Pufferstreckenabschnitt mit den Bereitstellvorrichtungen sowie die zwischen den Fördervorrichtungen und den Pufferstreckenabschnitten angeordnete Ladegut-Hebevorrichtung mit der heb- und senkbaren Transportvorrichtung zum Einlagern und Auslagern von Ladegütern seitlich neben der Regalgasse entlang der Führungsbahnen vorgesehen sind, sodass in der jeweiligen Regalebene entweder die Bereitstellvorrichtung im ersten Pufferstreckenabschnitt oder die Bereitstellvorrichtung im zweiten Pufferstreckenabschnitt über die Führungsbahnen vom Förderfahrzeug zum Auslagern und Einlagern von Ladegütern anfahrbar ist, und dass die Bereitstellvorrichtungen des ersten Pufferstreckenabschnittes in allen Regalebenen, in welchen diese angeordnet sind, jeweils (ausschließlich) eine Auslagerstrecke für die Ladegüter bilden und die Bereitstellvorrichtungen des zweiten Pufferstreckenabschnittes in allen Regalebenen, in welchen diese angeordnet sind, jeweils (ausschließlich) eine Einlagerstrecke für die Ladegüter bilden.

Das oder die Ladegüter werden vom ersten Pufferstreckenabschnitt über die Ladegut-Hebevorrichtung zu einer Auslager-Fördertechnik und von dieser zu einem Arbeitsplatz abgefördert. Hingegen dient der zweite Pufferstreckenabschnitt ausschließlich einem Einlagervorgang für Ladegüter, welche über eine Einlager-Fördertechnik von einem Arbeitsplatz angefördert werden. Die Ladegüter werden über dieselbe Ladegut-Hebevorrichtung zum zweiten Pufferstreckenabschnitt und von dort mittels des Einebenregalbediengerätes in das Lagerregal gefördert. Dadurch wird eine wesentliche Vereinfachung sowohl des steuerungstechnischen und konstruktiven Aufbau erreicht.

Es ist auch von Vorteil, wenn die erste Fördervorrichtung zum Antransport von Ladegütern zu der Ladegut-Hebevorrichtung und die zweite Fördervorrichtung zum Abtransport von Ladegütern von der Ladegut-Hebevorrichtung mehrerer Regalgassen an ein automatisiertes Verteilsystem zum Antransport und Abtransport von Ladegütern zu bzw. von den Fördervorrichtungen angeschlossen sind. An das Verteilsystem schließen zwei oder mehrere Regal-Gassen-Einheiten bzw. Regalgassen an, sodass die Regal-Gassen-Einheiten bzw. Regalgassen nicht mit maximaler Einlager- und Auslagerleistung betrieben werden müssen. Dies wirkt sich günstig auf die Verfügbarkeit des Regallagersystems aus.

Eine Platz sparende Anordnung bzw. Anpassung der Vorzonen-Fördertechnik an unterschiedliche Anforderungen wird erreicht, wenn die erste Fördervorrichtung und die zweite Fördervorrichtung parallel zur Regalgasse verlaufende und fluchtend einander gegenüberliegende erste Förderabschnitte sowie eine der Fördervorrichtungen einen zweiten Förderabschnitt und einen parallel zur Regalgasse verlaufenden dritten Förderabschnitt ausbilden, wobei der erste und dritte Förderabschnitt innerhalb einer, bevorzugt horizontalen Fördertechnikebene zueinander versetzt sind oder der erste und dritte Förderabschnitt in übereinander liegenden Fördertechnikebenen angeordnet sind, wobei der erste und dritte Förderabschnitt über den zweiten Förderabschnitt miteinander verbunden sind.

Vorteilhaft ist auch, wenn das Regallager zumindest zwei Regal-Gassen-Einheiten umfasst, wovon jede Regal-Gassen-Einheit durch benachbart zueinander angeordnete Lagerregale und eine sich zwischen diesen erstreckende Regalgasse gebildet ist sowie die Ladegut-Manipulationseinheit umfasst, und dass die ersten Förderabschnitte der Fördervorrichtungen sich in der Verlängerung eines Lagerregales der ersten Regal-Gassen-Einheit und der dritte Förderabschnitte der Fördervorrichtung sich in der Verlängerung eines Lagerregales der zweiten Regal-Gassen-Einheit erstrecken. Mit dieser Anordnung wird eine maximale Ausnutzung des nutzbaren Lagervolumens und eine optimale Zugänglichkeit zur Fördertechnik, beispielweise im Störungsfall oder zu Wartungszwecken ermöglicht.

Auch kann es sich von Vorteil erweisen, wenn das Regallager zumindest zwei Regal-Gassen-Einheiten umfasst, wovon jede Regal-Gassen-Einheit durch benachbart zueinander angeordnete Lagerregale und eine sich zwischen diesen erstreckende Regalgasse gebildet ist sowie die Ladegut-Manipulationseinheit umfasst, wobei die Regal-Gassen-Einheiten mit gegenseitigem Abstand angeordnet sind, sodass zwischen den benachbarten Lagerregalen der Regal-Gassen-Einheiten ein Gang entsteht, in dessen Verlängerung oder innerhalb welchem teilweise der dritte Förderabschnitt verläuft. Damit wird eine Platz sparende Anordnung der Vorzonen-Fördertechnik erreicht und können auf dem zur Verfügung stehenden Raum in jeder Regal-Gassen-Einheit zwei Ladegut-Hebevorrichtungen angebracht werden. Werden je Regal-Gassen-Einheit zwei Ladegut-Hebevorrichtungen vorgesehen, so sind diese spiegelbildlich zum dritten Förderabschnitt angeordnet. Der dritte Förderabschnitt kann bei dieser Anordnung sowohl für die erste Ladegut-Hebevorrichtung als auch die zweite Ladegut-Hebevorrichtung verwendet werden.

Es kann sich auch als Vorteilhaft erweisen, wenn das Regallager zumindest eine Regal-Gassen-Einheit umfasst, welche durch benachbart zueinander angeordnete Lagerregale und eine sich zwischen diesen erstreckende Regalgasse gebildet ist sowie die Ladegut-Manipulationseinheit umfasst, und dass die ersten Förderabschnitte der Fördervorrichtungen sich in der Verlängerung eines Lagerregales der Regal-Gassen-Einheit und der dritte Förderabschnitt der Fördervorrichtung sich in der Verlängerung der Regalgasse erstrecken. Auch nach dieser Ausführung können auf dem zur Verfügung stehenden Raum in jeder Regal-Gassen-Einheit und spiegelbildlich zum dritten Förderabschnitt zwei Ladegut-Hebevorrichtungen angebracht werden.

Es ist aber auch von Vorteil, wenn das Regallager zumindest eine Regal-Gassen-Einheit umfasst, welche durch benachbart zueinander angeordnete Lagerregale und eine sich zwischen diesen erstreckende Regalgasse gebildet ist sowie die Ladegut-Manipulationseinheit mit einer zweiten Ladegut-Hebevorrichtung mit einer heb- und senkbaren Transportvorrichtung zum Einlagern und Auslagern von Ladegütern sowie eine zweite Puffervorrichtung mit Bereitstellvorrichtungen für das Zwischenpuffern eines oder mehrerer Ladegüter umfasst, wobei sich die Regalgasse zwischen den benachbart zueinander angeordneten Lagerregalen und entlang der Ladegut-Hebevorrichtungen sowie der Puffervorrichtungen erstreckt.

Die Anordnung von einem ersten Pufferstreckenabschnitt und zweiten Pufferstreckenab-schnitt jeweils beidseits zur Regalgasse ist im Hinblick auf Ausfallsicherheit (Redundanz) vorteilhaft. Liegt an einer der Ladegut-Hebevorrichtungen eine Störung vor, kann der Betrieb, daher das Auslagern und Einlagern von Ladegütern, über die eine funktionstüchtige Ladegut-Hebevorrichtung dennoch aufrecht erhalten bleiben. Eine Änderung des Steuerungsablaufes oder von Förderrichtungen und des Förderflusses beim Ein- bzw. Auslagern der Ladegüter an der funktionstüchtigen Ladegut-Hebevorrichtung ist nicht notwendig.

Das Einebenenregalbediengerät kann außerdem bei einem Auslagervorgang durch einen Materialflussrechner gesteuert, wahlweise im ersten Pufferstreckenabschnitt entweder der linken Regalgassenseite oder rechten Regalgassenseite einen Übernahmeabschnitt zur Abgabe eines auszulagernden Ladegutes anfahren. Dadurch ist eine Sequenzbildung in der Auslagerreihenfolge der Ladegüter möglich.

Andererseits kann das Einebenenregalbediengerät bei einem Einlagervorgang durch einen Materialflussrechner gesteuert, wahlweise im zweiten Pufferstreckenabschnitt entweder der linken Regalgassenseite oder rechten Regalgassenseite einen Übergabeabschnitt zur Übernahme eines einzulagernden Ladegutes anfahren.

Außerdem ist bei vergleichsweise niedrigem Investitionsaufwand für das Regallagersystem eine hohe Durchsatzleistung möglich.

Vorteilhaft ist auch, wenn die Fördertechnik zum Antransport und Abtransport von Ladegütern zu bzw. von der Ladegut-Hebevorrichtung zumindest eine Übergabe- und Übernahmevorrichtung für ein oder mehrere Ladegüter umfasst, wobei die Übergabe- und Übernahmevorrichtung an die erste Fördervorrichtung und/oder zweite Fördervorrichtung der Fördertechnik anschließt, und dass sich die Führungsbahn in jener Regalebene, in welcher die Fördertechnik zum Antransport und Abtransport von Ladegütern zu bzw. von der Ladegut-Hebevorrichtung angeordnet ist, entlang der Übergabe- und Übernahmevorrichtung erstreckt und die Übergabe- und Übernahmevorrichtung vom Förderfahrzeug mittels der Führungsbahn anfahrbar ist, sodass Ladegüter zum Auslagern und Einlagern von Ladegütern zwischen dem Förderfahrzeug und der Übergabe- und Übernahmevorrichtung förderbar sind. Dadurch können auch in derjenigen Regalebene, in welcher sich die Fördertechnik zum Antransport und Abtransport von Ladegütern zu bzw. von der Ladegut-Hebevorrichtung befindet, Lagerplätze für Ladegüter vorgesehen und das nutzbare Lagervolumen optimal genutzt werden.

Auch erweist sich eine Ausführung als günstig, bei der die heb- und senkbare Transportvorrichtung eine erste Greifereinheit und eine zweite Greifereinheit umfasst, wobei jede der Greifereinheiten an einander gegenüberliegenden Längsseiten der Aufnahmeplattform angeordnete und relativ gegenüber der Aufnahmeplattform in einer ersten Richtung parallel zu den Längsseiten und/oder in einer zweiten Richtung im Wesentlich senkrecht zu den Längsseiten, insbesondere sowohl in einer ersten Richtung parallel zu den Längsseiten als auch in einer zweiten Richtung im Wesentlich senkrecht zu den Längsseiten verstellbare Greifvorrichtungen zum Umlagern von Ladegütern umfasst, wobei zumindest ein erstes Ladegut mittels der ersten Greifereinheit entweder von einem der Übernahme- bzw. Übergabeabschnitte im ersten Pufferstreckenabschnitt oder von der ersten Fördertechnik zum Antransport von Ladegütern auf die Transportvorrichtung und zumindest ein zweites Ladegut mittels der zweiten Greifereinheit von der Transportvorrichtung entweder auf einen der Übernahme- bzw. Übergabeabschnitte im zweiten Pufferstreckenabschnitt oder auf die zweite Fördertechnik zum Abtransport von Ladegütern gleichzeitig bewegbar sind. Die Ladegüter werden dabei mittels der ersten Greifereinheit bzw. zweiten Greifereinheit ausschließlich in einer Horizontalebene bewegt. Ein Anheben/Absenken der Ladegüter relativ zu stationären Auflagetischen oder der Aufnahmeplattform während der Verlagerungsbewegung zwischen der Transportvorrichtung und den Auflagetischen ist nicht erforderlich.

Es ist auch von Vorteil, wenn die heb- und senkbare Transportvorrichtung für ein oder mehrere Ladegüter zusätzlich zu den Greifereinheiten eine oder mehrere in Förderrichtung hintereinander angeordnete Fördervorrichtungen umfasst. Dadurch kann während der vertikalen Stellbewegung der Transportvorrichtung gleichzeitig eine Förderbewegung des einzelnen Ladegutes oder mehrerer Ladegüter auf der Transportvorrichtung erfolgen, um eine Sortierreihenfolge für einen Auftrag herzustellen oder eine Positionierung des einzelnen Ladegutes oder mehrerer Ladegüter vor ihrer Abgabe auf eine Einlagerstrecke zu ermöglichen.

Während nach der ersten Ausführung die Bereitstellvorrichtungen in einem Übernahme- bzw. Übergabeabschnitt jeweils einen stationären Auflagetisch (ohne Förderelemente) für ein oder mehrere Ladegüter ausbilden, können die Bereitstellvorrichtungen nach der zweiten Ausführung jeweils als Bereitstellfördervorrichtungen ausgebildet sein.

Es ist aus steuerungstechnischer und konstruktiver Sicht von wesentlichem Vorteil, wenn innerhalb der Puffervorrichtung über alle Regalebenen, in denen die ersten Bereitstellfördervorrichtungen und zweiten Bereitstellfördervorrichtungen angeordnet sind, einerseits alle ersten Bereitstellfördervorrichtungen in eine einzige Förderrichtung und andererseits auch alle zweiten Bereitstellfördervorrichtungen in eine einzige Förderrichtung angetrieben werden, wobei die Förderrichtungen von sämtlichen ersten Bereitstellfördervorrichtungen bzw. zweiten Bereitstellfördervorrichtungen gleich ist.

Die Transportvorrichtung der Ladegut-Hebevorrichtung ist zumindest in einigen der Regalebenen derart positionierbar und (motorisch) antreibbar, dass gleichzeitig zumindest ein erstes Ladegut von der Bereitstellfördervorrichtung im ersten Pufferstreckenabschnitt auf die Transportvorrichtung und zumindest ein zweites Ladegut von der Transportvorrichtung auf die Bereitstellfördervorrichtung im zweiten Pufferstreckenabschnitt förderbar ist.

Der erste Pufferstreckenabschnitt dient einem Auslagervorgang für Ladegüter aus einem Lagerregal gemäß einem Auftrag. Dieser Auftrag kann ein oder mehrere Ladegüter umfassen. Das oder die Ladegüter werden vom ersten Pufferstreckenabschnitt über die Ladegut-Hebevorrichtung zu einer Auslager-Fördertechnik und von dieser zu einem Arbeitsplatz abgefördert. Hingegen dient der zweite Pufferstreckenabschnitt einem Einlagervorgang für Ladegüter, welche über eine Einlager-Fördertechnik von einem Arbeitsplatz angefördert werden. Die Ladegüter werden über dieselbe Ladegut-Hebevorrichtung zum zweiten Pufferstreckenabschnitt und von dort mittels des Einebenregalbediengerätes in das Lagerregal gefördert.

Gemäß der Erfindung wird bei der Übergabe von Ladegütern zwischen dem ersten Pufferstreckenabschnitt und der Ladegut-Hebevorrichtung bzw. zwischen der Ladegut-Hebevorrichtung und dem zweiten Pufferstreckenabschnitt ein so genanntes "Doppelspiel" realisiert. Unter "Doppelspiel" wird die gleichzeitige Manipulation bzw. Förderbewegung eines "auszulagernden" Ladegutes und eines "einzulagernden" Ladegutes verstanden. Es können aber auch gleichzeitig mehrere "auszulagernden" Ladegüter und mehrere "einzulagernden" Ladegüter manipuliert werden. Bevorzugt entspricht die Anzahl an "auszulagernden" Ladegütern der Anzahl an "einzulagernden" Ladegütern und kann zwischen einem Ladegut, zwei, drei oder vier Ladegütern variieren. Dementsprechend kann auch die Aufnahmekapazität von Ladegütern auf der Transportvorrichtung sowie dem der Ladegut-Hebevorrichtung benachbarten Übergabeabschnitt festgelegt werden. Mit den beschriebenen Maßnahmen wird eine hohe Durchsatzleistung erreicht.

Wird ausschließlich eine Ladegut-Hebevorrichtung eingesetzt, so sind die Bereitstellvorrichtungen, insbesondere Bereitstellfördervorrichtungen und Auflagetische, des ersten Pufferstreckenabschnittes und Bereitstellvorrichtungen, insbesondere Bereitstellfördervorrichtungen und Auflagetische, des zweiten Pufferstreckenabschnittes relativ zur Regalgasse vor und hinter der Ladegut-Hebevorrichtung und seitlich neben der Führungsbahn angeordnet. Das Einebenenregalbediengerät kann dabei wahlweise durch einen Materialflussrechner gesteuert, entweder im ersten Pufferstreckenabschnitt einen Übernahmeabschnitt zur Abgabe eines auszulagernden Ladegutes oder im zweiten Pufferstreckenabschnitt einen Übergabeabschnitt zur Aufnahme eines einzulagernden Ladegutes anfahren.

Der modulare Aufbau der Ladegut-Manipulationseinheit ermöglicht eine einfache Skalierbarkeit der Anlagenleistung in kleinen Stufen zwischen einer Höchstdurchsatzleistung und Normaldurchsatzleistung. Somit ist das Regallagersystem einfach für unterschiedliche Anwendungszwecke und ohne Umbau der Lagerkapazität konfigurierbar. Die Anlagenleistung kann flexibel mit tatsächlichem Geschäft des Kunden mitwachsen.

Die Ladegut-Manipulationseinheit ist aus einfachen, standardisierten Bereitstellfördervorrichtungen und der Ladegut-Hebevorrichtung gebildet, sodass der Investitionsaufwand gegenüber den aus dem Stand der Technik bekannten Regallagersystemen beträchtlich niedriger ist.

Die zweite Puffervorrichtung kann zumindest in einigen der Regalebenen ortsfest im ersten Pufferstreckenabschnitt und zweiten Pufferstreckenabschnitt die Bereitstellfördervorrichtungen umfassen, wie oben beschrieben, zwischen welche die Transportvorrichtung der Ladegut-Hebevorrichtung zumindest in einigen der Regalebenen derart positionierbar und (motorisch) antreibbar ist, dass gleichzeitig zumindest ein erstes Ladegut vom ersten Pufferstreckenabschnitt auf die Transportvorrichtung und zumindest ein zweites Ladegut von der Transportvorrichtung auf den zweiten Pufferstreckenabschnitt förderbar ist.

Sind die Förderrichtungen der Bereitstellfördervorrichtungen auf der linken Regalgassenseite und der rechten Regalgassenseite entgegengesetzt, kann das Einebenenregalbediengerät in der ersten Halteposition vor den senkrecht zur Regalgasse einander gegenüberliegenden Übernahme- und Übergabeabschnitten (45, 50) der Pufferstreckenabschnitte (41b, 42a) und/oder in der zweiten Halteposition vor den senkrecht zur Regalgasse einander gegenüberliegenden Übergabe- und Übernahmeabschnitten (50, 45) der Pufferstreckenabschnitten (42b, 41a) wechselweise ein erstes Ladegut abgeben und ein zweites Ladegut aufnehmen. Die Ladegut-Hebevorrichtungen sind dabei zumindest um eine Gassenbreite voneinander distanziert aufgestellt und sind spiegelbildlich einander gegenüberliegend angeordnet.

Es erweist sich aber auch von Vorteil, wenn die Bereitstellfördervorrichtungen im ersten Pufferstreckenabschnitt durch, die Ladegüter von einem zur Ladegut-Hebevorrichtung entfernten Übernahmeabschnitt zu einem zur Ladegut-Hebevorrichtung benachbarten Übergabeabschnitt in einer einzigen Förderrichtung bewegende Staubahnen gebildet sind, wobei der Übernahmeabschnitt vom Einebenenregalbediengerät anfahrbar und ein Ladegut vom Einebenenregalbediengerät auf den Übernahmeabschnitt umsetzbar ist. Auch die Bereitstellfördervorrichtungen im zweiten Pufferstreckenabschnitt können durch, die Ladegüter von einem zur Ladegut-Hebevorrichtung benachbarten Übernahmeabschnitt zu einem zur Ladegut-Hebevorrichtung entfernten Übergabeabschnitt in einer einzigen Förderrichtung bewegende Staubahnen gebildet werden, wobei der Übergabeabschnitt vorn Einebenenregalbediengerät anfahrbar und ein Ladegut vom Übergabeabschnitt auf das Einebenenregalbediengerät umsetzbar ist. Demnach können die Staubahnen ohne Reversierantriebe betrieben werden, was eine Vereinfachung der Steuerung und des mechanischen Aufbaus der in einer hohen Anzahl vorliegenden Bereitstellfördervorrichtungen ermöglicht.

Eine vorteilhafte Ausbildung der Erfindung liegt auch darin, wenn die Staubahnen jeweils zwischen dem Übernahmeplatz und dem Übergabeplatz zumindest einen Pufferabschnitt ausbilden. Dadurch können so genannte "Schieflasten" vermieden werden. Unter "Schieflasten" versteht man die "ungleichmäßige" Verteilung von Aufträgen zwischen mehreren Regalebenen. Werden beispielweise 10 Artikel und somit 10 Ladegüter (Lagerbehälter) zu einem Auftrag benötigt, die nicht in mehreren Regalebenen verteilt sind, sondern in einer einzigen Regalebene, so muss ein Einebenenregalbediengerät den Auslagervorgang von 10 Ladegütern vornehmen und dementsprechend mehrmals zwischen dem Regallager und der Ladegut-Manipulationseinheit hin- und herfahren. Sind nun entsprechend dimensionierte Pufferabschnitte an den Bereitstellfördervorrichtungen vorgesehen, kann bei "Schieflast" dennoch eine gleichmäßige bzw. kontinuierliche Auslagerung von Ladegütern erfolgen. Bevorzugt sind zwei oder drei Pufferplätze für Ladegüter vorgesehen.

Sind die Ladegut-Hebevorrichtungen zumindest um eine Gassenbreite voneinander distanziert aufgestellt und in Richtung der Regalgasse axial versetzt angeordnet, kann mit einem ersten Einebenenregalbediengerät die erste Ladegut-Hebevorrichtung und mit dem zweiten Einebenenregalbediengerät die zweite Ladegut-Hebevorrichtung gleichzeitig bedient werden.

Es ist auch von Vorteil, wenn die Fördertechnik eine an die Ladegut-Hebevorrichtung angeschlossene erste Fördervorrichtung zum Antransport von Ladegütern zur Ladegut-Hebevorrichtung und eine zweite Fördervorrichtung zum Abtransport von Ladegütern von der Ladegut-Hebevorrichtung umfasst, wobei die Transportvorrichtung der Ladegut-Hebevorrichtung zwischen den einander gegenüberliegenden Fördervorrichtungen derart positionierbar und (motorisch) antreibbar ist, dass gleichzeitig zumindest ein erstes Ladegut von der ersten Fördervorrichtung auf die Transportvorrichtung und zumindest ein zweites Ladegut von der Transportvorrichtung auf die zweite Fördervorrichtung förderbar ist. Gemäß der Erfindung wird bei der Übergabe von Ladegütern zwischen der ersten Fördervorrichtung und der Transportvorrichtung bzw. zwischen der Transportvorrichtung und der zweiten Fördervorrichtung ein so genanntes "Doppelspiel" realisiert, wie oben beschrieben. Bevorzugt entspricht die Anzahl an "auszulagernden" Ladegütern der Anzahl an "einzulagernden" Ladegütern und kann zwischen einem Ladegut, zwei, drei oder vier Ladegütern variieren. Dementsprechend kann auch die Aufnahmekapazität von Ladegütern auf der Transportvorrichtung sowie dem der Ladegut-Hebevorrichtung benachbarten Übergabeabschnitt (46') an der ersten Fördervorrichtung und Übernahmeabschnitt (45') an der zweiten Fördervorrichtung festgelegt werden. Mit den beschriebenen Maßnahmen wird eine hohe Durchsatzleistung erreicht.

Es kann auch vorgesehen sein, dass die erste Fördervorrichtung zum Antransport von Ladegütern zur Ladegut-Hebevorrichtung in übereinander liegenden Fördertechnikebenen und parallel zur Regalgasse verlaufende Förderabschnitte umfasst, welche über einen Umsetzheber miteinander verbunden sind. Dadurch kann eine hohe Lagerkapazität im Regallager und eine kontinuierliche Bereitstellung von Ladegütern an einem Übergabeabschnitt (46') an der ersten Fördervorrichtung sichergestellt werden. Der Umsetzheber kann im unteren Höhenbereich (Bodenbereich) des Regallagers oder im oberen Höhenbereich des Regallagers angeordnet werden. Auch können zwei Umsetzheber verwendet werden, wovon der erste Umsetzheber im unteren Höhenbereich (Bodenbereich) des Regallagers und der zweite Umsetzheber im oberen Höhenbereich des Regallagers angeordnet werden.

Von Vorteil ist auch eine Ausbildung der Erfindung, bei der die Fördertechnik eine an die jeweilige Ladegut-Hebevorrichtung angeschlossene erste Fördervorrichtung zum Antransport von Ladegütern zur Ladegut-Hebevorrichtung und eine zweite Fördervorrichtung zum Abtransport von Ladegütern von der Ladegut-Hebevorrichtung und eine in der Regalgasse verlaufende Bereitstellungsbahn sowie eine Ausschleusvorrichtung zum Transport von Ladegütern von der Bereitstellungsbahn auf die erste Fördervorrichtung umfasst. Die Bereitstellungsbahn, Ausschleusvorrichtung und/oder Fördervorrichtungen können in einer einzigen Höhenebene oder in unterschiedlichen Höhenebenen liegen. Dadurch kann eine einfache Fördertechnik aufgebaut und eine kontinuierliche Bereitstellung von Ladegütern an einem Übergabeabschnitt (46') an der ersten Fördervorrichtung sichergestellt werden.

Eine Platz sparende Anordnung der Ladegut-Manipulationseinheit wird erreicht, wenn diese stirnseitig an die Lagerregale anschließt oder in dem Regallager integriert ist.

Eine vorteilhafte Ausbildung der Erfindung liegt auch darin, wenn die erste Fördervorrichtung zum Antransport von Ladegütern zur ersten Ladegut-Hebevorrichtung und die zweite Fördervorrichtung zum Abtransport von Ladegütern von der ersten Ladegut-Hebevorrichtung an einen ersten Arbeitsplatz und die erste Fördervorrichtung zum Antransport von Ladegütern zur zweiten Ladegut-Hebevorrichtung und die zweite Fördervorrichtung zum Abtransport von Ladegütern von der zweiten Ladegut-Hebevorrichtung an einen zweiten Arbeitsplatz angeschlossen sind. Durch die vollständige Entkopplung der Einlager- und Auslagervorgänge für Arbeitsplätze kann der erste Arbeitsplatz unabhängig vom zweiten Arbeitsplatz arbeiten. Es werden die Ladegüter direkt vom Regallager über die erste Ladegut-Hebevorrichtung und die zweite Fördertechnik zum ersten Arbeitsplatz bzw. über die zweite Ladegut-Hebevorrichtung und die zweite Fördertechnik zum zweiten Arbeitsplatz gefördert und nach einem abgeschlossenen Arbeitsprozess, beispielsweise einem Kommissioniervorgang oder Beladevorgang eines Ladungsträgers, direkt vom ersten Arbeitsplatz über die erste Fördertechnik und die erste Ladegut-Hebevorrichtung bzw. vom zweiten Arbeitsplatz über die erste Fördertechnik und die zweite Ladegut-Hebevorrichtung gefördert. Dadurch wird der Förderfluss der Ladegüter getrennt und entstehen unabhängig voneinander wirkende Förderkreisläufe an Ladegütern.

Es kann sich auch von Vorteil erweisen, wenn die Transportvorrichtung der Ladegut-Hebevorrichtung zumindest in einigen der Regalebenen zwischen einen ersten Pufferstreckenabschnitt und einen zweiten Pufferstreckenabschnitt derart positioniert und (motorisch) angetrieben wird, dass gleichzeitig ein erstes Ladegut vom ersten Pufferstreckenabschnitt auf die Transportvorrichtung und ein zweites Ladegut von der Transportvorrichtung auf den zweiten Pufferstreckenabschnitt gefördert wird.

Dabei kann das erste Ladegut durch das Einebenenregalbediengerät von einem Lagerplatz zu einem zur Ladegut-Hebevorrichtung entfernten Übernahmeabschnitt auf der Bereitstellfördervorrichtung im ersten Pufferstreckenabschnitt und vom Übernahmeabschnitt in Förderrichtung zu einem der Ladegut-Hebevorrichtung benachbarten Übergabeabschnitt gefördert werden.

Es kann dabei auch das zweite Ladegut von der Transportvorrichtung zu einem der Ladegut-Hebevorrichtung benachbarten Übernahmeabschnitt und von diesem in Förderrichtung zu einem zur Ladegut-Hebevorrichtung entfernten Übergabeabschnitt auf der Bereitstellfördervorrichtung im zweiten Pufferstreckenabschnitt und danach durch das Einebenenregalbediengerät vom Übergabeabschnitt übernommen und zu einem Lagerplatz gefördert werden.

Zum besseren Verständnis der Erfindung wird diese anhand der nachfolgenden Figuren näher erläutert.

Es zeigen jeweils in stark schematisch vereinfachter Darstellung:
- Fig. 1: einen Ausschnitt eines Regallagersystems mit einem Regallager und einer ersten Ausführung einer Ladegut-Manipulationseinheit in Draufsicht;
- Fig. 2: einen Ausschnitt eines Regallagers und einer Förderfahrzeug-Hebevorrichtung in Draufsicht;
- Fig. 3: eine Seitenansicht auf die Ladegut-Manipulationseinheit gemäß der Linie III in Fig. 1;
- Fig. 4: eine Stirnansicht auf das Regallager und ein Förderfahrzeug;
- Fig. 5: eine vergrößerte Darstellung eines Teilabschnittes aus Fig. 4;
- Fig. 6: einen Ausschnitt eines Regallagersystems mit einem Regallager und einer zweiten Ausführung einer Ladegut-Manipulationseinheit in Draufsicht;
- Fig. 7: eine Seitenansicht auf die Ladegut-Manipulationseinheit gemäß der Linie VII in Fig. 6;
- Fig. 8 bis 12: einen Einlagervorgang und Auslagervorgang in aufeinander folgenden Verfahrensschritten unter Berücksichtigung einer hohen Durchsatzleistung, in Seitenansicht auf die Ladegut-Manipulationseinheit gemäß der Linie VIII in Fig. 6;
- Fig. 13 und 14: einen Einlagervorgang und Auslagervorgang in aufeinander folgenden Verfahrensschritten unter Berücksichtigung einer Sequenzbildung, in Seitenansicht auf die Ladegut-Manipulationseinheit gemäß der Linie VIII in Fig. 6;
- Fig. 15: einen Ausschnitt eines Regallagersystems mit einem Regallager und einer Ladegut-Manipulationseinheit in Seitenansicht;
- Fig. 16, 18: eine Draufsicht auf eine erste Ausführung der Fördertechnikebene bzw. Vorzonen-Fördertechnik für die Ausführung gemäß Fig. 15 mit der Fördertechnik zum Antransport von Ladegütern und zum Abtransport von Ladegütern mit unterschiedlichen Förderrichtungen;
- Fig. 17: eine Draufsicht auf Bereitstellfördervorrichtungen und die Ladegut-Hebevorrichtung auf einem Höhenniveau einer Regalebene gemäß der Ausführung in Fig. 15;
- Fig. 19, 21: eine Draufsicht auf eine zweite Ausführung der Fördertechnikebene bzw. Vorzonen-Fördertechnik zum Antransport von Ladegütern und zum Abtransport von Ladegütern mit unterschiedlichen Förderrichtungen;
- Fig. 20, 22: eine Seitenansicht auf die Ladegut-Manipulationseinheit gemäß der Linie XX in Fig. 19 und Linie XXII in Fig. 21;
- Fig. 23, 24: eine Draufsicht auf eine dritte Ausführung der Fördertechnikebene bzw. Vorzonen-Fördertechnik zum Antransport von Ladegütern und zum Abtransport von Ladegütern mit unterschiedlichen Förderrichtungen;
- Fig. 25: eine Draufsicht auf eine vierte Ausführung der Fördertechnikebene bzw. Vorzonen-Fördertechnik zum Antransport von Ladegütern und zum Abtransport von Ladegütern;
- Fig. 26: eine Seitenansicht auf die Ladegut-Manipulationseinheit gemäß der Linie XXVI in Fig. 25;
- Fig. 27: eine Draufsicht auf eine fünfte Ausführung der Fördertechnikebene bzw. Vorzonen-Fördertechnik zum Antransport von Ladegütern und zum Abtransport von Ladegütern;
- Fig. 28: eine Seitenansicht auf eine dritte Ausführung einer Ladegut-Manipulationseinheit;
- Fig. 29: eine Transportvorrichtung für die Ladegut-Hebevorrichtung der Ladegut-Manipulationseinheit gemäß Fig. 28.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Auch wird darauf hingewiesen, dass aus Gründen der besseren Übersicht in den Fig. nur einige wenige Regalebenen 16 dargestellt wurden. Vielmehr weisen die nachfolgend beschriebenen Regallagersysteme in der Regel zwischen 15 bis 25 Regalebenen auf.

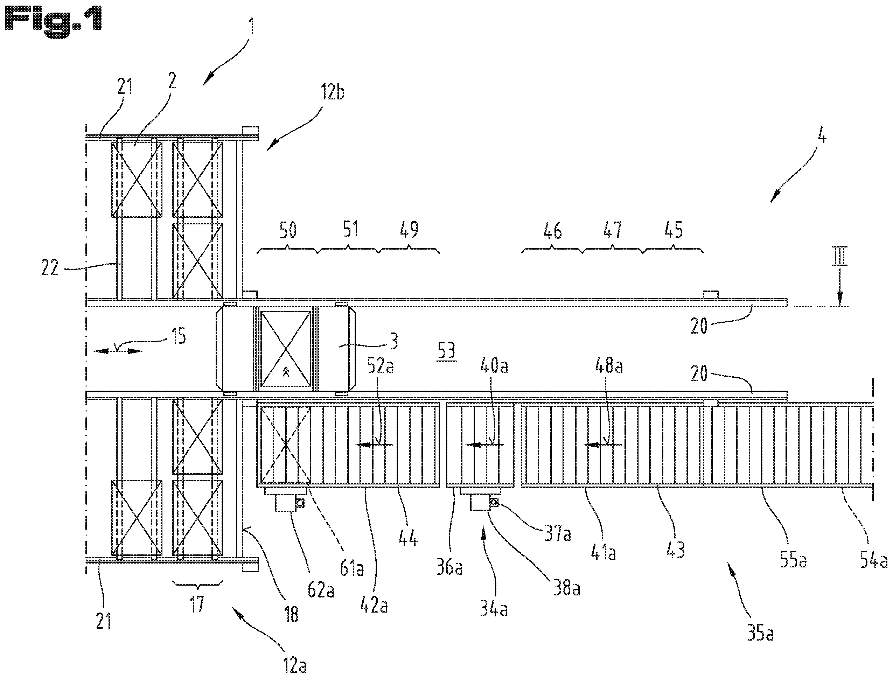

In den Fig. 1 bis 5 ist eine erste Ausführung eines Regallagersystems gezeigt, welches ein Regallager 1 für Ladegüter 2, zumindest ein selbstfahrendes, autonomes Förderfahrzeug 3, eine vollautomatisierte Ladegut-Manipulationseinheit 4 und gegebenenfalls eine Förderfahrzeug-Hebevorrichtung 5 umfasst.

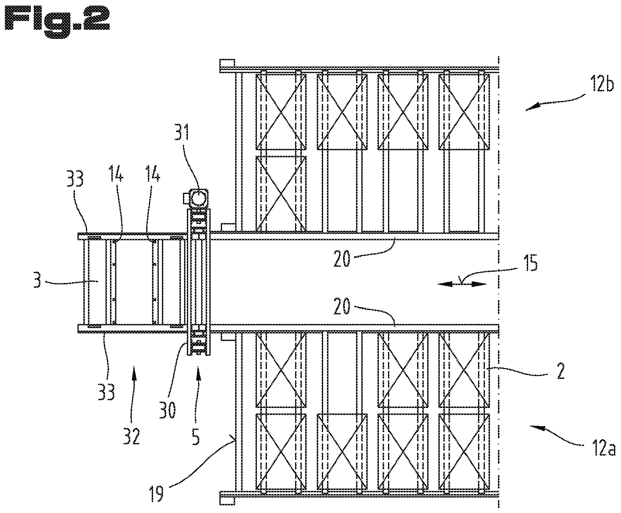

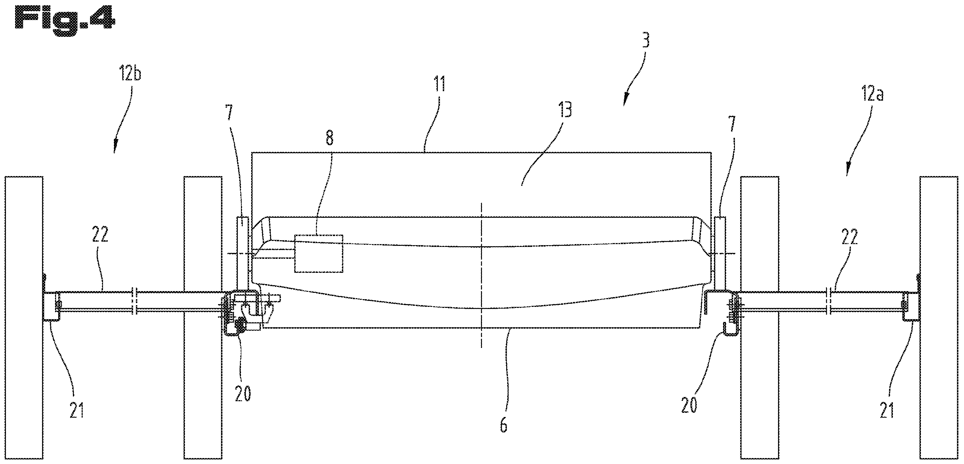

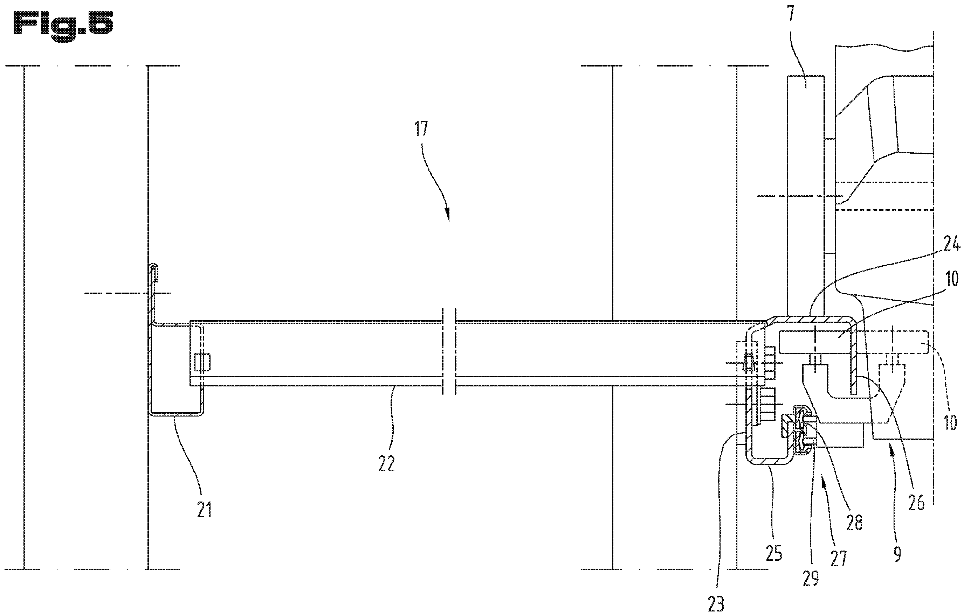

Das Förderfahrzeug 3 ist ein Einebenenregalbediengerät (Shuttle) und umfasst, wie in den Fig. 4 und 5 ersichtlich, einen Grundrahmen 6, Laufräder 7, einen Fahrmotor 8 zum Antrieb mindestens eines Laufrades 7, eine Führungsvorrichtung 9 mit Führungsräder 10 sowie eine Lastaufnahmevorrichtung 11, beispielweise zur Einlagerung und Auslagerung von Ladegütern 2 in ein bzw. aus einem Lagerregal 12a, 12b des Regallagers 1. Die Lastaufnahmevorrichtung 11 umfasst nach gezeigter Ausführung nach beiden Seiten relativ zum Förderfahrzeug 3 ausfahrbare Teleskoparme 13 und jeweils an diesen angeordnete Mitnehmer 14 (Fig. 2) zum Erfassen eines Ladegutes 2. Eine solche Lastaufnahmevorrichtung 11 ist beispielsweise aus der US 2005/0095095 A1 oder EP 0 647 575 A1 bekannt, und kann aufgrund der kompakten Bauweise der Teleskoparme 13 und der zuverlässigen Funktionsweise mit Vorteil eingesetzt werden. Die Ladegüter 2 sind beispielsweise Behälter, Kartonagen, Tablare und dgl. oder ein Warenartikel.

Das Regallager 1 weist in einem Abstand parallel angeordnete Lagerregale 12a, 12b auf, zwischen denen sich zumindest eine Regalgasse 15 erstreckt und welche in übereinander liegenden Regalebenen 16 jeweils nebeneinander vorgesehene Lagerplätze 17 für die Ladegüter 2 ausbilden. Das Regallager 1 bildet stirnseitig einander gegenüberliegend eine erste Regallagerseite 18 und eine zweite Regallagerseite 19 aus. Natürlich kann das Regallager 1 eine Vielzahl von Lagerregalen 12a, 12b und zwischen einigen benachbarten Lagerregale 12a ,12b einige Regalgassen 15 umfassen.

Die Lagerregale 12a, 12b umfassen jeweils der Regalgasse 15 benachbarte, vertikale vordere Regalsteher und von der Regalgasse 15 entfernte, vertikale hintere Regalsteher, wobei sich zwischen den vorderen Regalstehern in der jeweiligen Regalebene 18 zumindest eine horizontale vordere Längstraverse 20 und zwischen den hinteren Regalstehern in der jeweiligen Regalebene 16 zumindest eine horizontale hintere Längstraverse 21 erstreckt. Die Längstraversen 20, 21 sind über Befestigungsmittel, beispielweise Schrauben, mit den Regalstehern verbunden.

Die vorderen Längstraversen 20 verlaufen in Längsrichtung der Regalgasse 15 (X-Richtung), wobei die in der jeweiligen Regalebene 16 paarweise einander gegenüberliegenden Längstraversen 20 eine Führungsbahn bilden, entlang welcher das Förderfahrzeug 3 bewegt werden kann.

Die Längstraversen 20, 21 der jeweiligen Regalebene 16 sind über die Lagerplätze 17 bzw. Lagerfläche bildende Querträger 22 miteinander verbunden. Die Querträger 22 erstrecken sich zwischen den Längstraversen 20, 21 in Tiefenrichtung eines Regalfaches (Z-Richtung).

Nach gezeigter Ausführung bilden die Lagerregale 12a, 12b in den Regalebenen 16 jeweils nebeneinander und hintereinander vorgesehene Lagerplätze 17 für die Ladegüter 2 aus, sodass in Tiefenrichtung der Lagerregale 12a, 12b zwei Ladegüter 2 abgestellt werden können, daher eine so genannte "doppelttiefe" Lagerung möglich ist. Andererseits ist es auch möglich, dass die Lagerregale 12a, 12b in den Regalebenen 16 jeweils ausschließlich in einer Reihe nebeneinander vorgesehene Lagerplätze 17 für die Ladegüter 2 ausbilden, sodass in Tiefenrichtung der Lagerregale 12a, 12b nur ein Ladegut 2 abgestellt werden kann, daher eine so genannte "einfachtiefe" Lagerung möglich ist.

Die vordere Längstraverse 20, siehe Fig. 5, umfasst einen Profilsteg 23, einen von diesem abgewinkelten horizontalen oberen Profilflansch 24, einen vom Profilsteg 23 abgewinkelten unteren Profilflansch 25 und einen vom oberen Profilflansch 24 abgewinkelten Führungssteg 26. Der obere Profilflansch 24 bildet eine horizontale Lauffläche für die Laufräder 7 des Förderfahrzeuges 3 und der Führungssteg 26 einander gegenüberliegende Führungsflächen für die Führungsräder 10 der Führungsvorrichtung 9 aus. Der untere Profilflansch 25 bildet einen horizontalen Profilschenkel und einen von diesem abgewinkelten vertikalen Profilschenkel aus. Eine der paarweise einander gegenüberliegenden, vorderen Längstraversen 20 der jeweiligen Regalebene 16 ist mit einem elektrischen Energieversorgungssystem 27, insbesondere einer Schleifleitungsanordnung ausgestattet. Diese ist am vertikalen Profilschenkel des unteren Profilflansches 25 befestigt, wie in Fig. 5 näher dargestellt.

Das elektrische Energieversorgungssystem 27 erstreckt sich im Wesentlichen über die gesamte Länge der vorderen Längstraversen 20, sodass das mobile Förderfahrzeug 3 während der Fahrbewegung entlang der Führungsbahnen zwischen dem Regallager 1 und der Ladegut-Manipulationseinheit 4 mit dem Energieversorgungssystem 27 mit elektrischer Energie versorgt wird. Dabei wird die elektrische Energie für den Fahrmotor 8 des Förderfahrzeuges 3 und/oder Steuersignale für das Förderfahrzeug 3 mittels an der Längstraverse 20 angeordneter Schleifleitungen 28 zugeführt und die zugeführte Energie ist über am Förderfahrzeug 3 (Fig. 5) angeordnete Stromabnehmer 29, insbesondere Schleifkontakte, beispielsweise federbetätigte Schleifkohlen, aus den Schleifleitungen 28 abnehmbar.

Aus wirtschaftlichen Überlegungen, kann es sich auch als günstig erweisen, wenn ein Förderfahrzeug 3 auf mehreren Regalebenen 16 verwendet wird. Beispielsweise wird für je drei Regalebenen 16 ein Förderfahrzeug 3 eingesetzt. Ist im Gegensatz dazu in jeder Regalebene 16 ein Förderfahrzeug 3 vorgesehen, so ist eine Förderfahrzeug--Hebevorrichtung 5, wie sie in Fig. 2 gezeigt ist, nicht notwendig.

Ist die Anzahl der Förderfahrzeuge 3 geringer als die Anzahl der Regalebenen 16, so wird die Förderfahrzeug-Hebevorrichtung 5 eingesetzt, welche ein Förderfahrzeug 3 auf unterschiedliche Regalebenen 16 aufgeben und von unterschiedlichen Regalebenen 16 aufnehmen kann.

Die Förderfahrzeug-Hebevorrichtung 5 (Umsetzvorrichtung) ist auf der zweiten Regallagerseite 19 stirnseitig vor dem Regallager 1 angeordnet und umfasst einen Führungsrahmen 30 und eine über einen Hubantrieb 31 am Führungsrahmen 30 heb- und senkbare Aufnahmevorrichtung 32 für das Förderfahrzeug 3. Die Aufnahmevorrichtung 32 umfasst parallel zur Regalgasse 15 (x-Richtung) mit gegenseitigem Abstand horizontal erstreckende Längstraversen 33. Durch die Hubbewegung wird die Aufnahmevorrichtung 32 relativ zu den Regalebenen 16 in vertikaler Richtung (y-Richtung) bis zu einer von einem Rechnersystem festgelegten y-Position bewegt.

Die Ladegut-Manipulationseinheit 4, wie sie in einer ersten Ausführung in den Fig. 1 bis 3 ersichtlich ist, umfasst stirnseitig vor den Lagerregalen 12a, 12b angeordnet eine erste Ladegut-Hebevorrichtung 34a und eine erste Puffervorrichtung 35a zum Zwischenspeichern von Ladegütern 2.

Die ortsfest aufgestellte Ladegut-Hebevorrichtung 34a umfasst eine heb- und senkbare Transportvorrichtung 36a für ein Ladegut 2, wobei die Transportvorrichtung 36a auf einem über einen Hubantrieb 37a vertikal verstellbaren Hubrahmen aufgebaut ist. Nach gezeigter Ausführung ist die Transportvorrichtung 36a über den Hubrahmen auf einem ersten Mast 38a gelagert.

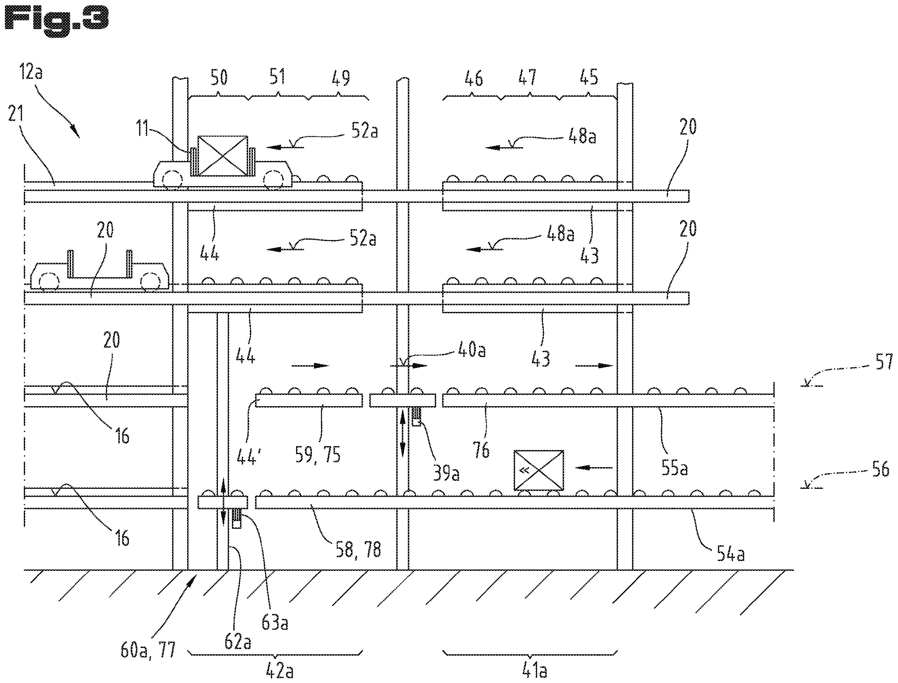

Die Transportvorrichtung 36a umfasst eine über einen Antriebsmotor 39a (Fig. 3) reversibel antreibbare Fördervorrichtung mit einer parallel zur Regalgasse 15 verlaufenden umkehrbaren Förderrichtung und kann ein Ladegut 2 aufnehmen. Ist die Transportvorrichtung 36a zwischen einander gegenüberliegenden Bereitstellfördervorrichtungen 43, 44 positioniert, wie in Fig. 1 gezeigt, so entspricht die Förderrichtung 40a den Förderrichtungen der Bereitstellfördervorrichtungen 43, 44. Ist hingegen die Transportvorrichtung 36a zwischen einander gegenüberliegenden Fördervorrichtungen 54a, 55a positioniert, wie in Fig. 3 gezeigt, so entspricht die Förderrichtung 40a den Förderrichtungen der Fördervorrichtungen 54a, 55a. Die Fördervorrichtung ist beispielweise eine Rollenbahn oder ein Förderband und dgl.

Die ortsfest aufgestellte Puffervorrichtung 35a umfasst einen ersten Pufferstreckenabschnitt 41a und einen zweiten Pufferstreckenabschnitt 42a, wobei in jedem dieser Pufferstreckenabschnitte 41a, 42a zumindest in einigen der Regalebenen 16 übereinander Bereitstellfördervorrichtungen 43, 44 angeordnet sind.

Wie in Fig. 3 ersichtlich, sind zum Einen in den unteren beiden Regalebenen 16 des ersten Pufferstreckenabschnittes 41a und zum Anderen in der einen unteren Regalebene 16 des zweiten Pufferstreckenabschnittes 42a keine Bereitstellfördervorrichtungen 43, 44 vorgesehen, um die Anordnung einer Fördertechnik zum Antransport von Ladegütern 2 zur Ladegut-Hebevorrichtung 34a und zum Abtransport von Ladegütern 2 von der Ladegut-Hebevorrichtung 34a zu ermöglichen.

Die Bereitstellfördervorrichtungen 43 im ersten Pufferstreckenabschnitt 41a sind jeweils durch Staubahnen gebildet, welche einen Übernahmeabschnitt 45, einen Übergabeabschnitt 46 und zwischen diesen zumindest einen Pufferabschnitt 47 umfassen. Die Übernahme-, Übergabe- und Pufferabschnitte 45, 46, 47 umfassen jeweils einen einzigen Übernahme- und Übergabeplatz und zumindest einen Pufferplatz. Mittels der Staubahnen können die Ladegüter 2 von dem zur Ladegut-Hebevorrichtung 34a entfernten Übernahmeabschnitt 45 zu dem zur Ladegut-Hebevorrichtung 34a benachbarten Übergabeabschnitt 46 in einer einzigen Förderrichtung 48a gefördert werden.

Die Bereitstellfördervorrichtungen 44 im zweiten Pufferstreckenabschnitt 42a sind jeweils durch Staubahnen gebildet, welche einen Übernahmeplatz 49, einen Übergabeabschnitt 50 und zwischen diesen zumindest einen Pufferabschnitt 51 umfassen. Bevorzugt sind zwei oder drei Pufferplätze vorgesehen. Mittels der Staubahnen können die Ladegüter 2 von dem zur Ladegut-Hebevorrichtung 34a benachbarten Übernahmeabschnitt 49 zu dem zur Ladegut-Hebevorrichtung 34a entfernten Übergabeabschnitt 50 in einer einzigen Förderrichtung 52a gefördert werden.

Demnach dient die Bereitstellfördervorrichtung 43 in dem ersten Pufferstreckenabschnitt 41a einem Auslagervorgang von Ladegütern 2 und die Bereitstellfördervorrichtung 44 in dem zweiten Pufferstreckenabschnitt 42a einem Einlagervorgang von Ladegütern 2.

Die Bereitstellfördervorrichtung 43, 44 bzw. Staubahnen sind Staurollenförderer, Staugurtförderer und dgl., wobei ein Stauplatz jeweils den Übernahmeplatz 45, 49, den Übergabeplatz 46, 50 und den zumindest einen Pufferplatz 47, 51 bildet. Somit können auf einer Bereitstellfördervorrichtung 43, 44 zumindest drei Ladegüter 2, bevorzugt vier Ladegüter 2 gepuffert werden.

Wie die Fig. 1 und 3 erkennen lassen, weisen die Bereitstellfördervorrichtungen 43, 44 in den jeweiligen Regalebenen 16 eine einzige (nicht reversierbare) Förderrichtung 48a, 52a auf. Mit anderen Worten, sind die Bereitstellfördervorrichtungen 43, 44 bzw. die Staubahnen in allen Regalebenen 16, in denen sie angeordnet sind, mit einer einzigen (nicht reversierbaren) Förderrichtung 48a, 52a betrieben. Bevorzugt werden die Bereitstellfördervorrichtungen 43, 44 bzw. die Staubahnen in jeder gemeinsamen Regalebene 16, in denen sie angeordnet sind, mit einer einzigen (nicht reversierbaren) Förderrichtung 48a, 52a betrieben, wie in Fig. 1 und 3 ersichtlich von rechts nach links. Bloß die Förderrichtung 40a der Transportvorrichtung 36a ist reversierbar, wie oben beschrieben.

Wie in den Fig. 1 und 3 ersichtlich, verlaufen entlang der Ladegut-Manipulationseinheit 4 in Längsrichtung der Regalgasse 15 (X-Richtung) und in zumindest einigen der Regalebenen 16 horizontale Längstraversen 20. Die Längstraversen 20 sind mit ihren Endabschnitten über Befestigungsmittel, beispielweise Schrauben, mit Vertikalstehern verbunden.

Andererseits kann es sich beispielweise aus fertigungstechnischen Gründen in der Herstellung der vorderen Längstraversen 20 oder aus montagetechnischen Gründen der vorderen Längstraversen 20 und dgl. auch von Vorteil erweisen, dass in Längsrichtung der Regalgasse 15 hintereinander mehrere vordere Längstraversen 20 aneinander gereiht werden, wobei dann die Längstraversen 20 an ihren einander zugewandten Endabschnitten über eine Verbindungsvorrichtung miteinander und/oder mit den Regal- und Vertikalstehern verbunden werden. Die aneinander gereihten Längstraversen 20 haben dabei denselben Profilquerschnitt.

Die in der jeweiligen Regalebene 16 paarweise einander gegenüberliegenden Längstraversen 20 bilden eine Führungsbahn, entlang welcher das Förderfahrzeug 3 bewegt werden kann. Die Längstraversen 20 bzw. Führungsbahnen verlaufen in Längsrichtung der Regalgasse 15 (X-Richtung) entlang der Lagerregale 12a, 12b und entlang der Ladegut-Hebevorrichtung 34a und der Puffervorrichtung 35a.

Dabei ist entlang der Ladegut-Hebevorrichtung 34a und der Puffervorrichtung 35a ein Umsetzbereich 53 definiert. Das Förderfahrzeug 3 kann entlang der jeweiligen Führungsbahn geführt bewegt werden, um auszulagernde Ladegüter 2 von den Lagerplätzen 17 der Lagerregale 12a, 12b zu dem Übernahmeabschnitt 45 des ersten Pufferstreckenabschnittes 41a anzutransportieren oder einzulagernde Ladegüter 2 von dem Übergabeabschnitt 50 des zweiten Pufferstreckenabschnitte 42a zu den Lagerplätzen 17 der Lagerregale 12a, 12b abzutransportieren.

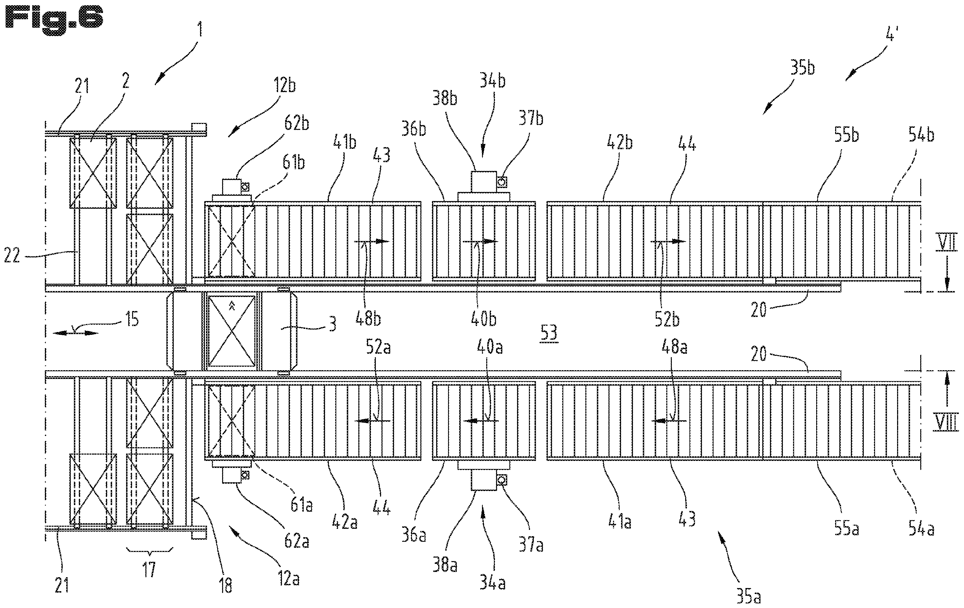

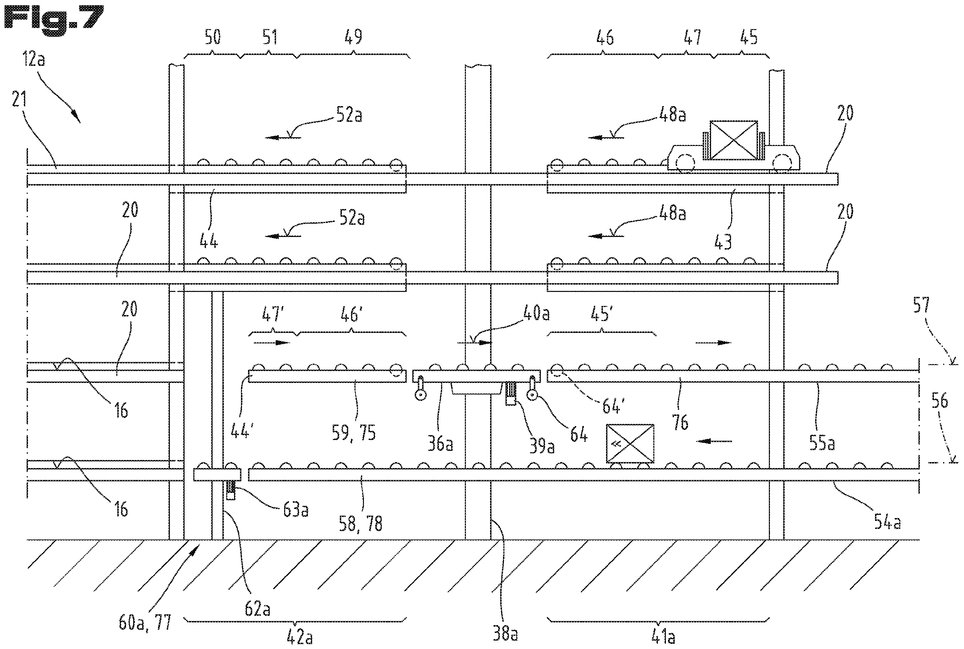

In den Fig. 6 und 7 ist eine zweite Ausführung eines Regallagersystems gezeigt, welches ein Regallager 1 für Ladegüter 2, zumindest ein selbstfahrendes, autonomes Förderfahrzeug 3, eine Ladegut-Manipulationseinheit 4' und gegebenenfalls eine Förderfahrzeug-Hebevorrichtung 5 umfasst.

Die Ladegut-Manpulationseinheit 4' umfasst stirnseitig vor den Lagerregalen 12a, 12b angeordnet eine erste Ladegut-Hebevorrichtung 34a, eine erste Puffervorrichtung 35a zum Zwischenspeichern von Ladegütern 2, eine zweite Ladegut-Hebevorrichtung 34b und eine zweite Puffervorrichtung 35b zum Zwischenspeichern von Ladegütern 2. Eine solche Ausführung eignet sich für höchste Leistungsanforderungen.

Die Ladegut-Hebevorrichtungen 34a, 34b sind nach gezeigter Ausführung vorzugsweise bei "doppelttiefer Lagerung" zur Regalgasse 15 spiegelbildlich einander gegenüberliegend aufgestellt. Andererseits ist es vorzugsweise bei einer "einfachtiefen Lagerung" auch möglich, dass die Ladegut-Hebevorrichtungen 34a, 34b einander gegenüberliegend aufgestellt, aber in Richtung der Regalgasse 15 axial zueinander versetzt sind.

Die ortsfest aufgestellten Ladegut-Hebevorrichtungen 34a, 34b umfassen jeweils eine heb- und senkbare Transportvorrichtung 36a, 36b für Ladegüter 2, wobei die erste Transportvorrichtung 36a auf einem über einen ersten Hubantrieb 37a vertikal verstellbaren Hubrahmen und eine zweite Transportvorrichtung 36b auf einem über einen zweiten Hubantrieb 37b vertikal verstellbaren Hubrahmen aufgebaut sind. Nach gezeigter Ausführung ist die erste Transportvorrichtung 36a über den Hubrahmen auf einem ersten Mast 38a und die zweite Transportvorrichtung 36b über den Hubrahmen auf einem zweiten Mast 38b gelagert. Die heb- und senkbaren Transportvorrichtungen 36a, 36b und/oder deren Fördervorrichtungen sind unabhängig voneinander ansteuerbar.

Die Transportvorrichtungen 36a, 36b umfassen jeweils eine über einen Antriebsmotor 39a, 39b (Fig. 3) reversibel antreibbare Fördervorrichtung mit einer parallel zur Regalgasse 15 verlaufenden umkehrbaren Förderrichtung 40a, 40b und können in Förderrichtung 40a, 40b hintereinander zumindest zwei Ladegüter 2 aufnehmen. Ist die Transportvorrichtung 36a, 36b zwischen einander gegenüberliegenden Bereitstellfördervorrichtungen 43, 44 positioniert, wie in Fig. 6 gezeigt, so entspricht die Förderrichtung 40a, 40b den Förderrichtungen der jeweiligen Bereitstellfördervorrichtungen 43, 44. Ist hingegen die Transportvorrichtung 36a, 36b zwischen einander gegenüberliegenden Fördervorrichtungen 54a, 55a, 54b, 55b positioniert, wie in Fig. 7 gezeigt, so entspricht die Förderrichtung 40a, 40b den Förderrichtungen der Fördervorrichtungen 54a, 55a, 54b, 55b. Die Fördervorrichtung ist beispielsweise eine Rollenbahn oder ein Förderband und dgl.

Die ortsfest aufgestellten Puffervorrichtungen 35a, 35b umfassen jeweils einen ersten Pufferstreckenabschnitt 41a, 41b und einen zweiten Pufferstreckenabschnitt 42a, 42b, wobei in jedem dieser Pufferstreckenabschnitte 41a, 41b, 42a, 42b zumindest in einigen der Regalebenen 16 übereinander Bereitstellfördervorrichtungen 43, 44 angeordnet sind.

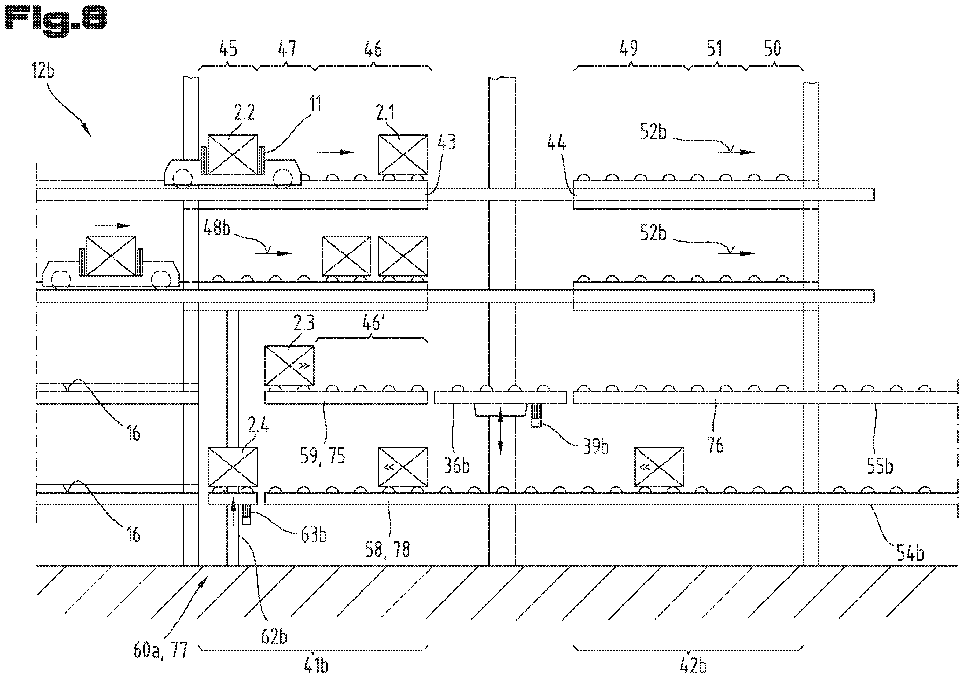

Wie in den Fig. 7 und 8 entnehmbar, sind zum Einen in den unteren beiden Regalebenen 16 des ersten Pufferstreckenabschnittes 41a und zweiten Pufferstreckenabschnittes 42b und zum Anderen in der einen unteren Regalebene 16 des ersten Pufferstreckenabschnittes 41b und zweiten Pufferstreckenabschnittes 42a keine Bereitstellfördervorrichtungen 43, 44 vorgesehen, um die Anordnung einer Fördertechnik zum Antransport von Ladegütern 3 zur Ladegut-Hebevorrichtung 34a, 34b und zum Abtransport von Ladegütern 3 von der Ladegut-Hebevorrichtung 34a, 34b zu ermöglichen.

Die Bereitstellfördervorrichtungen 43 im ersten Pufferstreckenabschnitt 41a, 41b sind jeweils durch Staubahnen gebildet, welche einen Übernahmeabschnitt 45, einen Übergabeabschnitt 46 und zwischen diesen zumindest einen Pufferabschnitt 47 umfassen. Der Übergabeabschnitt 46 umfasst nach dieser Ausführung zwei Übergabeplätze, auf denen zwei Ladegüter 2 bereitgestellt werden können. Der Übernahmeabschnitt 45 umfasst hingegen nach dieser Ausführung einen Übernahmeplatz, auf dem ein Ladegut 2 aufgenommen werden kann. Der Pufferabschnitt 51 umfasst zumindest einen Pufferplatz für ein Ladegut 2. Mittels der Staubahnen können die Ladegüter 2 von dem zur Ladegut-Hebevorrichtung 34a, 34b entfernten Übernahmeabschnitt 45 zu dem zur Ladegut-Hebevorrichtung 34a, 34b benachbarten Übergabeabschnitt 46 in einer einzigen Förderrichtung 48a, 48b gefördert werden.

Die Bereitstellfördervorrichtungen 44 im zweiten Pufferstreckenabschnitt 42a, 42b sind jeweils durch Staubahnen gebildet, welche einen Übernahmeabschnitt 49, einen Übergabeabschnitt 50 und zwischen diesen zumindest einen Pufferabschnitt 51 umfassen. Der Übernahmeabschnitt 49 umfasst nach dieser Ausführung zwei Übernahmeplätze, auf denen zwei Ladegüter 2 aufgenommen werden können. Der Übergabeabschnitt 50 umfasst hingegen nach dieser Ausführung einen Übernahmeplatz, auf dem ein Ladegut 2 bereitgestellt werden kann. Der Pufferabschnitt umfasst zumindest einen Pufferplatz für ein Ladegut 2. Mittels der Staubahnen können die Ladegüter 2 von dem zur Ladegut-Hebevorrichtung 34a, 34b benachbarten Übernahmeabschnitt 49 zu dem zur Ladegut-Hebevorrichtung 34a, 34b entfernten Übergabeabschnitt 50 in einer einzigen Förderrichtung 52a, 52b gefördert werden.

Demnach dienen die Bereitstellfördervorrichtungen 43 in den ersten Pufferstreckenabschnitten 41a, 41b einem Auslagervorgang von Ladegütern 2 und die Bereitstellfördervorrichtungen 44 in den zweiten Pufferstreckenabschnitten 42a, 42b einem Einlagervorgang von Ladegütern 2, wie noch genauer in den Fig. 8 bis 12 beschrieben wird.

Die Bereitstellfördervorrichtungen 43, 44 bzw. Staubahnen sind Staurollenförderer, Staugurtförderer und dgl., wobei ein Stauplatz jeweils einen der Übernahmeplätze für die Übernahmeabschnitte 49, ein Stauplatz den Übernahmeplatz für die Übernahmeabschnitte 45, ein Stauplatz jeweils einen der Übergabeplätze für die Übergabeabschnitte 46, ein Stauplatz den Übergabeplatz für die Übergabeabschnitte 50, ein Stauplatz zumindest einen Pufferplatz 47, 51 bildet. Somit können auf einer Bereitstellfördervorrichtung 43, 44 zumindest vier Ladegüter 2, bevorzugt fünf Ladegüter 2 gepuffert werden.

Wie die Fig. 6 und 7 erkennen lassen, weisen die Bereitstellfördervorrichtungen 43, 44 in den jeweiligen Regalebenen 16 eine einzige (nicht reversierbare) Förderrichtung 48a, 48b, 52a, 52b auf. Mit anderen Worten, sind die Bereitstellfördervorrichtungen 43, 44 jeder Puffervorrichtung 35a, 35b bzw. die Staubahnen in allen Regalebenen 16, in denen sie angeordnet sind, mit einer einzigen (nicht reversierbaren) Förderrichtung 48a, 48b, 52a, 52b betrieben. Bevorzugt werden die Bereitstellfördervorrichtungen 43, 44 jeder Puffervorrichtung 35a, 35b bzw. die Staubahnen in jeder gemeinsamen Regalebene 16, in denen sie angeordnet sind, mit einer einzigen (nicht reversierbaren) Förderrichtung 48a, 48b, 52a, 52b betrieben, daher an der Pufdervorrichtung 35a, wie in Fig. 6 und 7 ersichtlich, von rechts nach links und an der Puffervorrichtung 35b, wie in Fig. 6 und 8 ersichtlich, von links nach rechts. Bloß die Förderrichtung 40a, 40b der Transportvorrichtung 36a, 36b ist reversierbar, wie oben beschrieben. Die (nicht reversierbare) Förderrichtung 48a, 52a ist aber entgegengesetzt zur (nicht reversierbaren) Förderrichtung 48b, 52b.

Wie in den Fig. 6 und 7 ersichtlich, verlaufen auch nach dieser Ausführung entlang der Ladegut-Manipulationseinheit 4' in Längsrichtung der Regalgasse 15 (X-Richtung) und in zumindest einigen der Regalebenen 16 horizontale Längstraversen 20, wie oben beschrieben. Das Förderfahrzeug 3 kann auszulagernde Ladegüter 2 von den Lagerplätzen 17 zu dem Übernahmeabschnitt 45 der ersten Pufferstreckenabschnitte 41a, 41b anzutransportieren oder einzulagernde Ladegüter 2 von dem Übergabeabschnitt 50 der zweiten Pufferstreckenabschnitte 42a, 42b zu den Lagerplätzen 17 abzutransportieren.

Die Längstraversen 20 bzw. Führungsbahnen verlaufen in Längsrichtung der Regalgasse 15 (X-Richtung) entlang der Lagerregale 12a, 12b und entlang der Ladegut-Hebevorrichtungen 34a, 34b und der Puffervorrichtungen 35a, 35b. Dabei ist entlang der Ladegut-Hebevorrichtungen 34a, 34b und der Puffervorrichtungen 35a, 35b ein Umsetzbereich 53 definiert.

Wie ausschließlich in Fig. 7 schematisch angedeutet, ist es auch möglich, dass die Transportvorrichtung 36a, 36b an ihren einander gegenüberliegenden Endbereichen jeweils mit einer relativ auf die Bereitstellfördervorrichtung 43, 44 zustellbare und motorisch angetriebenen Übertriebsrolle 64, beispielweise mit einer Verzahnung versehen ist. Die Übertriebsrolle 64 ist beispielweise auf einem Schwenkhebel gelagert und über den Antriebsmotor 39a, 39b angetrieben. Andererseits ist die Bereitstellfördervorrichtung 43, 44 an ihrem der Ladegut-Hebevorrichtung 34a, 34b zugewandten Endbereich mit einer Übertriebsrolle 64' versehen, in welche die Übertriebsrolle 64 der Transportvorrichtung 36a, 36b eingreifen kann, um so ein Antriebsmoment auf ein Förderorgan, wie Förderrolle, Förderband und dgl., welches die Bereitstellfördervorrichtung 43, 44 umfasst, zu übertragen. Ist die Bereitstellfördervorrichtung 43, 44 eine Rollenbahn, so kann die der Ladegut-Hebevorrichtung 34a, 34b benachbarte Förderrolle die Übertriebsrolle 64' bilden, welche dann ebenso beispielweise mit einer Verzahnung versehen sein kann. Die anderen Förderrollen sind mit der angetriebenen Förderrolle und untereinander beispielweise mittels nicht dargestellter Riemen gekuppelt. Auf diese Weise brauchen die unabhängig voneinander ansteuerbaren Bereitstellfördervorrichtungen 43, 44 nicht mit eigenständigen Antriebsmotoren ausgestattet werden. Dadurch kann der Steuerungsaufwand enorm verringert und können auch die Investitionskosten erheblich gesenkt werden.

Andererseits können die Bereitstellfördervorrichtungen 43, 44 unabhängig von den Transportvorrichtung 36a, 36b motorisch angetrieben werden. Ist die Bereitstellfördervorrichtung 43, 44 eine Rollenbahn, so können einige oder sämtliche Förderrollen so genannte Motorrollen sein, wie sie beispielsweise in der WO 2011/029119 A2 offenbart ist.

An die Ladegut-Manipulationseinheit 4; 4' ist eine Vorzonen-Fördertechnik zum Antransport von Ladegütern 2 zur Ladegut-Hebevorrichtung 34a und gegebenenfalls Hebevorrichtung 34b und zum Abtransport von Ladegütern 2 von der Ladegut-Hebevorrichtung 34a und gegebenenfalls Hebevorrichtung 34b angeschlossen. Diese umfasst eine die Ladegüter 2 zu der Hebevorrichtung 34a antransportierende erste Fördervorrichtung 54a und eine die Ladegüter 2 von der Hebevorrichtung 34a abtransportierende zweite Fördervorrichtung 55a.

Sind auch die Hebevorrichtung 34b und die Puffervorrichtung 35b gemäß den Fig. 6 und 7 vorgesehen, so umfasst die Fördertechnik wiederum eine die Ladegüter 2 zu der Hebevorrichtung 34b antransportierende erste Fördervorrichtung 54b und eine die Ladegüter 2 von der Hebevorrichtung 34b abtransportierende zweite Fördervorrichtung 55b.

Die erste Fördervorrichtung 54a; 54b und zweite Fördervorrichtung 55a; 55b sind nach gezeigter Ausführung in übereinander liegenden Fördertechnikebenen 56, 57 im unteren Höhenbereich (Bodenbereich) des Regallagers 1 angeordnet und weisen entgegensetzte Förderrichtungen auf, wie mit den Pfeilen angedeutet. Andererseits kann die erste Fördervorrichtung 54a; 54b und zweite Fördervorrichtung 55a; 55b in übereinander liegenden Fördertechnikebenen 56, 57 auch im oberen Höhenbereich des Regallagers 1 angeordnet sein. Die erste Fördervorrichtung 54a; 54b und zweite Fördervorrichtung 55a; 55b erstrecken sich dabei parallel zur Regalgasse 15 in der Verlängerung des jeweiligen Lagerregals 12a; 12b.

Vorzugweise liegen die Fördertechnikebene 56 und die unterste Regalebene 16 innerhalb einer ersten Horizontalebene sowie die Fördertechnikebene 57 und die darüber liegende Regalebene 16 innerhalb einer zweiten Horizontalebene. Dadurch wird eine sehr Platz sparende Anordnung der Fördertechnik erreicht.

Wie in den Fig. 1, 3, 6, 7 und 8 ersichtlich, umfasst die erste Fördervorrichtung 54a; 54b in übereinander liegenden Fördertechnikebene 56, 57 und parallel zur Regalgasse 15 verlaufende (ortsfeste) Förderabschnitte 58, 59, welche über einen Umsetzheber 60a; 60b miteinander verbunden sind. Der Förderabschnitt 59 entspricht einem ersten Förderabschnitt 75 und der Förderabschnitte 58 entspricht einem dritten Förderabschnitt 78. Ebenso bildet die zweite Fördervorrichtung 55a einen ersten Förderabschnitt 76 aus. Die ersten Förderabschnitte 75, 76 der Fördervorrichtungen 54a, 55a verlaufen parallel zur Regalgasse 15 und liegen fluchtend einander gegenüber. Der erste und dritte Förderabschnitt 75, 78 der ersten Fördervorrichtung 54a; 54b sind in übereinander liegenden Fördertechnikebenen 56, 57 angeordnet, wobei der erste und dritte Förderabschnitt 75, 78 über einen zweiten Förderabschnitt 77 miteinander verbunden sind. Die erste Fördervorrichtung 54a; 54b umfasst den zweiten Förderabschnitt 77 und wird durch den Umsetzheber 60a; 60b gebildet.

Der obere Förderabschnitt 59 umfasst eine ortsfeste Bereitstellfördervorrichtung 44' des zweiten Pufferstreckenabschnittes 42a und gegebenenfalls die ortsfeste Bereitstellfördervorrichtung 43' des ersten Pufferstreckenabschnittes 41b. Diese Bereitstellfördervorrichtung 43'; 44' ist kürzer als die anderen Bereitstellfördervorrichtungen 43, 44 und umfasst nach einer ersten Ausführung den Übergabeabschnitt 46' oder nach einer zweiten Ausführung den Übergabeabschnitt 46' und zumindest einen Pufferplatz 47', wie schematisch in Fig. 7 eingetragen.

Sind auch die Hebevorrichtung 34b und die Puffervorrichtung 35b vorgesehen, wie die Fig. 6 bis 8 zeigen, so umfasst auch die erste Fördervorrichtung 54b einen Umsetzheber 60b für Ladegüter 2.

Der ortsfest aufgestellte Umsetzheber 60a; 60b umfasst eine heb- und senkbare Transportvorrichtung 61a, 61b für Ladegüter 2, wobei die erste Transportvorrichtung 61a auf einem über einen (nicht dargestellten) ersten Hubantrieb vertikal verstellbaren Hubrahmen und eine zweite Transportvorrichtung 61b auf einem über einen (nicht dargestellten) zweiten Hubantrieb vertikal verstellbaren Hubrahmen aufgebaut sind. Nach gezeigter Ausführung ist die erste Transportvorrichtung 61a über den Hubrahmen auf einem ersten Mast 62a und die zweite Transportvorrichtung 61b über den Hubrahmen auf einem zweiten Mast 62b gelagert.

Die Transportvorrichtungen 61a, 61b umfassen jeweils eine über einen Antriebsmotor 63a, 63b (Fig. 3, 7) antreibbare Fördervorrichtung mit einer parallel zur Regalgasse 15 verlaufenden Förderrichtung und können ein einziges Ladegut 2 oder in Förderrichtung hintereinander zwei Ladegüter 2 aufnehmen. Die Fördervorrichtung ist beispielsweise eine Rollenbahn oder ein Förderband und dgl.

Die Transportvorrichtung 61a, 61b kann nun über den Hubantrieb zwischen den Förderabschnitten 58, 59 verstellt werden, um Ladegütern 2 von dem unteren Förderabschnitt 58 zu übernehmen und auf den oberen Förderabschnitt 59 abzugeben, wobei am oberen Förderabschnitt 59 ein Ladegut 2 am Übergabeabschnitt 46' bereitgestellt wird. Der Übergabeabschnitt 46' ist demnach von der Fördervorrichtung 54a, 54b ausgebildet.

Die Transportvorrichtungen 36a; 36b sind unabhängig (entkoppelt) voneinander zwischen den Regalebenen 16 auf das Höhenniveau einer jeden Regalebene 16 und auf das Höhenniveau der Fördertechnikebene 57 verstellbar, sodass Ladegüter 2 einerseits zwischen der Transportvorrichtung 36a; 36b und der Bereitstellfördervorrichtung 43, 44 und andererseits zwischen der Transportvorrichtung 36a; 36b und der Bereitstellfördervorrichtung 43, 44 und den Fördervorrichtungen 54a, 55a, 54b, 55b gefördert werden können.

Da der lichte Abstand zwischen den Fördervorrichtungen 54a, 55a; 54b; 55b etwa der Breite der Regalgasse 15 entspricht, wird eine sehr Platz sparende Anordnung der Vorzonen - Fördertechnik erreicht. Die Fördervorrichtungen 54a, 55a; 54b; 55b sind dabei über eine gemeinsame Sortierfördertechnik beispielweise an eine automatisierte Kommissionierstation (nicht dargestellt) oder eine Beladestation zum Beladen eines Ladungsträgers, wie Palette und dgl.. angeschlossen.

Die einander gegenüberliegenden Bereitstellfördervorrichtungen 43, 44 sind in Richtung der Regalgasse 15 zumindest um die Länge der Transportvorrichtung 36a; 36b voneinander beabstandet, sodass die Transportvorrichtung 36a; 36b in deren auf die Regalebene 16 angehobene Übergabe- bzw. Übernahmestellung zwischen die einander zugewandten Stirnkanten der Bereitstellfördervorrichtungen 43, 44 bewegbar ist.

Ebenso sind die einander gegenüberliegenden Fördervorrichtungen 54a, 55a; 54b; 55b in Richtung der Regalgasse 15 zumindest um die Länge der Transportvorrichtung 36a; 36b voneinander beabstandet, sodass die Transportvorrichtung 36a; 36b in deren auf die Fördertechnikebene 57 abgesenkten Übergabe- bzw. Übernahmestellung zwischen die einander zugewandten Stirnkanten der Fördervorrichtungen bewegt werden kann.

Anhand der Fig. 8 bis 14 ist nun das Verfahren zum Betreiben des Regallagersystems gemäß der Ausführung in den Fig. 6 und 7 beschrieben. Der Auslagervorgang und Einlagervorgang von Ladegütern 2.1 bis 2.6 innerhalb einer der Regalebenen 16 wird anhand einer der Ladegut-Hebevorrichtungen 34b und Puffervorrichtungen 35b gemäß Fig. 8 bis 12 gezeigt. Auf gleiche Art und Weise kann der Auslagervorgang und Einlagervorgang von Ladegütern 2 auch an der Ladegut-Hebevorrichtung 34a und Puffervorrichtung 35a erfolgen.

Der Auslagervorgang wird durch einen Auftrag, insbesondere Kommissionierauftrag gestartet. Dieser Auftrag kann zwei oder mehrere Ladegüter 2.1, 2.2 umfassen. In der Praxis ist es von Vorteil, wenn mehrere Förderfahrzeuge 3 eingesetzt werden, sodass auf mehreren Regalebenen 16 parallel Auslagervorgänge stattfinden können. Auch zeigt die Ausführung ein Förderfahrzeug 3, welches ein einziges Ladegut 2.2 transportiert. Es ist aber genauso gut möglich, dass das Förderfahrzeug 3 gleichzeitig mehrere Ladegüter 2 transportieren kann.

Das Förderfahrzeug 3 wird für einen Auslagervorgang entlang der Fahrbahn in das Regallager 1 bis vor einen Lagerplatz 17 (Fig. 6) bewegt, wo ein gemäß einem Auftrag, insbesondere Kommissionierauftrag auszulagerndes Ladegut 2.2 mittels der Lastaufnahmevorrichtung 11 vom Lagerregal 12a, 12b auf das Förderfahrzeug 3 übernommen wird. Danach fährt das Förderfahrzeug 3 mit dem Ladegut 2.2 entlang der Fahrbahn aus dem Regallager 1 heraus in den Umsetzbereich 53 der Ladegut-Manipulationseinheit 4' bis vor einen Übernahmeplatz des ersten Übernahmeabschnittes 45.

Es ist nun möglich, dass durch einen Materialflussrechner gesteuert, das Förderfahrzeug 3 entweder zu einem dem Regallager 1 entfernten ersten Übernahmeabschnitt 45 im ersten Pufferstreckenabschnitt 41a (Fig. 7) oder zu einem dem Regallager 1 benachbarten zweiten Übernahmeabschnitt 45 im zweiten Pufferstreckenabschnitt 41b (Fig. 8) bewegt werden. Demnach kann das Förderfahrzeug 3 zumindest einen Übernahmeabschnitt 45, welchen die Ladegut-Manipulationseinheit 4' umfasst, anfahren oder zwei Übernahmeabschnitte 45, wellche die Ladegut-Manipulationseinheit 4' umfasst, separat anfahren.

Ist bloß die Hebevorrichtung 34a und die Puffervorrichtung 35a gemäß der Ausführung nach Fig. 1 vorgesehen, so wird für einen Auslagervorgang das Förderfahrzeug 3 zu einem vom Regallager 1 entfernten ersten Übernhmeabschnitt 45 bewegt.

Das Förderfahrzeug 3 wird am Übernahmeabschnitt 45 angehalten, wie in den Fig. 6 und 8 an der vierten Regalebene 16 von unten eingetragen, und dort wird das auszulagernde Ladegut 2.2 mittels der Lastaufnahmevorrichtung 11 vom Förderfahrzeug 3 auf den Übernahmeabschnitt 45 der Bereitstellfördervorrichtung 43 im ersten Pufferstreckenabschnitt 41b abgegeben.

Die korrekte Übergabe des Ladegutes 2.2 auf der Bereitstellfördervorrichtung 43 im ersten Pufferstreckenabschnitt 41b kann über eine nicht dargestellte Sensorik überwacht werden. Danach wird das Ladegut 2.2 vom Übernahmeabschnitt 45 in Richtung 48b auf den Übergabeabschnitt 46 gefördert.

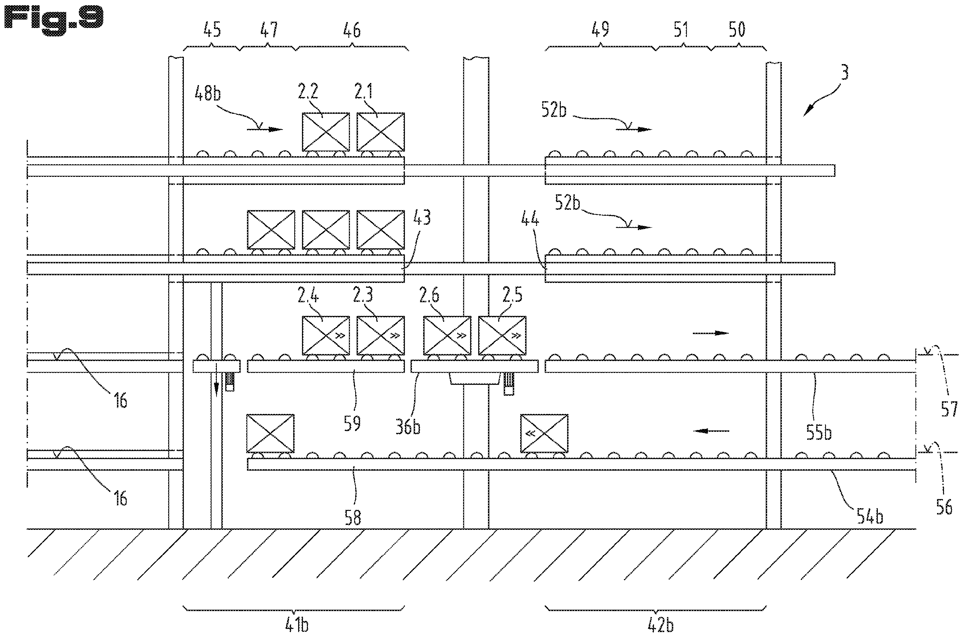

Befindet sich am Übergabeabschnitt 46 am vorderen Übergabeplatz bereits ein Ladegut 2.1, wird das Ladegut 2.2 zum Übergabeabschnitt 46 gefördert und am hinteren Übergabeplatz bereitgestellt, wie in Fig. 9 an der vierten Regalebene 16 von unten eingetragen. Wird nachfolgend zu einem Auftrag vom Förderfahrzeug 3 ein weiteres Ladegut 2 zum Übernahmeabschnitt 45 angefördert, so wird auch dieses nach deren Übergabe auf den Übernahmeabschnitt 45 in Richtung auf den Übergabeabschnitt 46 gefördert und im Pufferabschnitt 47 hinter dem Übergabeabschnitt 46 gestaut, wie in Fig. 9 an der dritten Regalebene 16 von unten eingetragen.

Das unbelegte Förderfahrzeug 3 kann nach der Übergabe des Ladegutes 2.2 auf den Übernahmeabschnitt 45 entweder erneut in das Regallager 1 fahren und für einen Auslagervorgang ein Ladegut 2 abholen oder in derselben Regalebene 16 von einem Übergabeabschnitt 50 ein Ladegut 2 für einen Einlagervorgang übernehmen.

Nachdem nach dieser Ausführung der erste Pufferstreckenabschnitt 41b und der zweite Pufferstreckenabschnitt 42a zur Regalgasse 15 spiegelbildlich einander gegenüberliegen, kann das zwischen dem Übernahmeabschnitt 45 und dem Übergabeabschnitt 50 angehaltene Förderfahrzeug 3 in seiner Halteposition verharren, wie in Fig. 6 eingetragen, und nach der Übergabe des Ladegutes 2.2 auf den Übernahmeabschnitt 45 dort ein einzulagerndes Ladegut 2 mittels der Lastaufnahmevorrichtung 11 vom Übergabeabschnitt 50 auf das Förderfahrzeug 3 übernommen.

Ist bloß die Hebevorrichtung 34a und die Puffervorrichtung 35a vorgesehen, gemäß Fig. 1, so kann nach der Übergabe des Ladegutes 2 auf den Übernahmeatsschnitt 45 im ersten Pufferstreckenabschnitt 41a das Förderfahrzeuge 3 vom Übernahmeabschnitt 45 zu einem davon entfernten Übergabeabschnitt 50 im zweiten Pufferstreckenabschnitt 42a fahren. Das Förderfahrzeug 3 wird am Übergabeabschnitt 50 angehalten und in der Halteposition das einzulagernde Ladegut 2 mittels der Lastaufnahmevorrichtung 11 vom Übergabeabschnitt 50 der Bereitstellfördervorrichtung 44 auf das Förderfahrzeug 3 übernommen, wie in den Fig. 1 und 3 ersichtlich.

Ebenso wird während dem Auslagervorgang in einer der Regalebenen 16 ein Einlagervorgang gestartet. Dabei werden Ladegüter 2.3, 2.4 auf der ersten Fördertechnik 54b zum Umsetzheber 61b angefördert und von einer unteren Fördertechnikebene 56 auf eine obere Fördertechnikebene 57 angehoben und die Ladegüter 2.3, 2.4 an einem Übergabehbschnitt 46' bereitgestellt, wie in den Fig. 8 und 9 eingetragen. Der Übergabeabschnitt 46' ist von der Fördervorrichtung 54b ausgebildet.

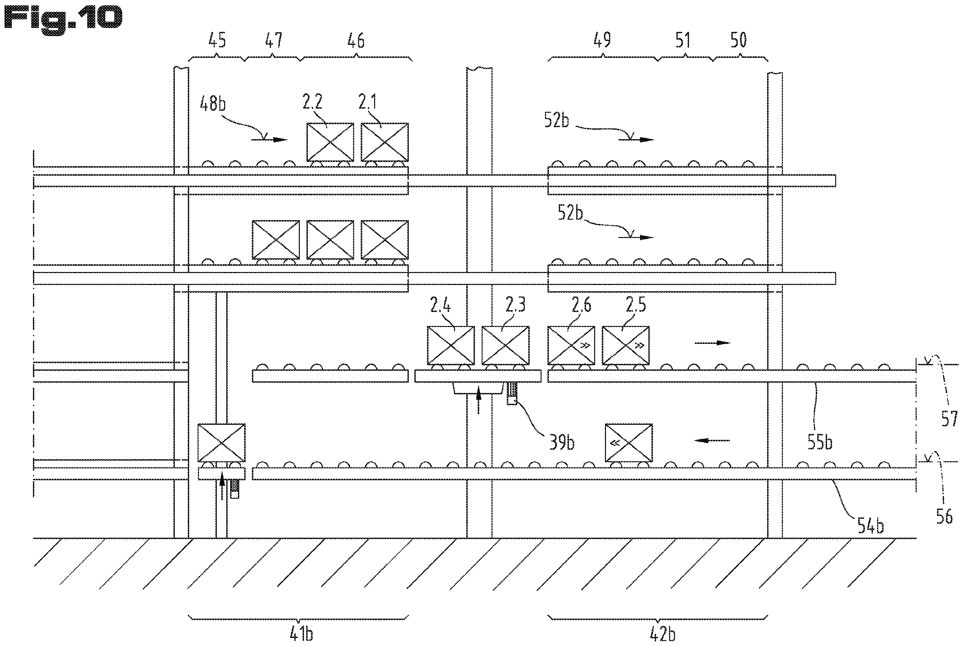

Wird nun die Transportvorrichtung 36b auf die Fördertechnikebene 57 zwischen die einander gegenüberliegenden Fördervorrichtungen 54b, 55b positioniert und die Fördervorrichtung der Transportvorrichtung 36b sowie die Fördervorrichtungen 54b, 55b angetrieben, können gleichzeitig die am Übergabeabschnitt 46' bereitgestellten, einzulagernden Ladegüter 2.3, 2.4 vom Übergabeabschnitt 46' auf die Transportvorrichtung 36b und die Ladegüter 2.5, 2.6 von der Transportvorrichtung 36b auf die Fördervorrichtung 55b gefördert werden, wie in Fig. 9 und 10 gezeigt. Durch dieses "Doppelspiel" im Bereich der Vorzonen-Fördertechnik wird eine wesentliche Leistungssteigerung des Regallagersystems erreicht.

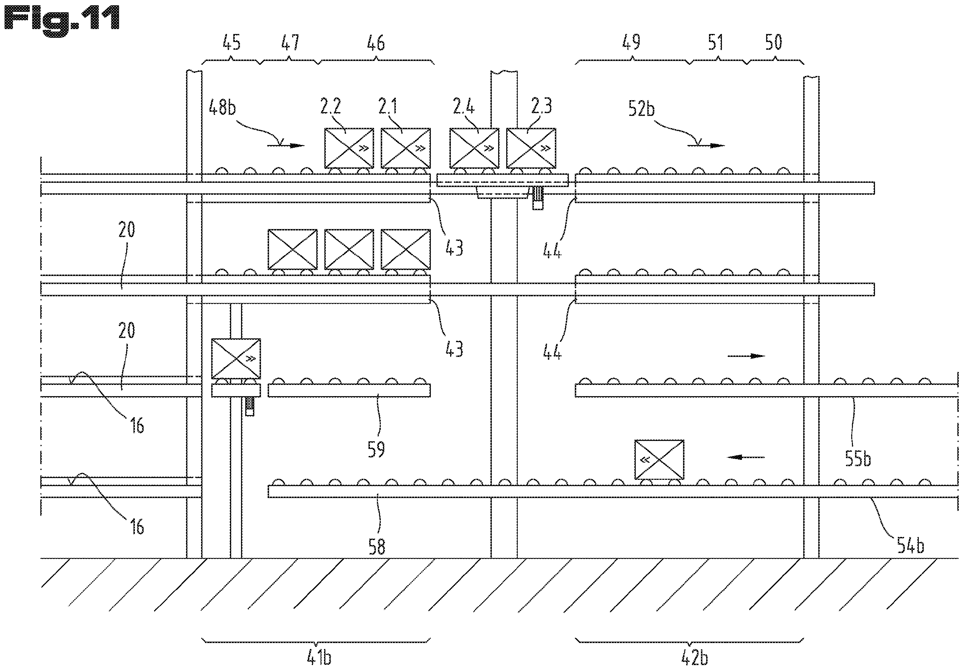

Befinden sich nun die einzulagernden Ladegüter 2.3, 2.4 auf der Transportvorrichtung 36b, wird diese in eine vom Materialflussrechner festgelegte Regalebene 16 verstellt, in welcher die zu einem Auftrag benötigten Ladegüter 2.1, 2.2 bereits am Übergabeabschnitt 46 bereitgestellt sind, wie in Fig. 11 eingetragen.

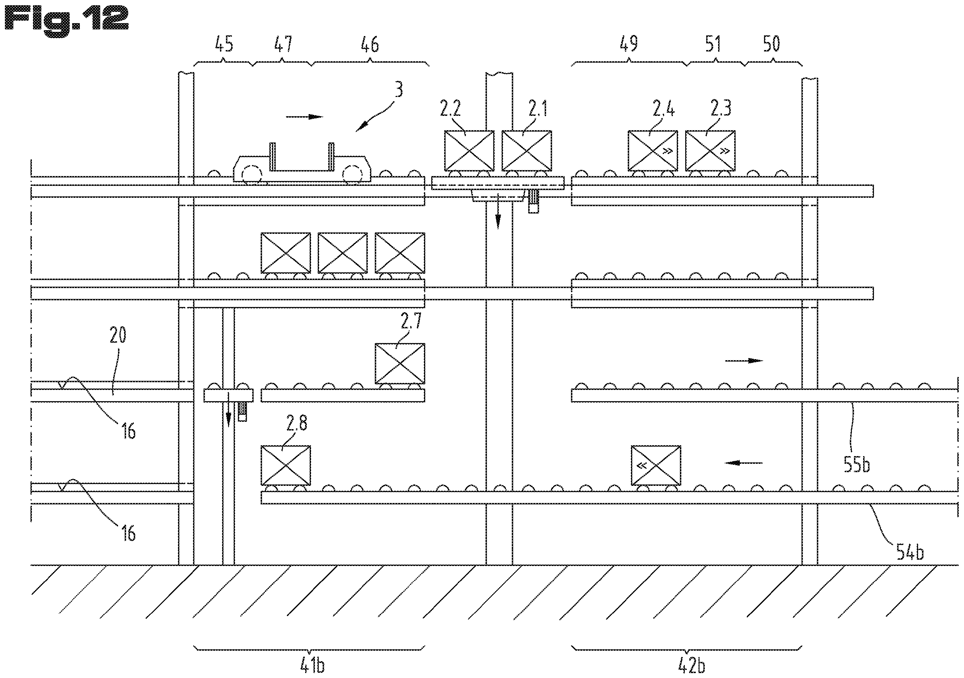

Wie in Fig. 11 gezeigt, sind am Übergabeabschnitt 46 in der vierten Regalebene 16 von unten die auszulagernden Ladegüter 2.1, 2.2 bereits bereitgestellt, sodass die Transportvorrichtung 36b vom Materialflussrechner gesteuert auf diese Regalebene 16 zwischen die Bereitstellfördervorrichtungen 43, 44 positioniert wird. Sodann werden die Fördervorrichtung der Transportvorrichtung 36b sowie die Bereitstellfördervorrichtungen 43, 44 angetrieben und dabei gleichzeitig die auszulagernden Ladegüter 2.1, 2.2 vom ersten Pufferstreckenabschnitt 41b auf die Transportvorrichtung 36b und die einzulagernden Ladegüter 2.3, 2.4 von der Transportvorrichtung 36b auf den zweiten Pufferstreckenabschnitt 42b gefördert, wie in Fig. 12 gezeigt. Durch dieses "Doppelspiel" im Bereich der Puffervorrichtung 35b wird eine wesentliche Leistungssteigerung des Regallagersystems erreicht.

Danach werden die Ladegüter 2.3, 2.4 vom Übernahmeabschnitt 49 in Richtung auf den Übergabeabschnitt 50 gefördert. Das Förderfahrzeug 3 wird zum Übergabeabschnitt 50 verfahren und von diesem das erste einzulagernde Ladegut 2.3 mittels der Lastaufnahmevorrichtung 11 auf das Förderfahrzeug 3 übernommen. Danach fährt das beladene Förderfahrzeug 3 in das Regallager 1. Wurde das Ladegut 2.3 an einem Lagerplatz 17 eingelagert, nimmt das Förderfahrzeug 3 ein Ladegut 2 auf und liefert es am Übergabeabschnitt 45 ab, wie oben beschrieben, und fährt danach neuerlich zum Übergabeabschnitt 50 und holt auch noch das zweite einzulagernde Ladegut 2.4 ab.

Natürlich ist es auch möglich, dass das Förderfahrzeug 3 gleichzeitig die zwei Ladegüter 2.3, 2.4 aufnehmen und mit einer einzigen Fahrt in das Regallager 1 einlagern kann. Auf der Rückfahrt kann es ebenso zwei Ladegüter 2 aufnehmen und beispielweise nacheinander am Übergabeabschnitt 45 im ersten Pufferstreckenabschnitt 41a; 41b oder das erste Ladegut 2 am Übergabeabschnitt 45 im ersten Pufferstreckenabschnitt 41a und das zweite Ladegut 2 am Übergabeabschnitt 45 im ersten Pufferstreckenabschnitt 41b abgeben, wie oben beschrieben.

Die Transportvorrichtung 36b wird mit den aufgenommenen Ladegütern 2.1, 2.2 zwischen die Fördervorrichtung 54a, 54b abgesenkt und danach die Ladegüter 2.1, 2.2 in einem oben beschriebenen "Doppelspiel von der Transportvorrichtung 36b auf die zweite Fördervorrichtung 55b abgefördert und neuerlich Ladegüter 2.7, 2.8 von der ersten Fördervorrichtung 55a auf die Transportvorrichtung 36b abgefördert.

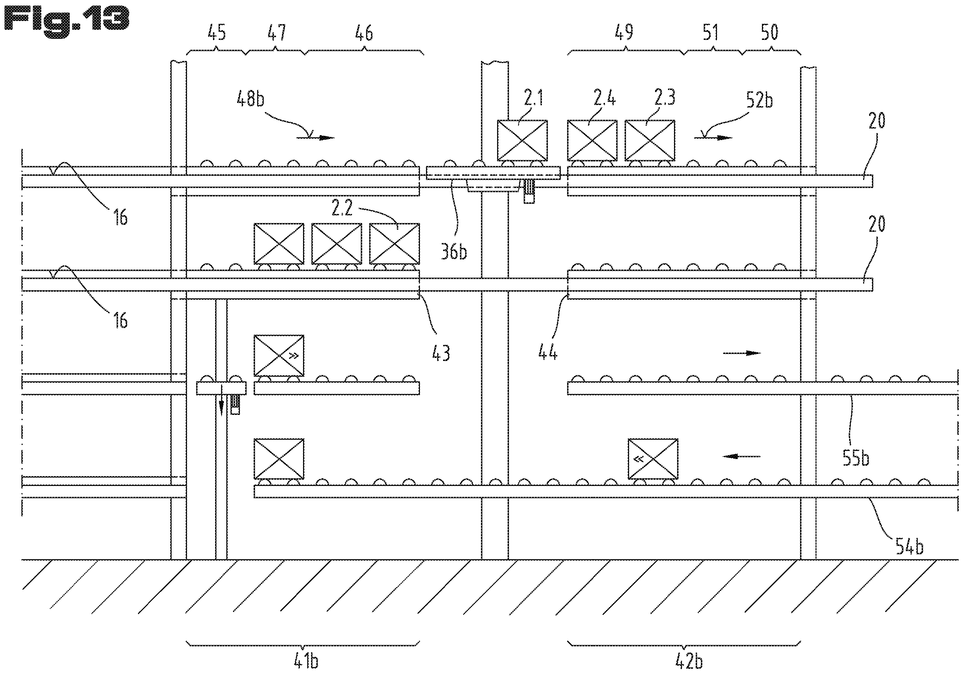

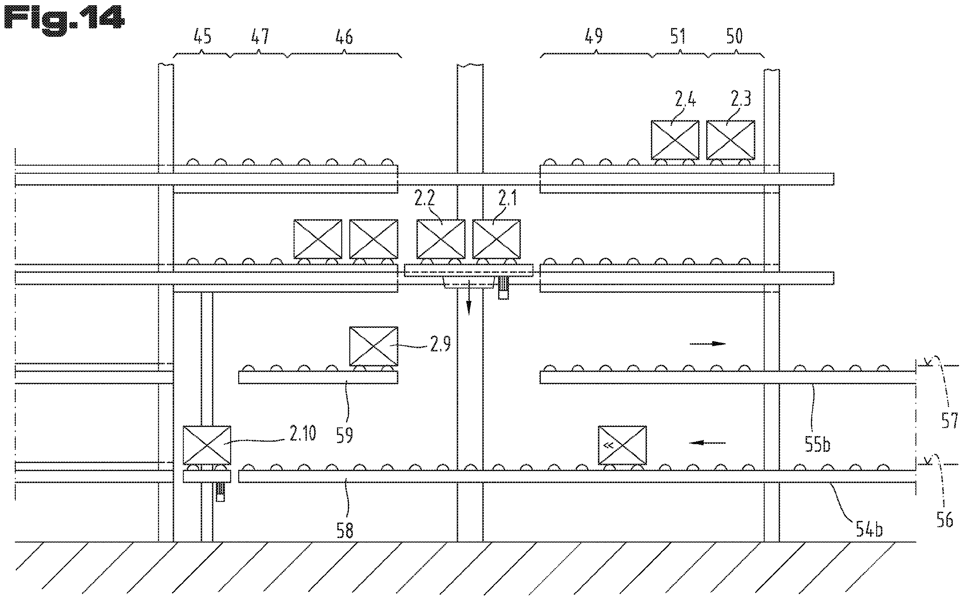

Nach einer anderen Ausführung ist es auch möglich, wie in den Fig. 13 und 14 dargestellt, dass sich die für einen Auftrag benötigten (auszulagernden) Ladegüter 2.1, 2.2 auf Bereitstellfördervorrichtungen 43 in verschiedenen Regalebenen 16 befinden. Beispielweise ist das Ladegut 2.1 in der vierten Regalebene 16 und das Ladegut 2.2 in der dritten Regalebene 16. Andererseits können die auszulagernden Ladegüter 2.1, 2.2 unterschiedlichen Aufträgen angehören und gemeinsam auf der Transportvorrichtung 36b aufgenommen werden. In diesem Fall werden die Regalebenen 16 nacheinander durch Anheben oder Absenken der Transportvorrichtung 36b angefahren.

Werden die Ladegüter 2.3, 2.4 von der Transportvorrichtung 36b auf den zweiten Pufferstreckenabschnitt 42b in der vierten Regalebene gefördert, wird gleichzeitig das Ladegut 2.1 vom ersten Pufferstreckenabschnitt 41b auf die Transportvorrichtung 36b gefördert. Danach wird die Transportvorrichtung 36b auf die dritte Regalebene 16 verstellt, in welcher sich das Ladegut 2.2 befindet. Sodann wird das Ladegut 2.2 vom ersten Pufferstreckenabschnitt 41b auf die Transportvorrichtung 36b gefördert.

Befinden sich nun die auszulagernde Ladegüter 2.1, 2.2 auf der Transportvorrichtung 36b, wird diese auf die Fördertechnikebene 57 zwischen die Fördervorrichtungen 54b, 55b verstellt, in welcher wiederum Ladegüter 2.1, 2.2, 2.9, 2.10 in oben beschriebener Weise im "Doppelspiel" manipuliert werden können.

Durch die aufeinander folgende Übernahme von Ladegütern 2.1, 2.2 kann eine "endsortierte" Reihenfolge (Sequenzierung) für die zu einem Auftrag benötigten Ladegüter 2 hergestellt werden, in welcher sie auf die Fördervorrichtung 55b abgegeben werden können. Zudem kann auch schon durch die vom Materialflussrechner koordinierte Anlieferung von Ladegütern 2 über die Förderfahrzeuge 3 zum Übernahmeabschnitt 45 im ersten Pufferstreckenabschnitt 41a, 41b auf einer oder mehreren Regalebenen 16 eine "vorsortierte" Reihenfolge (Sequenzierung) für die zu einem Auftrag benötigten Ladegüter 2 hergestellt werden. Auch ist eine Kombination der Sequenzierungen möglich.

Die Anordnung von einem ersten Pufferstreckenabschnitt 41a, 41b und zweiten Pufferstreckenabschnitt 42a, 42b jeweils beidseits zur Regalgasse ist im Hinblick auf Ausfallsicherheit (Redundanz) vorteilhaft.

Liegt an einer der Ladegut-Hebevorrichtungen 34a, 34b eine Störung vor, kann der Betrieb, daher das Auslagern und Einlagern von Ladegütern 2, über die eine funktionstüchtige Ladegut-Hebevorrichtung 34a, 34b dennoch aufrecht erhalten bleiben.

Es kann nun auch vorgesehen werden, dass während der Störungsdauer zumindest ein Förderfahrzeug 3 auf einer oder mehreren Regalebenen 16 oder die Förderfahrzeuge 3 in den jeweiligen Regalebenen 16 bereits auf den (linken) Übernahme ab schnitt 45 der Bereitstellfördervorrichtung 43 übergebene und/oder auf dem Übergabeabschnitt 46 und/oder Pufferabschnitt 47 befindliche und auszulagernde Ladegüter 2 von der einen Seite auf die andere Seite auf den (rechten) Übernahmeabschnitt 45 der Bereitstellfördervorrichtung 43 umgelagert werden. Dies kann bevorzugt auf allen Regalebenen 16 geschehen.

Das Förderfahrzeug 3 bildet demnach einen Transportweg zwischen den beidseits zur Regalgassen 15 und in deren Längsrichtung zueinander versetzten Übernahmeabschnitten 45.

Es sei an dieser Stelle auch noch darauf hingewiesen, dass der Umsetzheber 60a; 60b alternativ zur Anordnung im Bodenbereich auch im Deckenbereich des Regallagers angeordnet werden kann.

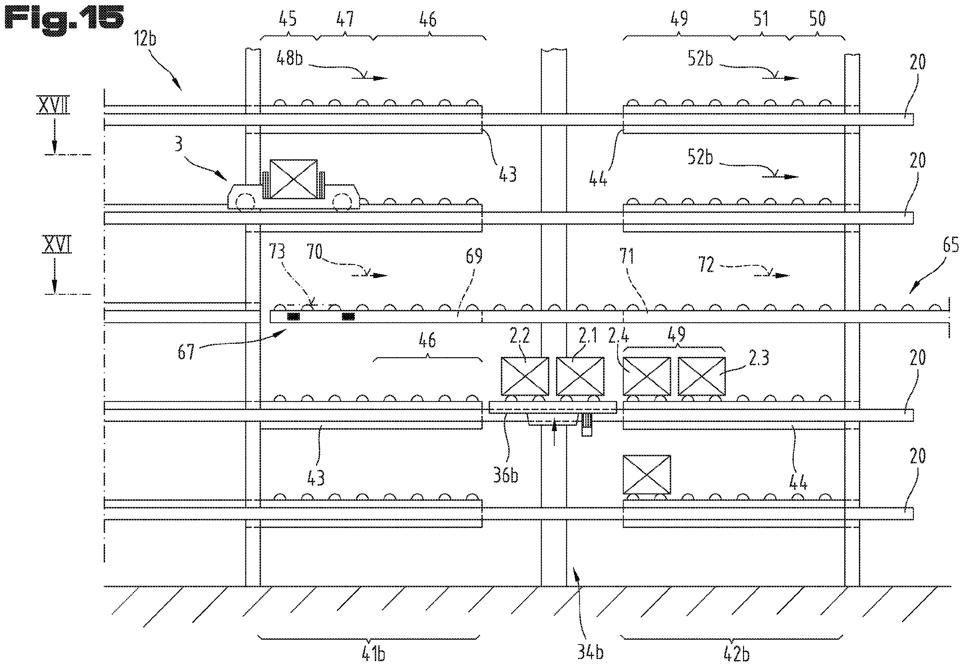

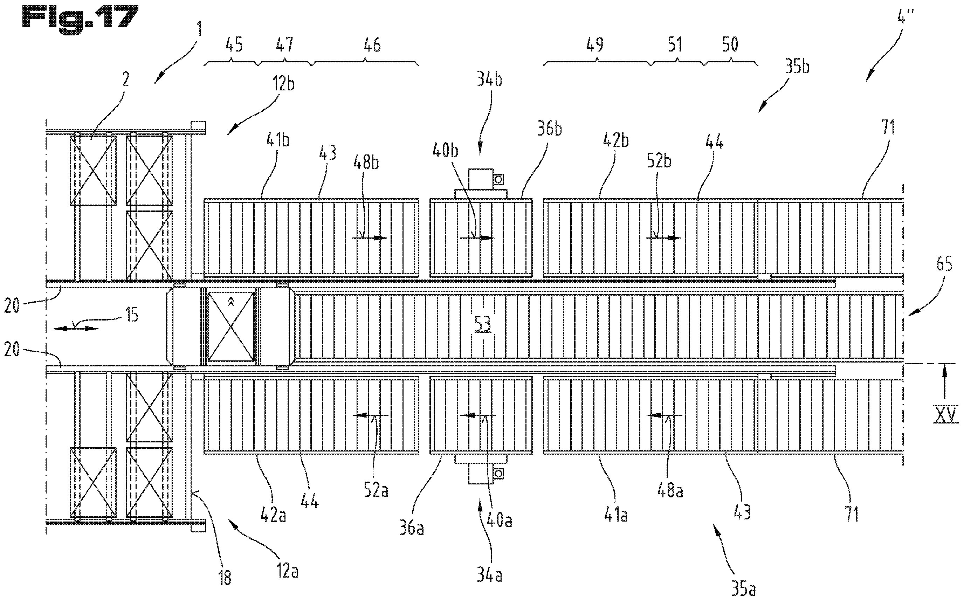

In den Fig. 15 bis 17 ist eine dritte Ausführung eines Regallagersystems gezeigt, welches ein Regallager 1 für Ladegüter 2, zumindest ein selbstfahrendes, autonomes Förderfahrzeug 3, eine Ladegut-Manipulationseinheit 4" und gegebenenfalls eine Förderfahrzeug-Hebevorrichtung 5 umfasst, wie oben beschrieben.

Die Ladegut-Manipulationseinheit 4" umfasst stirnseitig vor den Lagerregalen 12a, 12b angeordnet entweder ausschließlich eine erste Ladegut-Hebevorrichtung 34a und eine erste Puffervorrichtung 35a oder, wie gezeigt, eine erste Ladegut-Hebevorrichtung 34a, eine erste Puffervorrichtung 35a, eine zweite Ladegut-Hebevorrichtung 34b und eine zweite Puffervorrichtung 35b.

Die Ladegut-Manipulationseinheit 4" schließt an eine Vorzonen-Fördertechnik zum Antransport von Ladegütern 2 zur Ladegut-Hebevorrichtung 34a und gegebenenfalls Hebevorrichtung 34b und zum Abtransport von Ladegütern 2 von der Ladegut-Hebevorrichtung 34a und gegebenenfalls Hebevorrichtung 34b.

Diese Vorzonen-Fördertechnik ist an das Regallager 1 stirnseitig angeschlossen und umfasst nach dieser Ausführung eine zentrale Bereitstellungsbahn 65 mit einer Förderrichtung 66 in Richtung auf das Regallager 1, eine am vorderen Endbereich der Bereitstellungsbahn 65 angeordnete Ausschleusvorrichtung 67 mit einer reversierbaren Förderrichtung 68 parallel zur Regallagerseite 18, an die Ausschleusvorrichtung 67 zu beiden Seiten anschließende erste Fördervorrichtungen 69 zum Antransport von Ladegütern 2 zur Ladegut-Hebevorrichtung 34a; 34b mit einer zur Bereitstellungsbahn 65 entgegengesetzten Förderrichtung 70 und an die Ladegut-Hebevorrichtung 34a; 34b anschließende zweite Fördervorrichtungen 71 zum Abtransport von Ladegütern 2 von der Ladegut-Hebevorrichtung 34a; 34b mit einer zur Bereitstellungsbahn 65 entgegengesetzten Förderrichtung 72.

Die erste Fördervorrichtung 70 und zweite Fördervorrichtung 71 sind vorzugsweise innerhalb einer Fördertechnikebene 73 angeordnet. Andererseits können diese auch auf unterschiedlichen, übereinander liegenden Fördertechnikebenen verlaufen, sodass die Transportvorrichtung 36a, 36b auf unterschiedlichen Fördertechnikebenen Ladegüter 2 einlagert und auslagert. Die Fördervorrichtungen 70, 71 erstrecken sich dabei zu beiden Seiten und parallel zur Regalgasse 15 in der Verlängerung des jeweiligen Lagerregals 12a; 12b. Die Bereitstellungsbahn 65 verläuft in der und parallel zur Regalgasse 15.

Die Bereitstellungsbahn 65, Fördervorrichtungen 70, 71 sind jeweils durch eine Staubahn gebildet und umfasst eine Rollenbahn oder ein Förderband und dgl.

Die Ausschleusvorrichtung 67 ist beispielsweise durch einen heb- und senkbaren Riemenumsetzer gebildet, welcher die Bereitstellungsbahn 65 und die Fördervorrichtungen 69 miteinander verbindet. Andererseits kann die Ausschleusvorrichtung 67 auch durch einen mittels eines Stellantriebes nach beiden Richtungen relativ zur Bereitstellungsbahn 65 betätigbaren Schieber gebildet sein.

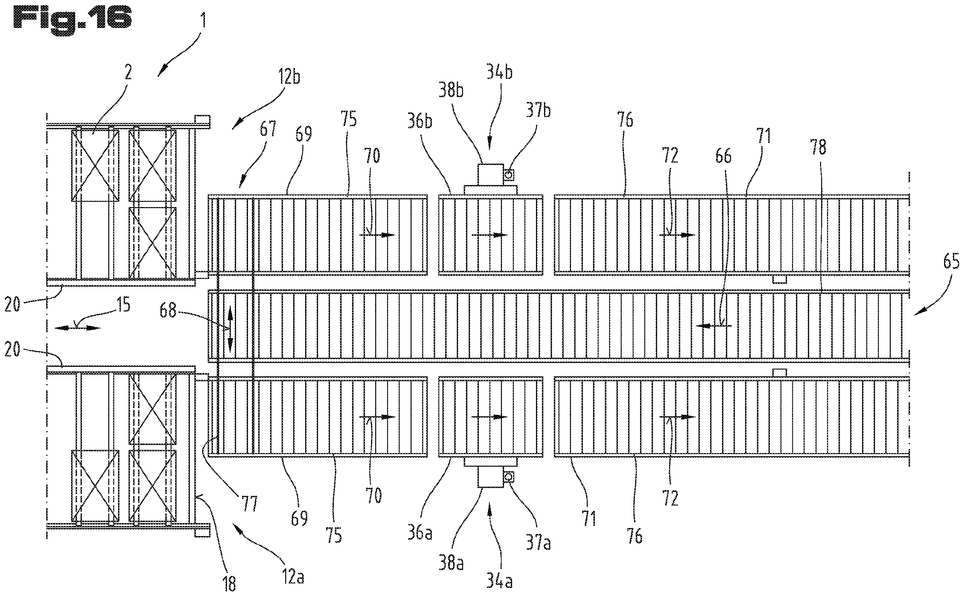

Wie in Fig. 16 ersichtlich, bilden die ersten Fördervorrichtungen 69 jeweils einen ersten Förderabschnitt 75 und die zweiten Fördervorrichtungen 71 jeweils einen ersten Förderabschnitt 76 aus. Die ersten Förderabschnitte 75, 76 der Fördervorrichtungen 69, 71 verlaufen parallel zur Regalgasse 15 und liegen fluchtend einander gegenüber. Die erste Fördervorrichtung 69 bildet ferner einen zweiten Förderabschnitt 77 und einen parallel zur Regalgasse 15 verlaufenden dritten Förderabschnitt 78 aus. Der dritte Förderabschnitt 78 entspricht der Bereitstellungsbahn 65. Der zweite Förderabschnitt 77 wird durch die Ausschleusvorrichtung 67 gebildet. Der erste und dritte Förderabschnitt 75, 78 der ersten Fördervorrichtung 69 sind über den zweiten Förderabschnitt 77 miteinander verbunden. Natürlich ist es nach einer anderen nicht gezeigten Ausführung auch möglich, dass ausschließlich eine erste Fördervorrichtung 69 und ausschließlich eine zweite Fördervorrichtung 71 sowie ausschließlich eine Ladegut-Hebevorrichtung 34a vorgesehen sind. In diesem Fall weist die Ausschleusvorrichtung 67 nur eine (nicht reversierbare) Förderrichtung 68 auf.

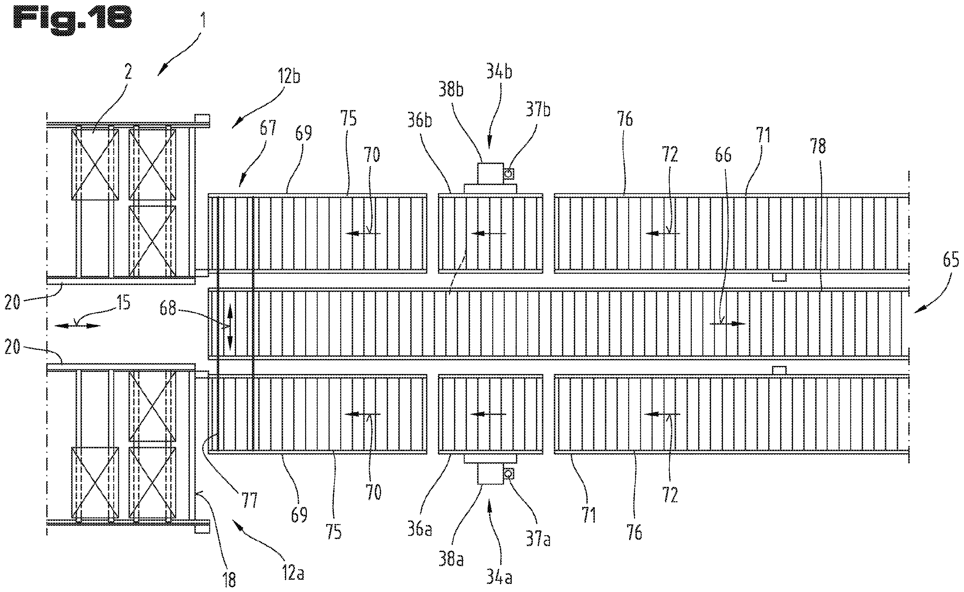

Wird die Förderrichtung der ersten Fördervorrichtungen 69 und zweiten Fördervorrichtungen 71 umgedreht, wie in Fig. 18 gezeigt, so bilden diese wiederum die parallel zur Regalgasse 15 verlaufenden und fluchtend einander gegenüberliegenden ersten Förderabschnitte 75, 76 aus. In diesem Fall bilden die zweiten Fördervorrichtungen 71 jeweils ferner einen zweiten Förderabschnitt 77 und einen parallel zur Regalgasse 15 verlaufenden dritten Förderabschnitt 78 aus. Der erste und dritte Förderabschnitt der zweiten Fördervorrichtungen 71 sind über den zweiten Förderabschnitt 77 miteinander verbunden.

Auch nach dieser Ausführung ist bei einem Einlagervorgang bzw. Auslagervorgang das oben beschriebene "Doppelspiel" im Bereich der Vorzonen-Fördertechnik einerseits während der Verlagerung von Ladegütern 2 zwischen der Transportvorrichtung 36a; 36b und der ersten Fördervorrichtung 69 (Einlagerfördervorrichtung) und andererseits während der Verlagerung von Ladegütern 2 zwischen der Transportvorrichtung 36a; 36b und der zweite Fördervorrichtung 71 (Auslagerfördervorrichtung) realisiert, was zu einer wesentlichen Leistungssteigerung des Regallagersystems führt, wie oben beschrieben.

Die Fig. 15 zeigt, wie auszulagernde Ladegüter 2.1, 2.2 vom Übergabeabschnitt 46 der Bereitstellfördervorrichtung 43 auf die Transportvorrichtung 36b übernommen und einzulagernde Ladegüter 2.3, 2.4 von der Transportvorrichtung 36b auf den Übernahmeabschnitt 49 der Bereitstellfördervorrichtung 44 übergeben wurden. Danach werden die auszulagernden Ladegüter 2.1, 2.2 über die Transportvorrichtung 36b auf die Fördertechnikebene 73 angehoben und die Transportvorrichtung 36b zwischen den Fördervorrichtungen 69, 71 positioniert. Sodann werden die Fördervorrichtung der Transportvorrichtung 36b sowie die Fördervorrichtungen 69, 71 angetrieben. Dabei können wiederum gleichzeitig einzulagernde Ladegüter (nicht eingetragen) von der ersten Fördervorrichtung 69 auf die Transportvorrichtung 36b und die Ladegüter 2.1, 2.2 von der Transportvorrichtung 36b auf die zweite Fördervorrichtung 71 gefördert werden. Durch diese Maßnahmen werden sowohl ein "Doppelspiel" im Bereich der Vorzonen-Fördertechnik als auch ein "Doppelspiel" im Bereich der Puffervorrichtung 35b erreicht, wie oben ausführlich beschrieben.

Ebenso ist auch nach dieser Ausführung die oben beschrieben Sequenzierung möglich. Auch kann die Ladegut-Manipulationsvorrichtung 4" wiederum bloß die Hebevorrichtung 34a und die Puffervorrichtung 35a aufweisen, wie in den Fig. 1 und 3 gezeigt, aber die beschriebene Vorzonen-Fördertechnik umfassen

Die Ladegut-Manipulationseinheit 4; 4'; 4" ist nach den gezeigten Ausführungen stirnseitig vor dem Regallager 1 angeordnet. Ebenso kann die Ladegut-Manipulationseinheit 4; 4'; 4" zwischen den stirnseitigen Regallagerseiten 18, 19 angeordnet, daher im Regallager bzw. in den Lagerregalen 12a, 12b integriert werden.

Die in den Fig. 6, 7 bzw. 15 bis 17 gezeigten Ausführungen erweisen sich auch von Vorteil, wenn einerseits die der ersten Ladegut-Hebevorrichtung 34a zugeordnete erste Fördertechnik 54a; 69 und zweite Fördertechnik 55a; 71 an einen ersten Arbeitsplatz und andererseits die der zweiten Ladegut-Hebevorrichtung 34b zugeordnete erste Fördertechnik 54b; 69 und zweite Fördertechnik 55b; 71 an einen zweiten Arbeitsplatz angeschlossen sind. Demnach sind pro Regalgasse 15 zwei Arbeitsplätze angeschlossen. Der Arbeitsplatz ist beispielweise eine Kommissionierstation (nicht dargestellt) oder eine Beladestation zum Beladen eines Ladungsträgers, wie Palette und dgl.

Auch wenn nach den oben gezeigten Ausführungen (Fig. 1-3 und Fig. 6-8) die Bereitstellfördervorrichtungen 43, 44 erst ab der dritten Regalebene 16 vorgesehen sind, ist es genauso gut möglich, dass auch in den beiden unteren Regalebenen 16 die Bereitstellfördervorrichtungen 43 und/oder die Bereitstellfördervorrichtungen 44 vorgesehen werden, wie dies jedoch nicht dargestellt ist. In diesem Fall sind dann die ersten Bereitstellfördervorrichtungen 43 und/oder die zweiten Bereitstellfördervorrichtungen 44 über alle Regalebenen 16 angeordnet, welche je Puffervorrichtung 35a; 35b über alle Regalebenen 16 in eine einzige Förderrichtung 48a, 52a; 48a, 52a, 48b, 52b, wie oben beschrieben, angetrieben werden.

Die ersten Bereitstellfördervorrichtungen 43 sind dabei beispielsweise durch Förderabschnitte der Fördervorrichtungen 54a; 54b; 55a; 55b gebildet. Hierzu ist es vorgesehen, dass sich auch in der ersten und zweiten Regalebene 16 die Längstraverse 20 entsprechend der obigen Ausführungen entlang der Ladegut-Hebevorrichtung 34a; 34b als auch der Puffervorrichtung 35a; 35b erstrecken. Die ersten Bereitstellfördervorrichtungen 43 im ersten Pufferstreckenabschnitt 41a; 41b dienen einem Auslagervorgang, wie oben beschrieben.

Dabei können auszulagernde Ladegüter 2 der ersten Regalebene 16 vom Förderfahrzeug 3 auf den Förderabschnitt, welcher den oben beschriebenen Übernahmeabschnitt 45 bildet, der Fördervorrichtung 54a; 54b übergeben und von dieser zum Umsetzheber 60a; 60b und danach über die Bereitstellfördervorrichtung 44' sowie der Ladegut-Hebevorrichtung 34a; 34b auf die Fördervorrichtung 55a; 5b abgefördert werden. Andererseits können auszulagernde Ladegüter 2 der zweiten Regalebene 16 vom Förderfahrzeug 3 direkt auf den Förderabschnitt, welcher den oben beschriebenen Übernahmeabschnitt 45 bildet, der Fördervorrichtung 55a; 55b übergeben und von dieser abgefördert werden.

Nach einer anderen Ausführung können die ersten Bereitstellfördervorrichtungen 43, welche in der ersten und zweiten Regalebene 16 unterhalb der ersten Bereitstellfördervorrichtungen 43 der oberhalb liegenden Regalebenen 16 angeordnet sind, und die Fördervorrichtungen 54a, 55a; 54b, 55b vorgesehen werden, wobei dann die Fördervorrichtungen 54a, 55a; 54b, 55b in vertikaler Richtung oberhalb und/oder unterhalb der ersten Bereitstellfördervorrichtungen 43 verlaufen.

Die zweiten Bereitstellfördervorrichtungen 44 sind an den Umsetzheber 60a; 60b angeschlossen und auf der dem/den Lagerregal(en) 12a; 12b zugewandten Seite angeordnet. Die zweiten Bereitstellfördervorrichtungen 44 dienen einem Einlagervorgang, wie oben beschrieben.

Die Bereitstellfördervorrichtungen 44 im zweiten Pufferstreckenabschnitt 42a; 42b sind jeweils durch Staubahnen gebildet, welche den Übernahmeplatz 49, den Übergabeabschnitt 50 und zwischen diesen zumindest einen Pufferabschnitt 51 umfassen, wie oben beschrieben. Mittels der Staubahnen können die Ladegüter 2 von dem zur Ladegut-Hebevorrichtung 34a; 34b benachbarten Übernahmeabschnitt 49 zu dem zur Ladegut-Hebevorrichtung 34a entfernten Übergabeabschnitt 50 in einer einzigen Förderrichtung 52a; 52b gefördert werden. Die Übergabe der Ladegüter auf die Bereitstellfördervorrichtungen 44 kann direkt durch den Umsetzheber 60a; 60b erfolgen, welcher die oben beschriebene Transportvorrichtung 61a; 61b umfasst und über den Hubantrieb zwischen den Regalebenen 16 verstellbar ist. Dabei werden die Ladegüter 2 von der Fördervorrichtung 54a; 54b über den Umsetzheber 60a; 60b entweder auf die Bereitstellfördervorrichtung 44 in der ersten Regalebene 16 oder auf die Bereitstellfördervorrichtung 44 in der zweiten Regalebene 16 gefördert. Der Transport der Ladegüter 2 auf die Bereitstellfördervorrichtung 44 in der dritten oder einer oberhalb liegenden Regalebene 16, wurde oben bereits beschrieben. Hierzu ist es vorgesehen, dass der Antriebsmotor 63a, 63b die Förderrichtung der Transportvorrichtung 61a; 61b reversieren kann.

Die Ladegut-Manipulationseinheit 4; 4' umfasst nach dieser (nicht gezeigten) Ausführung die Ladegut-Hebevorrichtung 34a; 34b und den Umsetzheber 60a; 60b.

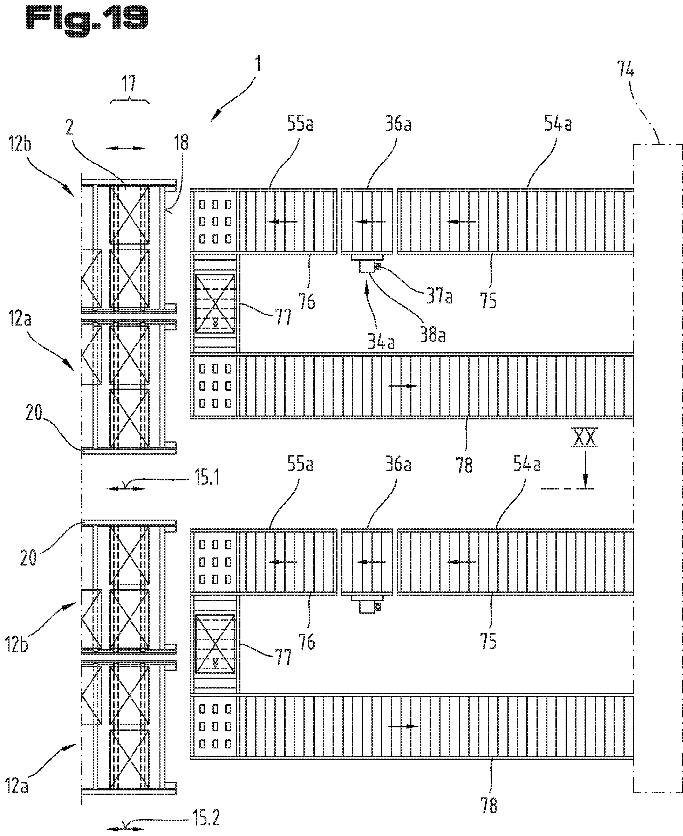

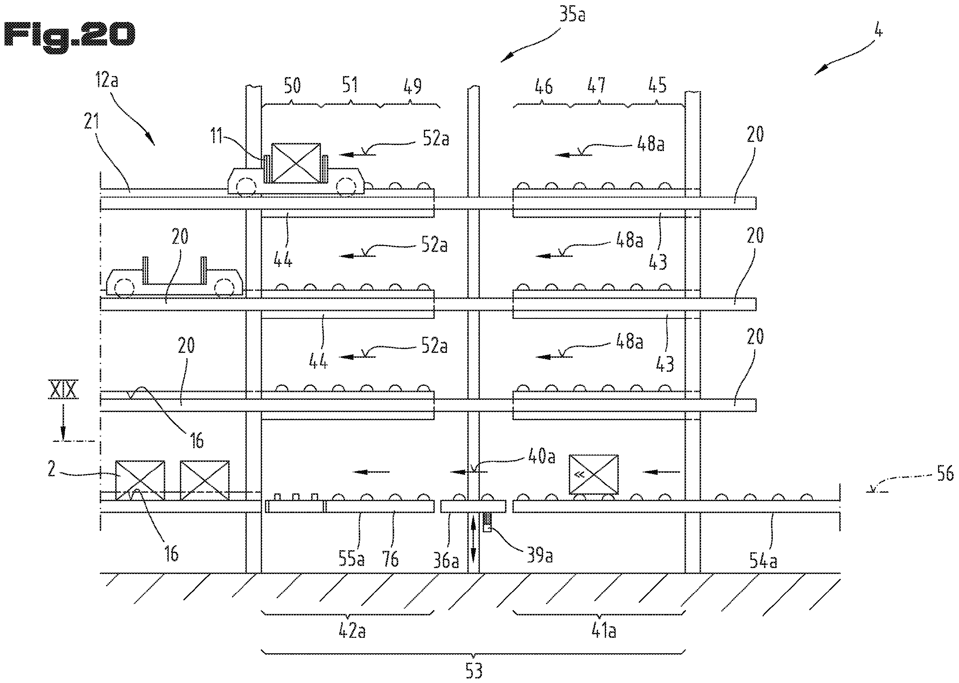

Es sei darauf hingewiesen, dass das in den Fig. 1 bis 19 gezeigte Regallagersystem nicht nur eine Regal-Gassen-Einheit, sondern auch mehrere Regal-Gassen-Einheiten aufweisen können. Fig. 19 und 20 zeigt das Regallagersystem nach Fig. 1 in einer modifizierten Ausführung. Das Regallagersystem umfasst im Gegensatz zu oben beschriebenen Ausgestaltung eine Färdertechnik mit einer ersten Fördervorrichtung 54a zum Antransport von Ladegütern 2 zur Ladegut-Hebevorrichtung 34a und einer zweiten Fördervorrichtung 55a zum Abtransport von Ladegütern von der Ladegut-Hebevorrichtung 34a, welche innerhalb nur einer Fördertechnikkebene 56 im unteren, mittleren oder oberen Höhenbereich (Bodenbereich) des Regallagers 1 angeordnet sind. Vorzugweise liegt die Fördertechnikebene 56 und die Regalebene 16 innerhalb einer Horizontalebene.

Auch zeigt diese Ausgestaltung zwei Regal-Gassen-Einheiten, wovon jede Regal-Gassen-Einheit benachbart zueinander angeordnete Lagerregale 12a, 12b und eine sich zwischen diesen erstreckende Regalgasse 15.1, 15.2 sowie die Ladegut-Manipulationseinheit 4 umfasst, wobei die Lagerregale 12a, 12b der beiden Regal-Gassen-Einheiten aneinander angrenzen.

Jede Ladegut-Manipulationseinheit 4 (Fig. 20) umfasst stirnseitig vor den Lagerregalen 12a, 12b eine erste Ladegut-Hebevorrichtung 34a und eine erste Puffervorrichtung 35a zum Zwischenspeichern von Ladegütern 2. Die ortsfest aufgestellte Ladegut-Hebevorrichtung 34a umfasst wiederum die oben beschriebene heb- und senkbare Transportvorrichtung 36a, welche ein oder mehrere Ladegüter 2 aufnehmen kann. Die Transportvorrichtung 36a umfasst eine Übernahme- und Übergabevorrichtung für Ladegüter 2, welche beispielweise durch eine über den Antriebsmotor 39a (Fig. 20) antreibbare Fördervorrichtung mit einer parallel zur Regalgasse 15.1, 15.2 verlaufenden (nicht umkehrbaren) Förderrichtung 40a. Die Fördervorrichtung ist beispielweise eine Rollenbahn oder ein Förderband und dgl. Die Transportvorrichtung 36a dient sowohl zum Einlagern von Ladegütern 2 als auch zum Auslagern von Ladegütern 2, ohne dabei eine Förderrichtung 40a ändern zu müssen. Dabei ist entlang der Ladegut-Hebevorrichtung 34a und der Puffervorrichtung 35a der Umsetzbereich 53 definiert.

Die ortsfest aufgestellte Puffervorrichtung 35a umfasst, wie oben beschrieben, den ersten Pufferstreckenabschnitt 41a mit den Bereitstellfördervorrichtungen 43 und den zweiten Pufferstreckenabschnitt 42a mit den Bereitstellfördervorrichtungen 44. Die Ladegut-Hebevorrichtung 34a ist derart zwischen den Pufferstreckenabschnitten 41a, 42a und den Fördervorrichtungen 54a, 55a angeordnet, dass die Transportvorrichtung 36a zum Einlagern und Auslagern von Ladegütern 2 relativ zu den Regalebenen 16 bzw. zu der Fördertechnikebene 56 entweder zwischen je zwei gegenüberliegende Bereitstellvorrichtungen 43, 44 oder zwischen die Fördervorrichtungen 54a, 55a vertikal positionierbar ist, sodass ein oder mehrere Ladegüter 2 entweder zwischen der Transportvorrichtung 36a und einer der Bereitstellvorrichtungen 43, 44 oder zwischen der Transportvorrichtung 36a und einer der Fördervorrichtungen 54a, 55a förderbar ist.

Die im Detail oben beschriebenen Bereitstellvorrichtungen 43, 44 des jeweiligen Pufferstreckenabschnittes 41a, 42a sind mit Ausnahme jener Regalebene 16, in welcher die Fördertechnikebene 56 verläuft, in jeder Regalebenen 16 angeordnet. Die im ersten Pufferstreckenabschnitt 41a angeordneten Bereitstellfördervorrichtungen 43 bzw. die Staubahnen sämtlicher Regalebenen 16, in welchen sie angeordnet sind, dienen jeweils ausschließlich einem Auslagervorgang von Ladegütern 2 bzw. als Auslagerstrecken mit nicht reversierbaren Förderrichtungen 48a. Die im zweiten Pufferstreckenabschnitt 42a angeordneten Bereitstellfördervorrichtungen 44 bzw. die Staubahnen sämtlicher Regalebenen 16, in welchen sie angeordnet sind, dienen jeweils ausschließlich einem Einlagervorgang von Ladegütern 2 bzw. als Einlagerstrecken mit nicht reversierbaren Förderrichtungen 52a.

Wie auch in Fig. 20 ersichtlich, verlaufen die vorderen Längstraverse 20 in denjenigen Regalebenen 16, in welchen die Bereitstellfördervorrichtungen 43, 44 angeordnet sind, durchgehend entlang der Regalgasse 15.1, 15.2 und der Ladegut-Hebevorrichtung 34a sowie den Bereitstellfördervorrichtungen (43, 44). Die vorderen Längstraversen 20 können jeweils als einzige durchgehende Längstraversen 20 oder aber auch durch jeweils mehrere in Längsrichtung der Regalgasse 15.1, 15.2 hintereinander angeordnete Längstraversen 20 gestaltet sein. Die Längstraversen 20 sind mit ihren Endabschnitten über Befestigungsmittel, beispielweise Schrauben, mit Vertikalstehern verbunden. Auch können sie über Befestigungsmittel, beispielweise Schrauben, mit den Bereitstellfördervorrichtungen 43, 44 verbunden werden. Die in der jeweiligen Regalebene 16 paarweise einander gegenüberliegenden Längstraversen 20 bilden eine Führungsbahn, sodass in der jeweiligen Regalebene 16 das Förderfahrzeug 3 zum Auslagern und Einlagern von Ladegütern 2 entweder die Bereitstellfördervorrichtungen 43 im ersten Pufferstreckenabschnitt 41a oder die Bereitstellfördervorrichtungen 44 im zweiten Pufferstreckenabschnitt 42a anfahren kann, wie oben beschrieben.

Die Bereitstellvorrichtungen 43, 44 und die zwischen den Fördervorrichtungen 54a, 55a und den Pufferstreckenabschnitten 41a, 42a angeordnete Laclegut-Hebevorrichtung 34a sind hierzu seitlich neben der Regalgasse 15.1, 15.2 entlang der Führungsbahnen 20 vorgesehen.

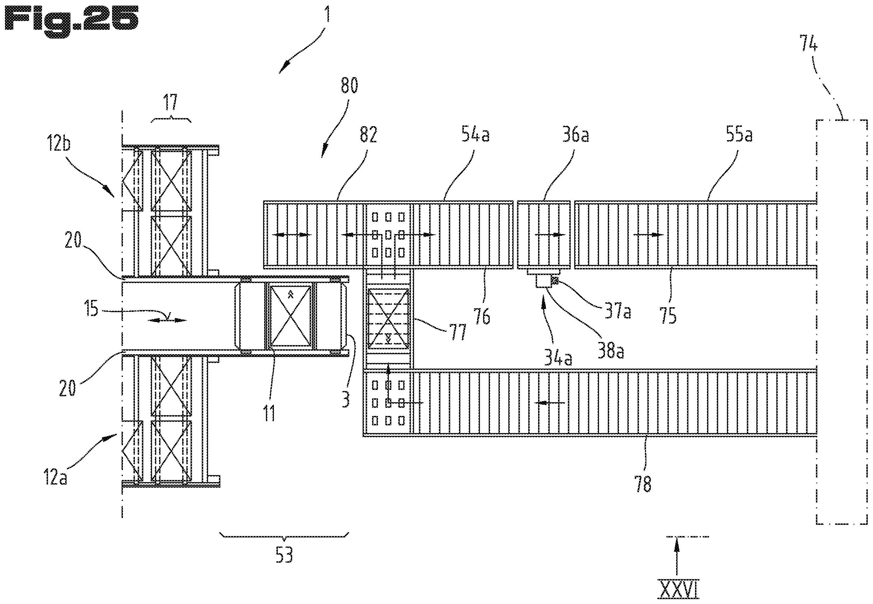

Hingegen verlaufen die vorderen Längstraversen 20 in derjenigen Regalebene 16, in welcher die Fördertechnik zum Antransport von Ladegütern 2 zur Ladegut-Hebevorrichtung 34a und zum Abtransport von Ladegütern 2 von der Ladegut-Hebevorrichtung 34a angeordnet ist, im Wesentlich nur über die Länge der Lagerregale 12a, 12b. Die Ladegüter 2 aus dieser Regalebene 16 können ausgelagert werden, indem das Förderfahrzeug 3 gemeinsam mit einem oder mehreren Ladegütern 2 vorerst auf die Förderfahrzeug-Hebevorrichtung 5 (Fig. 2) bewegt und danach von dieser auf eine der anderen Regalebenen 16, in welcher die Bereitstellfördervorrichtungen 43, 44 angeordnet sind, abgegeben wird. Sind Ladegüter 2 auf diese Regalebene 16 einzulagern, wird das Förderfahrzeug 3 gemeinsam mit einem oder mehreren Ladegütern 2 vorerst auf die Förderfahrzeug-Hebevorrichtung 5 (Fig. 2) bewegt und danach von dieser auf die Regalebene 16, in welcher die Fördertechnik zum Antransport von Ladegütern 2 zur Ladegut-Hebevorrichtung 34a und zum Abtransport von Ladegütern 2 von der Ladegut-Hebevorrichtung 34a angeordnet ist, abgegeben. Eine andere Ausführung für die Auslagerung und Einlagerung von Ladegütern 2 dieser Regalebene 16 ist in den Fig. 25 bis 27 beschrieben.

Wie in Fig. 19 ersichtlich, sind die erste Fördervorrichtung 54a zum Antransport von Ladegütern 2 zur Ladegut-Hebevorrichtung 34a und die zweite Fördervorrichtung 55a zum Abtransport von Ladegütern 2 von der Ladegut-Hebevorrichtung 34a mehrerer Regal-Gassen-Einheiten bzw. Regalgassen 15.1, 15.2 an ein in strichpunktierte Linien schematisch dargestelltes, automatisiertes Verteilsystem 74 zum Antransport und Abtransport von Ladegütern 2 zu bzw. von den Fördervorrichtungen 54a, 55a angeschlossen. Dieses Verteilsystem 74 umfasst eine Fördervorrichtung, beispielweise einen Rollenförderer und dgl.

Die erste Fördervorrichtung 54a und die zweite Fördervorrichtung 55a bilden parallel zur Regalgasse 15.1, 15.2 verlaufende und fluchtend einander gegenüberliegende erste Förderabschnitte 75, 76. Die zweite Fördervorrichtung 55a bildet ferner einen zweiten Förderabschnitt 77 und einen parallel zur Regalgasse 15.1, 15.2 verlaufenden dritten Förderabschnitt 78 aus. Der erste und dritte Förderabschnitt der zweiten Fördervorrichtung 55a sind über den zweiten Förderabschnitt 77 miteinander verbunden.

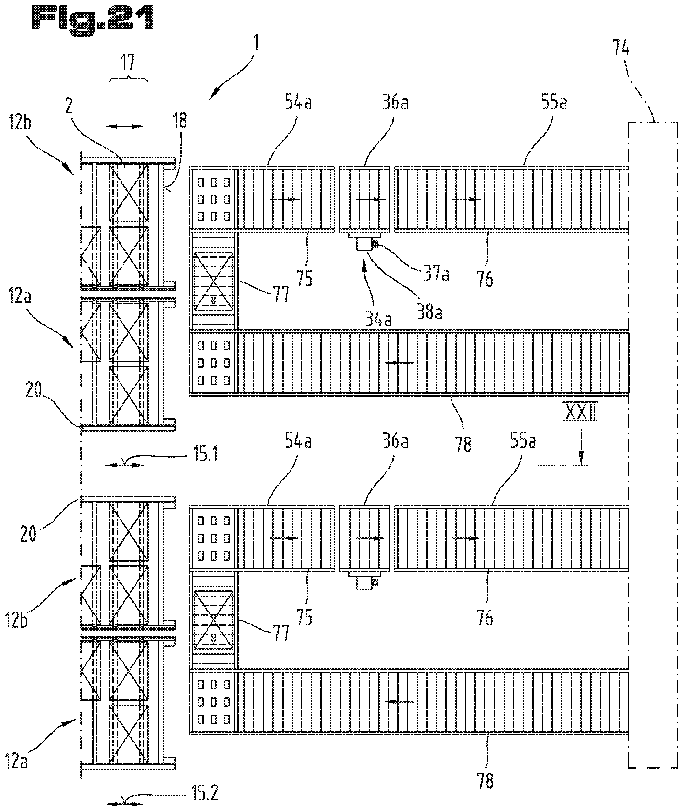

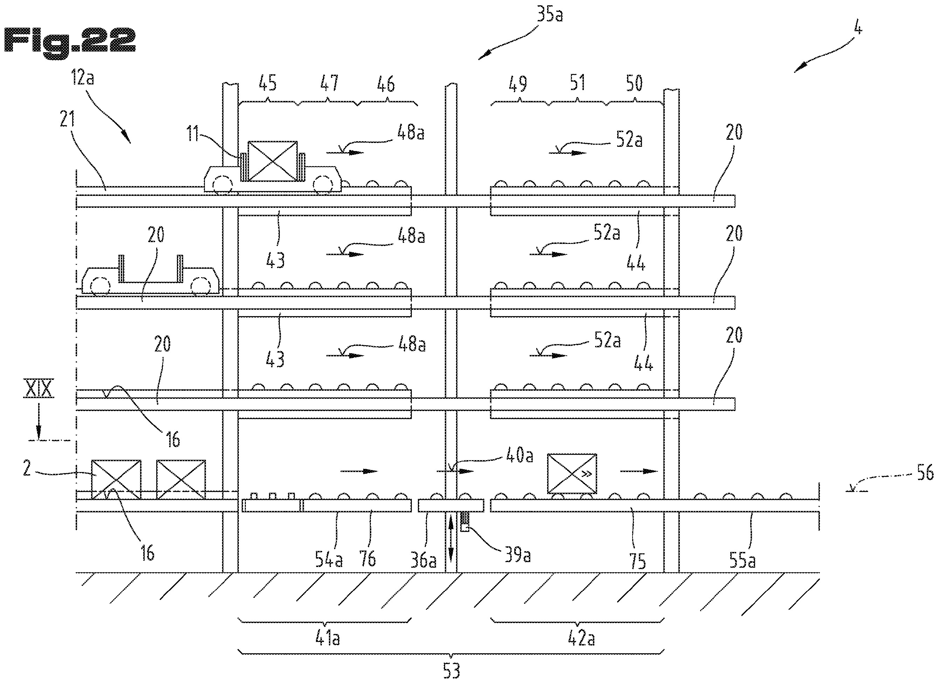

Wird die Förderrichtung der ersten Fördervorrichtung 54a und zweiten Fördervorrichtung 55a umgedreht, wie in den Fig. 21 und 22 gezeigt, so bilden diese wiederum die parallel zur Regalgasse 15.1, 15.2 verlaufenden und fluchtend einander gegenüberliegenden ersten Förderabschnitte 75, 76 aus. In diesem Fall bildet die erste Fördervorrichtung 54a ferner einen zweiten Förderabschnitt 77 und einen parallel zur Regalgasse 15.1, 15.2 verlaufenden dritten Förderabschnitt 78 aus. Der erste und dritte Förderabschnitt der ersten Fördervorrichtung 54a sind über den zweiten Förderabschnitt 77 miteinander verbunden.

Die Förderabschnitte 75, 76, 77 umfassen jeweils ein motorisch angetriebenes Förderelement, beispielweise eine Rollenbahn, einen Fördergurt und dgl. Das Umsetzen der Ladegüter 2 zwischen dem ersten Förderabschnitt 76 und zweiten Förderabschnitt 77 bzw. zweiten Förderabschnitt 77 und dritte Förderabschnitt 78 kann über an sich bekannte Röllchenweichen (wie beispielweise aus der WO 2012/006650 A1 bekannt) oder heb- bzw. senkbare Riemenumsetzer und dgl. erfolgen. Andererseits kann der zweite Förderabschnitt 77 auch eine bogenförmige Fördervorrichtung umfassen, beispielweise einen Kurvenförderer.

Gemäß den Ausführungen in den Fig. 19 bis 22 erstrecken sich die ersten Förderabschnitte 75, 76 der Fördervorrichtungen 54a, 55a in der Verlängerung eines Lagerregales 12a der ersten Regal-Gassen-Einheit. Der dritte Förderabschnitt 78 der zweiten Fördervorrichtung 55a (Fig. 19, 20) bzw. ersten Fördervorrichtung 54a (Fig. 21, 22) erstreckt sich in der Verlängerung eines dem Lagerregal 12a der ersten Regal-Gassen-Einheit benachbarten Lagerregal 12b der zweiten Regal-Gassen-Einheit.

Wie auch aus Fig. 22 ersichtlich, werden gleichermaßen die Bereitstellfördervorrichtungen 43 in deren Funktion als Auslagerstrecken und die Bereitstellfördervorrichtungen 44 in deren Funktion als Einlagerstrecken, wie oben beschrieben, mit im Vergleich zur Ausführung nach den Fig. 19, 20 entgegengesetzten Förderrichtungen 48a, 52a betrieben.

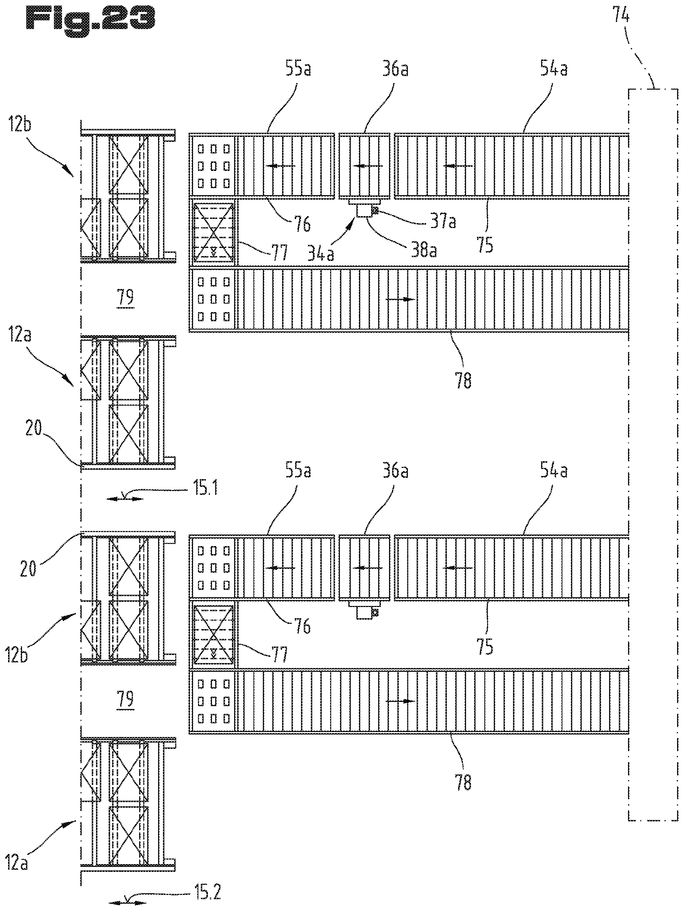

Fig. 23 zeigt das Regallagersystem nach den Fig. 19 und 20 mit einer anderen Anordnung der oben beschriebenen Fördertechnik mit einer ersten Fördervorrichtung 54a zum Antransport von Ladegütern 2 zur Ladegut-Hebevorrichtung 34a und einer zweiten Fördervorrichtung 55a zum Abtransport von Ladegütern 2 von der Ladegut-Hebevorrichtung 34a, welche innerhalb nur einer Fördertechnikebene 56 im unteren, mittleren oder oberen Höhenbereich (Bodenbereich) des Regallagers 1 angeordnet sind. Vorzugweise liegt die Fördertechnikebene 56 und die Regalebene 16 innerhalb einer Horizontalebene.

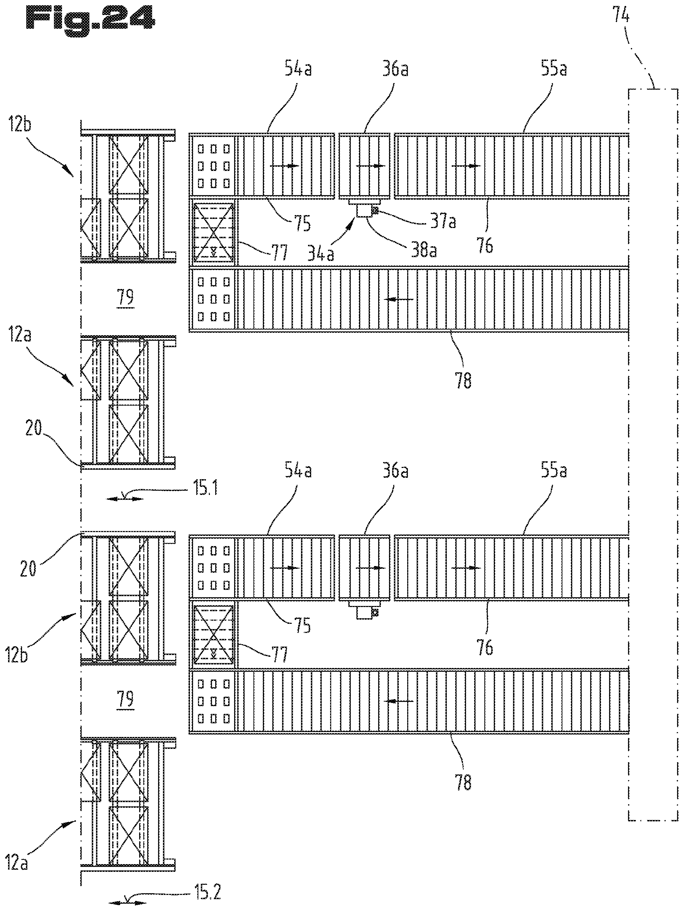

Die erste Fördervorrichtung 54a und die zweite Fördervorrichtung 55a bilden parallel zur Regalgasse 15.1, 15.2 verlaufende und fluchtend einander gegenüberliegende erste Förderabschnitte 75, 76. Nach Fig. 23 bildet die zweite Fördervorrichtung 55a ferner einen zweiten Förderabschnitt 77 und einen parallel zur Regalgasse 15.1, 15.2 verlaufenden dritten Förderabschnitt 78 aus. Während nach Fig. 24 die erste Fördervorrichtung 54a ferner einen zweiten Förderabschnitt 77 und einen parallel zur Regalgasse 15.1, 15.2 verlaufenden dritten Förderabschnitt 78 ausbildet. Der erste und dritte Förderabschnitt der zweiten Fördervorrichtung 55a oder ersten Fördervorrichtung 54a sind über den zweiten Förderabschnitt 77 miteinander verbunden.

Wird die Förderrichtung der ersten Fördervorrichtung 54a und zweiten Fördervorrichtung 55a umgedreht, wie in Fig. 24 gezeigt, so bilden diese wiederum die parallel zur Regalgasse 15.1, 15.2 verlaufenden und fluchtend einander gegenüberliegenden ersten Förderabschnitte 75, 76 aus. In diesem Fall bildet die erste Fördervorrichtung 54a ferner einen zweiten Förderabschnitt 77 und einen parallel zur Regalgasse 15.1, 15.2 verlaufenden dritten Förderabschnitt 78 aus. Der erste und dritte Förderabschnitt der ersten Fördervorrichtung 54a sind über den zweiten Förderabschnitt 77 miteinander verbunden.

Auch zeigt diese Ausgestaltung zwei Regal-Gassen-Einheiten, wovon jede Regal-Gassen-Einheit benachbart zueinander angeordnete Lagerregale 12a, 12b und eine sich zwischen diesen erstreckende Regalgasse 15.1, 15.2 sowie die Ladegut-Manipulationseinheit 4 beispielweise gemäß der Fig. 20 umfasst.

Nach dieser Ausführung sind die Lagerregale 12a, 12b der benachbarten Regal-Gassen-Einheiten mit gegenseitigem Abstand aufgestellt, sodass zwischen dem Lagerregal 12a der ersten Regal-Gassen-Einheit und dem Lagerregal 12b der zweiten Regal-Gassen-Einheit ein Gang 79 ausgebildet ist. Es ist nun vorgesehen, dass der dritte Förderabschnitt 78 stirnseitig vor den Lagerregalen 12a, 12b angeordnet ist und sich in der Verlängerung des Ganges 79 erstreckt. Andererseits kann der dritte Förderabschnitt 78 mit einer Teillänge in den Gang 78 ragen und teilweise innerhalb des Ganges 79 verlaufen.

Auch wenn nach den Ausführungen gemäß den Fig. 16 bis 24 die Fördertechnik zum Antransport und Abtransport von Ladegütern 2 zu bzw. von der Ladegut-Hebevorrichtung 34a; 34a, 34b stets vor dem Regallager 1 eingezeichnet sind, so ist es auch möglich, dass die Fördervorrichtungen 54a; 54a, 54b; 69, 71 in das Lagerregal 12a, 12b bzw. die Lagerregale 12a, 12b vorragen. Dadurch wird eine sehr Platz sparende Anordnung der Fördertechnik zum Antransport und Abtransport von Ladegütern 2 zu bzw. von der Ladegut-Hebevorrichtung 34a; 34a, 34b erreicht.

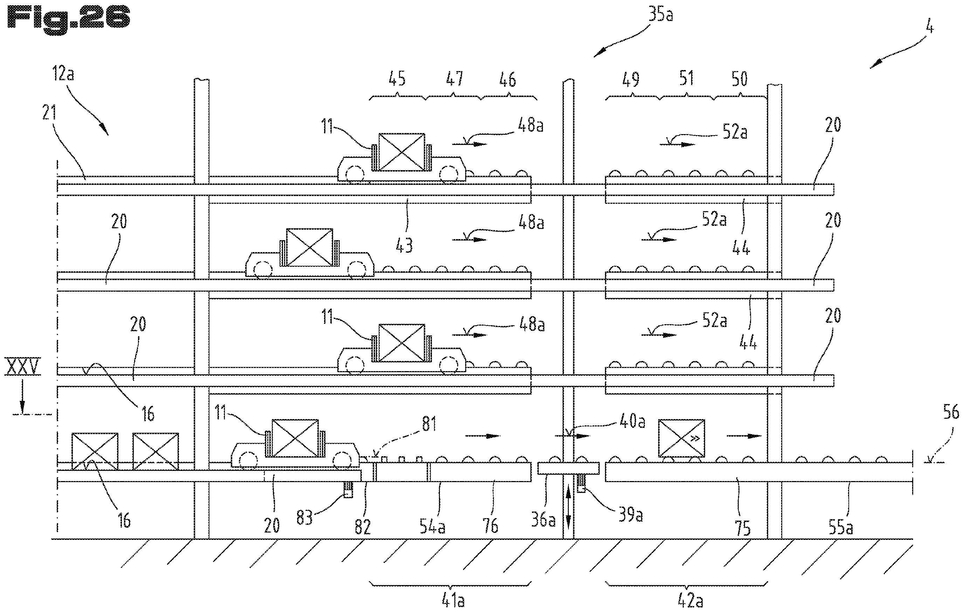

Die Fig. 25 und 26 zeigen eine andere Ausführung für die Auslagerung und Einlagerung von Ladegütern 2 aus jener Regalebene 16 bzw. auf jene Regalebene 16, in welcher die Fördertechnikebene angeordnet ist.

Die Fördertechnik zum Antransport und Abtransport von Ladegütern 2 zu bzw. von der Ladegut-Hebevorrichtung 34a umfasst zumindest eine Übergabe- und Übernahmevorrichtung 80, welche eine Übergabe- und Übernahmefläche 81 zur Aufnahme einer oder mehrerer Ladegüter 2 ausbildet. Nach gezeigter Ausführung kann die Übergabe- und Übernahmevorrichtung 80 auf ihrer Übergabe- und Übernahmefläche 81 hintereinander zwei Ladegüter 2 aufnehmen. Nachdem nach dieser Ausführung je Regal-Gassen-Einheit bzw. Regalgasse 15 nur eine Übergabe- und Übernahmevorrichtung 80 vorgesehen ist, umfasst, diese eine über den Antriebsmotor 83 reversibel antreibbare Fördervorrichtung 82 mit einer parallel zur Regalgasse 15 verlaufenden umkehrbare Förderrichtung (Doppelpfeil). Die Fördervorrichtung 82 weist dabei zumindest ein motorisch angetriebenes Förderelement, beispielweise eine Rollenbahn, einen Fördergurt und dgl. auf. Die (dritte) Fördervorrichtung 82 bildet mit der ersten Fördervorrichtung 54a und zweiten Fördervorrichtung 55a die Fördertechnik. Das Förderelement bildet die Übergabe- und Übernahmefläche 81 aus und ist mit dem Antriebsmotor 83 (Fig. 26) gekoppelt.

Die (dritte) Fördervorrichtung 82 erstreckt sich parallel zur Regalgasse 15 in der Verlängerung des Lagerregals 12a; 12b und ist an die erste Fördervorrichtung 54a angeschlossen. Die vorderen Längstraversen bzw. die Führungsbahn 20 erstreckt sich in dieser Regalebene 16 entlang der Übergabe- und Übernahmevorrichtung 80, sodass die Übergabe- und Übernahmevorrichtung 80 vom Förderfahrzeug 3 mittels der Längstraverse 20 anfahrbar ist. In dieser Regalebene 16 ist der Umsetzbereich 53 an der Übergabe- und Übernahmevorrichtung 80 definiert.

Soll nun ein Ladegut 2 in der Regalebene 16, in welcher die Fördertechnik zum Antransport und Abtransport von Ladegütern zu bzw. von der Ladegut-Hebevorrichtung angeordnet ist, eingelagert werden, so wird dieses vom dritten Förderabschnitt 78 über den zweiten Förderabschnitt 77, beispielsweise über die gezeigte Röllchenweiche, zur Übergabe- und Übernahmevorrichtung 80 gefördert und auf der (dritten) Fördervorrichtung 82 bereitgestellt. Das einzulagernde Ladegut 2 wird mittels des Förderfahrzeuges 3 von der Übergabe- und Übernahmevorrichtung 80 bzw. (dritten) Fördervorrichtung 82 abgeholt. Das Förderfahrzeug 3 kann mittels der Lastaufnahmevorrichtung 11 das einzulagernde Ladegut 2 von der Übergabe- und Übernahmevorrichtung 80 übernehmen. Danach fährt das Förderfahrzeug 3 mit dem Ladegut 2 aus dem Umsetzbereich 53 entlang der Fahrbahn bis vor einen Lagerplatz 17 im ersten oder zweiten Lagerregal 12a, 12b.

Soll hingegen ein Ladegut 2 ausgelagert werden, wird das Förderfahrzeug 3 entlang der Fahrbahn bis vor einen Lagerplatz 17 bewegt, wo ein gemäß einem Auftrag, insbesondere Kommissionierauftrag auszulagerndes Ladegut 2 mittels der Lastaufnahmevorrichtung 11 vom Lagerregal 12a, 12b auf das Förderfahrzeug 3 übernommen wird. Danach fährt das Förderfahrzeug 3 mit dem auszulagernden Ladegut 2 entlang der Fahrbahn vom Lagerplatz 17 in den Umsetzbereich 53, wo es mittels der Lastaufnahmevorrichtung 11 vom Förderfahrzeug 3 auf die Übergabe- und Übernahmevorrichtung 80 bzw. die (dritte) Fördervorrichtung 82 übergeben wird. Befindet sich das auszulagernde Ladegut 2 auf der Übergabe- und Übernahmevorrichtung 80, so wird dieses von der (dritten) Fördervorrichtung 82, die erste Fördervorrichtung 54a und über die Transportvorrichtung 36a auf die zweite Fördervorrichtung 55a gefördert.

Demnach dient die Übergabe- und Übernahmevorrichtung 80 gemäß dieser Ausführung einem Auslagervorgang und Einlagervorgang von Ladegütern 2. Hierzu muss lediglich die Förderrichtung der (dritten) Fördervorrichtung 82 umgekehrt werden.

Die Übergabe und Übernahme des Ladegutes 2 zwischen der (dritten) Fördervorrichtung 82 und dem Förderfahrzeug 3 kann anstatt der Lastaufnahmevorrichtung 11 auch durch eine vom Förderfahrzeug 3 getrennt angeordnete Manipulationseinheit (nicht dargestellt) erfolgen. Die Manipulationseinheit weist hierzu beispielweise einen mittels eines Stellantriebes nach beiden Richtungen relativ zur (dritten) Fördervorrichtung 82 betätigbaren Schieber auf.

Wird die Förderrichtung der ersten Fördervorrichtung 54a und zweiten Fördervorrichtung 55a umgedreht, wie beispielsweise in Fig. 19 und 20 beschrieben, ist die (dritte) Fördervorrichtung 82 an die zweite Fördervorrichtung 55a angeschlossen.

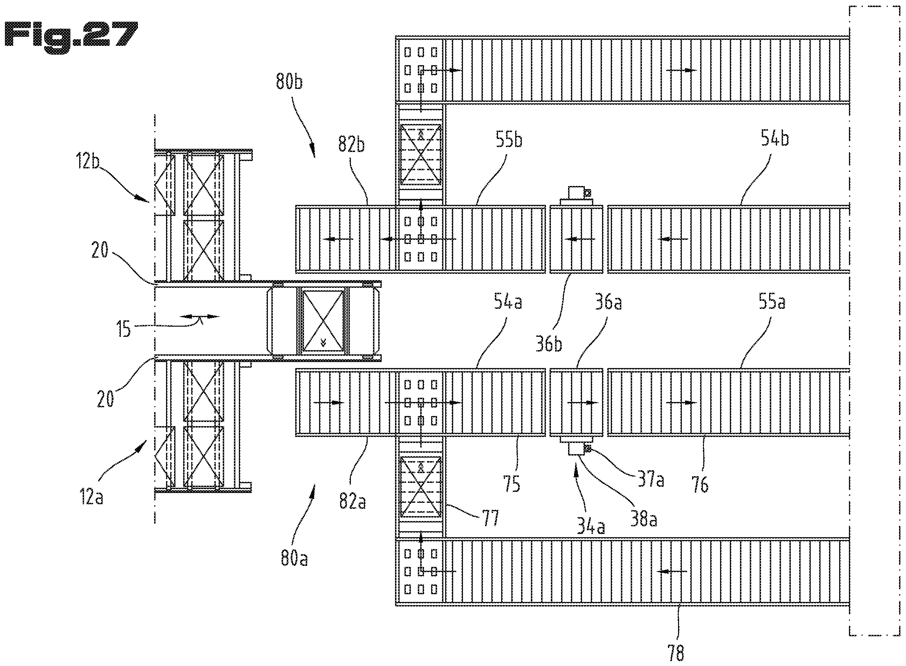

Die Fig. 27 zeigt eine Ausführung für die Auslagerung und Einlagerung von Ladegütern 2 aus jener Regalebene 16 bzw. auf jene Regalebene 16, in welcher die Fördertechnikebene angeordnet ist, bei der je Regal-Gassen-Einheit bzw. Regalgasse 15 zwei Übergabe- und Übernahmevorrichtungen 80a, 80b vorgesehen sind. Jede Übergabe- und Übernahmevorrichtung 80a, 80b bildet eine Übergabe- und Übernahmefläche 81 (wie sie in Fig. 26 für die Fördervorrichtung 82 eingetragen ist) zur Aufnahme einer oder mehrerer Ladegüter 2 aus.

Nachdem nach dieser Ausführung je Regal-Gassen-Einheit bzw. Regalgasse 15 getrennte Übergabe- und Übernahmevorrichtung 80a, 80b vorgesehen sind, umfassen diese jeweils eine über den Antriebsmotor 83 (nicht eingetragen) mit einer Förderrichtung antreibbare Fördervorrichtung 82a, 82b, welche parallel zur Regalgasse 15 angeordnet sind. Die Übergabe- und Übernahmevorrichtungen 80a, 80b sind zur Regalgasse 15 spiegelbildlich einander gegenüberliegend angeordnet. Dadurch kann das in einem Umsetzbereich 53 zwischen den Übergabe- und Übernahmevorrichtungen 80a, 80b angehaltene Förderfahrzeug 3 ein einzulagerndes Ladegut 2 mittels der Lastaufnahmevorrichtung 11 von der zweiten Übergabe- und Übernahmevorrichtung 80b aufnehmen und ein auszulagerndes Ladegut 2 mittels der Lastaufnahmevorrichtung 11 auf die erste Übergabe- und Übernahmevorrichtung 80a übergeben. Die Fördervorrichtungen 82a, 82b weisen aber entgegengesetzter Förderrichtungen auf, wie in Fig. 27 ersichtlich. Demnach dient die erste Übergabe- und Übernahmevorrichtung 80a mit der Fördervorrichtungen 82a einem Auslagervorgang von Ladegütern 2 und die zweite Übergabe- und Übernahmevorrichtung 80b Fördervorrichtungen 82b einem Einlagervorgang von Ladegütern 2. Die Fördervorrichtung 82a, 82b weist dabei zumindest ein motorisch angetriebenes Förderelement, beispielweise eine Rollenbahn, einen Fördergurt und dgl. auf. Die (dritten) Fördervorrichtungen 82a, 82b bilden mit der ersten Fördervorrichtung 54a und zweiten Fördervorrichtung 55a die Fördertechnik. Das Förderelement bildet die Übergabe- und Übernahmefläche 81 aus und ist mit einem Antriebsmotor 83a, 83b (nicht eingetragen) gekoppelt. Die (dritten) Fördervorrichtungen 82a, 82b erstrecken sich jeweils parallel zur Regalgasse 15 in der Verlängerung der Lagerregale 12a, 12b. Die eine der (dritten) Fördervorrichtungen 82a ist an die erste Fördervorrichtung 54a angeschlossen. Die andere der (dritten) Fördervorrichtungen 82b ist an die zweite Fördervorrichtung 54b angeschlossen.

Soll nun ein Ladegut 2 in der Regalebene 16, in welcher die Fördertechnik zum Antransport und Abtransport von Ladegütern zu bzw. von der Ladegut-Hebevorrichtung angeordnet ist, eingelagert werden, so wird dieses von der ersten Fördervorrichtung 54b über die Transportvorrichtung 36b auf die zweite Fördervorrichtung 55b und von dort auf die (dritte) Fördervorrichtung 82b gefördert. Das einzulagernde Ladegut 2 wird mittels des Förderfahrzeuges 3 von der Übergabe- und Übernahmevorrichtung 80b bzw. (dritten) Fördervorrichtung 82 abgeholt und eingelagert, wie oben beschrieben.

Soll hingegen ein Ladegut 2 ausgelagert werden, so wird dieses von der (dritten) Fördervorrichtung 82, die erste Fördervorrichtung 54a und über die Transportvorrichtung 36a auf die zweite Fördervorrichtung 55a gefördert.

Natürlich ist es auch möglich, dass bei einer Anordnung der Fördertechnik gemäß Fig. 1 je Ladegut=Manipulationseinheit 4 mehrere Übergabe- und Übernahmevorrichtungen 80 in übereinander liegenden Regalebenen 16 angeordnet sind und an den Umsetzheber 60a bzw. die erste Fördervorrichtung 54a mehrere Übergabe- und Übernahmevorrichtungen 80 anschließen. Der Umsetzheber 60a kann von einer der Übergabe- und Übernahmevorrichtungen 80 ein Ladegut 2 übernehmen und auslagern oder aber auch ein Ladegut 2 auf eine der Übergabe- und Übernahmevorrichtungen 80 übergeben und einlagern.

Bei einer Anordnung der Fördertechnik gemäß Fig. 6 oder 15 können je Ladegut-Manipulationseinheit 4'; 4" mehrere Übergabe- und Übernahmevorrichtungen 80 in übereinander liegenden Regalebenen 16 angeordnet werden, welche an den Umsetzheber 60a, 60b (Fig. 6) bzw. die erste Fördervorrichtung 69 (Fig. 15) anschließen.

Auch wenn nach den Ausführungen gemäß den Fig. 25 bis 27 die Übergabe- und Übernahmevorrichtung(en) 80 stets vor dem Regallager 1 eingezeichnet sind, so ist es auch möglich, dass die Übergabe- und Übernahmevorrichtung(en) 80 in das Lagerregal 12a, 12b bzw. die Lagerregale 12a, 12b integriert werden und unterhalb und/oder oberhalb von Lagerplätzen 17 angeordnet sind. Dadurch wird eine sehr Platz sparende Anordnung der Fördertechnik zum Transport von Ladegüter 2 erreicht.

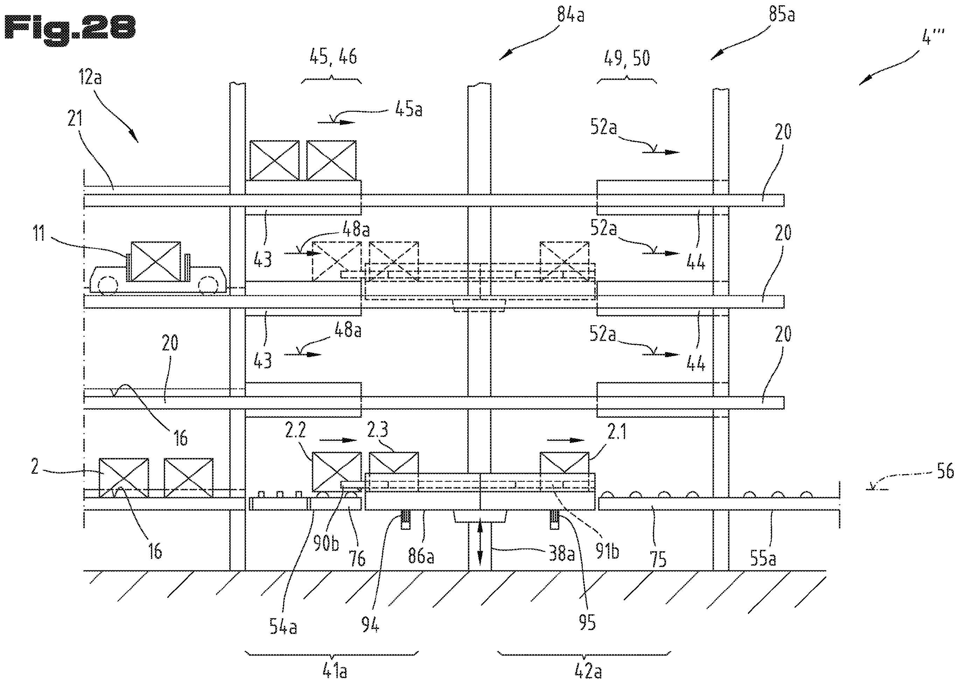

In der Fig. 28 ist eine andere Ausführung einer vollautomatisierten Ladegut-Manipulationseinheit 4'"gezeigt, welche stirnseitig vor den Lagerregalen 12a, 12b angeordnet ist und eine erste Ladegut-Hebevorrichtung 84a und eine erste Puffervorrichtung 85a zum Zwischenspeichern von Ladegütern 2 umfasst. Ebenso kann die Ladegut-Manipulationseinheit 4'" zwischen den stirnseitigen Regallagerseiten 18, 19 angeordnet, daher im Regallager 1 bzw. in den Lagerregalen 12a, 12b integriert werden. Auch kann die Ladegut-Manipulationseinheit 4'" wiederum, in oben beschriebener Anordnung, eine erste Ladegut-Hebevorrichtung 86a und eine erste Puffervorrichtung 85a sowie eine zweite Ladegut-Hebevorrichtung 84b und eine zweite Puffervorrichtung 85b aufweisen. Außerdem kann die Vorzonen-Fördertechnik gemäß den Ausführungen in den Fig. 15, 16, 18; 19-22; 23, 24; 25, 26; 27 eingesetzt werden.

Im nachfolgenden wird der Einfachheit halber bloß auf die Anordnung einer ersten Ladegut-Hebevorrichtung 84a und einer ersten Puffervorrichtung 85a Bezug gekommen. Die Bezugszeichen der alternativen Ausführungen, werden nachfolgend in Klammern angeführt.

Die ortsfest aufgestellte Ladegut-Hebevorrichtung 84a umfasst eine heb- und senkbare Transportvorrichtung 86a für ein oder mehrere Ladegüter 2, wobei die Transportvorrichtung 86a auf einem über einen Hubantrieb (nicht eingetragen) vertikal verstellbaren Hubrahmen aufgebaut ist. Nach gezeigter Ausführung ist die Transportvorrichtung 86a über den Hubrahmen auf einem ersten Mast 38a gelagert.

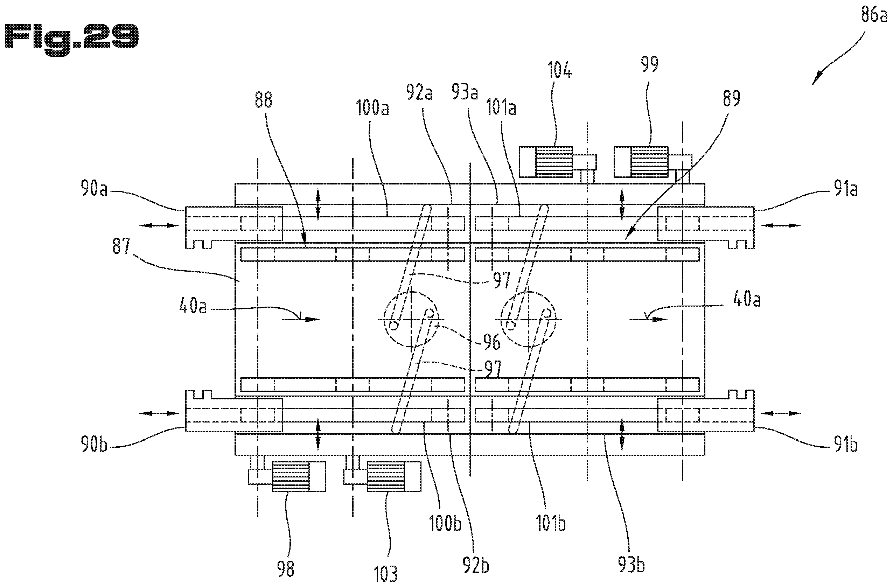

Die Transportvorrichtung 86a, wie sie in Fig. 29 näher dargestellt ist, umfasst nach dieser Ausführung eine Aufnahmeplattform 87 für ein oder mehrere Ladegüter 2 und eine Greifereinheit zum Schieben/Ziehen der Ladegüter 2 zwischen den Fördervorrichtungen 54a, 55a (54b, 55b; 69, 71) und der Transportvorrichtung 86a (86b) oder zwischen den Bereitstellvorrichtungen 43, 44 und der Transportvorrichtung 86a (86b). Die Aufnahmeplattform 87 weist parallel zur Regalgasse 15 verlaufende Längsseiten 104 und voneinander abgewandte Stirnseiten auf, wobei die Stirnseiten im Wesentlichen senkrecht zur Längserstreckung der Regalgasse 15 verlaufen. Bevorzugt umfasst die Transportvorrichtung 86a unabhängig voneinander antreibbare Greifereinheiten. Die erste Greifereinheit umfasst auf den parallel zur Regalgasse 15 verlaufenden Längsseiten 104 der Aufnahmeplattform 87 angeordnete Greifvorrichtungen 90a, 90b und die zweite Greifereinheit auf den parallel zur Regalgasse 15 verlaufenden Längsseiten 104 der Aufnahmeplattform 87 angeordnete Greifvorrichtungen 91a, 91b. Die Transportvorrichtung 86a kann auch eine an der Aufnahmeplattform 87 gelagerte erste Fördervorrichtung 88 und zweite Fördervorrichtung 89 umfassen, welche in Förderrichtung 40a hintereinander nachgeordnet sind. Die Transportvorrichtung 86a dient sowohl für einen Einlagervorgang als auch für einen Auslagervorgang von Ladegütern 2.

Die Greifvorrichtungen 90a, 90b, 91a, 91b für die Ladegutmanipulation sind jeweils in parallel zueinander verlaufenden und auf beiden Längsseiten 104 der Aufnahmeplattform 87 angeordneten Längsführungen 92a, 92b, 93a, 93b in einer horizontalen Ebene geführt. Die Längsführungen 92a, 92b, 93a, 93b sind mit den Greifvorrichtungen 90a, 90b, 91a, 91b über unabhängig voneinander betätigbare erste Stellantriebe in Z-Richtung (Doppelpfeil - quer zur Längserstreckung der Regalgasse 15) relativ zueinander verstellbar. Die ersten Stellantriebe umfassen jeweils einen Antriebsmotor 94, 95 (Fig. 28) und ein von diesem betätigbares Übertragungsmittel, mit welchem die Längsführungen 92a, 92b, 93a, 93b verbunden sind, sodass die Längsführungen 92a, 92b und die Greifvorrichtungen 90a, 90b über den Antriebsmotor 94 bzw. die Längsführungen 93a, 93b und die Greifvorrichtungen 91a, 91b über den Antriebsmotor 95 synchron aufeinander zubewegt oder voneinander wegbewegt werden. Dabei können die Greifvorrichtungen 90a, 90b des ersten Greifvorrichtungspaares und die Greifvorrichtungen 91a, 91b des zweiten Greifvorrichtungspaares in Z-Richtung unabhängig voneinander betätigt werden.

Die Übertragungsmittel sind jeweils durch mit einer Antriebsscheibe 96 an diametral gegenüberliegenden Anlenkpunkten mit einem ersten Ende gelenkig verbundene Schubstangen 97 gebildet, wobei die Schubstangen 97 mit ihrem zweiten Ende mit den Längsführungen 92a, 92b, 93a, 93b gelenkig verbunden sind.

Die Greifvorrichtungen 90a, 90b, 91a, 91b können ferner über unabhängig voneinander betätigbare zweite Stellantriebe in X-Richtung (Doppelpfeil - parallel zur Längserstreckung der Regalgasse 15) verstellt werden. Die zweiten Stellantriebe umfassen jeweils einen reversierbaren Antriebsmotor 98, 99 und ein von diesem betätigbares Übertragungsmittel 100a, 100b, 101a, 101b, mit welchem die Greifvorrichtungen 90a, 90b, 91a, 91b gekoppelt sind, sodass die Greifvorrichtungen 90a, 90b über den reversierbaren Antriebsmotor 98 bzw. die Greifvorrichtungen 91a, 91b über den Antriebsmotor 99 synchron einfahrbar oder ausfahrbar sind.

Dabei können die Greifvorrichtungen 90a, 90b des ersten Greifvorrichtungspaares und die Greifvorrichtungen 91a, 91b des zweiten Greifvorrichtungspaares in X-Richtung unabhängig voneinander betätigt werden.

Die Übertragungsmittel 100a, 100b, 101a, 101b sind paarweise angeordnet und die ersten Paare von Übertragungsmittel 100a, 100b und die zweiten Paare von Übertragungsmittel 101a, 101b jeweils synchron antreibbar. Beispielweise werden endlos umlaufende Zugmittel, wie Zahnriementriebe verwendet, welche mit den Greifvorrichtungen 90a, 90b, 91a, 91b verbunden bzw. bewegungsgekoppelt sind.

Zum Greifen eines Ladegutes 2 werden die Greifvorrichtungen 90a, 90b bzw. 91a, 91b beidseitig neben das Ladegut 2 verfahren und durch eine Zustellbewegung der Linearführungen 92a, 92b bzw. 93a, 93b in Z-Richtung die Greifvorrichtungspaare in Richtung auf die jeweils gegenüberliegenden Seitenwand des Ladegutes 2 verstellt und in formschlüssigen Eingriff beispielsweise mit Rippen am Ladegutes 2 verbracht. Auch ein kraftschlüssiger Eingriff wäre möglich.

Sind auch die erste Fördervorrichtung 88 und zweite Fördervorrichtung 89 auf der Transportvorrichtung 86a (86b) vorgesehen, so können auf der Transportvorrichtung 86a (86b) Ladegüter 2 auf einem Auslagervorgang sortiert aufgenommen werden, entsprechend dem oben beschriebenen Prinzip. Die erste Fördervorrichtung 88 und zweite Fördervorrichtung 89 sind mit unabhängig voneinander betätigbaren Antriebsmotoren 102, 103 gekuppelt und weisen eine parallel zur Regalgasse 15 verlaufende Förderrichtung 40a auf. Die Antriebsmotoren 102, 103 weisen vorzugsweise nur eine Antriebsrichtung auf. Während dem Umlagervorgang der Ladegüter 2 zwischen den Fördervorrichtungen 54a, 55a (54b, 55b; 69, 71) und der Transportvorrichtung 86a (86b) oder zwischen der Bereitstellvorrichtung 43, 44 und der Transportvorrichtung 86a (86b) sind die Antriebsmotoren 98, 102 bzw. Antriebsmotoren 99, 103 jeweils synchron angetrieben. Wird ein Ladegut 2 zwischen der ersten Fördervorrichtung 88 und zweiten Fördervorrichtung 89 auf der Transportvorrichtung 86a (86b) umgelagert, so werden die Antriebsmotoren 102, 103 währenddessen synchron angetrieben.

Wie in Fig. 28 beispielhaft eingetragen, ist es möglich, dass ein (auszulagerndes) erstes Ladegut 2.1 mittels der zweiten Greifvorrichtungen 91a, 91b von der Transportvorrichtung 86a (86b) auf die Fördervorrichtung 55a (55b; 71) abgegeben und ein (einzulagerndes) zweites Ladegut 2.2 mittels der ersten Greifvorrichtungen 90a, 90b von der Fördervorrichtung 54a (54b; 69) auf die Transportvorrichtung 86a (86b) übernommen wird. Die Übergabe und Übernahme der Ladegüter 2.1, 2.2 kann dabei gleichzeitig (synchron) und in dieselbe Bewegungsrichtung erfolgen. Währenddessen wird ein sich bereits auf der Transportvorrichtung 86a (86b) befindliches (einzulagerndes) drittes Ladegut 2.3 mittels der Fördervorrichtung 88 und/oder der Fördervorrichtung 89 auf der Transportvorrichtung 86a (86b) nachgefördert, sodass Platz für das (einzulagernde) zweite Ladegut 2.2 geschaffen wird.

Andererseits kann, wie in strichlierte Linien beispielhaft eingetragen, ein (einzulagerndes) erstes Ladegut 2.1 mittels der zweiten Greifvorrichtungen 91a, 91b von der Transportvorrichtung 86a (86b) auf eine der Bereitstellvorrichtungen 44 abgegeben und ein (auszulagerndes) zweites Ladegut 2.2 mittels der ersten Greifvorrichtungen 90a, 90b von einer der Bereitstellvorrichtungen 43 auf die Transportvorrichtung 86a (86b) übernommen werden. Die Übergabe und Übernahme der Ladegüter 2.1, 2.2 kann dabei gleichzeitig (synchron) und in dieselbe Bewegungsrichtung erfolgen. Währenddessen wird ein sich bereits auf der Transportvorrichtung 86a (86b) befindliches (auszulagerndes) drittes Ladegut 2.3 mittels der Fördervorrichtung 88 und/oder der Fördervorrichtung 89 auf der Transportvorrichtung 86a (86b) nachgefördert, sodass Platz für das (auszulagernde) zweite Ladegut 2.2 geschaffen wird.

Die Fördervorrichtungen 88, 89 dienen ausschließlich der Sortierfunktion und/oder der Positionierung der Ladegüter 2 auf der Transportvorrichtung 86a (86b) bei einem Auslagervorgang und/oder Einlagervorgang. Das Umlagern der Ladegüter 2 zwischen den Fördervorrichtungen 54a, 55a (54b, 55b; 69, 71) und der Transportvorrichtung 86a (86b) aber auch das Umlagern der Ladegüter 2 zwischen der Bereitstellvorrichtung 43, 44 und der Transportvorrichtung 86a (86b) erfolgt mittels der Greifvorrichtungen 90a, 90b bzw. 91a, 91b.

Die ortsfest aufgestellte Puffervorrichtung 85a umfasst einen ersten Pufferstreckenabschnitt 41a (41b) und einen zweiten Pufferstreckenabschnitt 42a (42b), wobei in jedem dieser Pufferstreckenabschnitte 41a, 42a (41b, 42b) mit Ausnahme jener Regalebene 16, in welcher die Fördertechnikebene 56 verläuft, in sämtlichen Regalebenen 16 übereinander die Bereitstellvorrichtungen 43, 44 angeordnet sind. Diese Bereitstellvorrichtungen 43, 44 dienen im Gegensatz zu den oben beschriebenen Bereitstellfördervorrichtungen ausschließlich dem Bereitstellen der Ladegüter 2. Eine Förderfunktion ist nicht notwendig, da die Transportvorrichtung 86a (86b) mit den Greifvorrichtungen 90a, 90b bzw. 91a, 91b zum Ziehen/Schieben von Ladegütern 2 ausgestattet ist.

Die im ersten Pufferstreckenabschnitt 41a (41b) angeordneten Bereitstellvorrichtungen 43 bzw. Stauplätze sämtlicher Regalebenen 16, in welchen sie angeordnet sind, dienen jeweils ausschließlich einem Auslagervorgang von Ladegütern 2 bzw. als Auslagerstrecken. Die im zweiten Pufferstreckenabschnitt 42a (42b) angeordneten Bereitstellvorrichtungen 44 bzw. die Stauplätze sämtlicher Regalebenen 16, in welchen sie angeordnet sind, dienen jeweils ausschließlich einem Einlagervorgang von Ladegütern 2 bzw. als Einlagerstrecken.

Die Bereitstellvorrichtungen 43 im ersten Pufferstreckenabschnitt 41a (41b) sind jeweils durch Stauplätze gebildet, welche einen Übernahme- bzw. Übergabeabschnitt 45, 46 umfassen. Auf diesem Übernahme- bzw. Übergabeabschnitt 45, 46 können einerseits mittels der Lastaufnahmevorrichtung 11 auszulagernde Ladegüter 2 vom Förderfahrzeug 3 übernommen und andererseits mittels der Transportvorrichtung 86a (86b) bzw. den Greifvorrichtungen 90a, 90b auszulagernde Ladegüter 2 auf die Transportvorrichtung 86a (86b) übergeben werden.

Die Bereitstellvorrichtungen 44 im zweiten Pufferstreckenabschnitt 42a (42b) sind jeweils durch Stauplätze gebildet, welche einen Übernahme- bzw. Übergabeabschnitt 49, 50 umfassen. Auf diesem Übernahme- bzw. Übergabeabschnitt 49, 50 können einerseits mittels der Transportvorrichtung 86a (86b) bzw. den Greifvorrichtungen 90a, 90b einzulagernde Ladegüter 2 von der Transportvorrichtung 86a (86b) übergeben und andererseits mittels der Lastaufnahmevorrichtung 11 einzulagernde Ladegüter 2 auf das Förderfahrzeug 3 übernommen werden. Nach gezeigter Ausführung kann jeder Stauplatz ein Ladegut 2 aufnehmen.

Bei dieser Ausführung können die Bereitstellvorrichtungen 43, 44 besonders günstig gestaltet werden, da weder ein eigenständiger Antrieb je Bereitstellvorrichtung 43, 44 noch eine Übertriebsrolle 64' je Bereitstellvorrichtungen 43, 44 erforderlich ist. Im einfachsten Fall umfassen die Bereitstellvorrichtungen 43, 44 im Übernahme- bzw. Übergabeabschnitt 45, 46 bzw. 49, 50 jeweils einen stationären Auflagetisch für ein oder mehrere Ladegüter 2.

Auch diese Transportvorrichtung 86a (86b) kann bei einem Ein- und Auslagervorgang das Umlagern der ein- und auszulagernden Ladegüter 2 zwischen den Fördervorrichtungen 54a, 55a (54b, 55b; 69, 71) und der Transportvorrichtung 86a (86b) aber auch das Umlagern der ein- und auszulagernde Ladegüter 2 zwischen einer der Bereitstellvorrichtungen 43, 44 und der Transportvorrichtung 86a (86b) gleichzeitig durchführen. Daher kann die Transportvorrichtung 86a (86b) ein "Doppelspiel" im Bereich der Puffervorrichtung 85a (85b) und im Bereich der Vorzonen-Fördertechnik realisieren.

Es sei auch noch hingewiesen, dass die Transportvorrichtung 86a (86b) auch Greifvorrichtungen aufweisen kann, die jeweils auf Teleskoparmen angeordnet sind und um eine zur Ausfahrrichtung der Teleskoparme parallele Achsen schwenkbar sind, um das Ladegut 2 an einer der vorderen oder hinteren Seitenwände formschlüssig hintergreifen zu können, wie dies in der US 6,923,612 B2 beschrieben ist.

Dadurch können einerseits im "Doppelspiel" mittels der Transportvorrichtung bzw. den Greifvorrichtungen gleichzeitig zwei oder mehrere einzulagernde Ladegüter 2 von der Transportvorrichtung 86a (86b) auf den Übernahme- bzw. Übergabeabschnitt 49, 50 übergeben oder gleichzeitig zwei oder mehrere auszulagernde Ladegüter 2 vom Übernahme- bzw. Übergabeabschnitt 45, 46 auf die Transportvorrichtung 86a (86b) übernommen werden. Somit werden gleichzeitig zumindest vier Ladegüter 2 manipuliert.

Andererseits können im "Doppelspiel" mittels der Transportvorrichtung bzw. den Greifvorrichtungen gleichzeitig zwei oder mehrere einzulagernde Ladegüter 2 von der Fördervorrichtung 54a (54b; 69) auf die Transportvorrichtung 86a (86b) übernommen und gleichzeitig zwei oder mehrere auszulagernde Ladegüter 2 von der Transportvorrichtung 86a (86b) auf die Fördervorrichtung 55a (55b; 71) übergeben werden. Somit werden gleichzeitig zumindest vier Ladegüter 2 manipuliert.

Die Transportvorrichtung 86a (86b), wie sie in Fig. 29 näher dargestellt ist, umfasst nach dieser Ausführung eine Aufnahmeplattform 87, gegebenenfalls eine an dieser gelagerte erste Fördervorrichtung 88, gegebenenfalls eine an dieser gelagerte zweite Fördervorrichtung 89 und auf Längsseiten 104 der Aufnahmeplattform 87 angeordnete Greifvorrichtungen 90a, 90b, 91a, 91b. Die Transportvorrichtung 86a dient sowohl für einen Einlagervorgang als auch für einen Auslagervorgang von Ladegütern 2.

Die Ladegut-Hebevorrichtung 34a; 34b; 86a; 86b kann auch mehr als eine heb- und senkbare Transportvorrichtung 36a; 36b; 86a; 86b für jeweils ein oder mehrere Ladegüter 2 aufweisen, sofern mehrere Fördertechnikebenen mit jeweils einer Fördertechnik zum Antransport von Ladegütern 2 zur Ladegut-Hebevorrichtung 34a; 34b; 86a; 86b und zum Abtransport von Ladegütern 2 von der Ladegut-Hebevorrichtung 34a; 34b; 86a; 86b vorgesehen werden.

Der Ordnung halber sei abschließend darauf hingewiesen, dass zum besseren Verständnis des Aufbaus des Regallagersystems dieses bzw. dessen Bestandteile teilweise unmaßstäblich und/oder vergrößert und/oder verkleinert dargestellt wurden.

Vor allem können die einzelnen in den Fig. 1 bis 29 gezeigten Ausführungen den Gegenstand von eigenständigen, erfindungsgemäßen Lösungen bilden.

**Bezugszeichenaufstellung**

| | | | |
|---|---|---|---|
| 1 | Regallager | 36 | Transportvorrichtung |
| 2 | Ladegut | 37 | Hubantrieb |
| 3 | Förderfahrzeug | 38 | Mast |
| 4 | Ladegut-Manipulationseinheit | 39 | Antriebsmotor |
| 5 | Förderfahrzeug-Hebevorrichtung | 40 | Förderrichtung |
| | | | |
| 6 | Grundrahmen | 41 | Pufferstreckenabschnitt |
| 7 | Laufrad | 42 | Pufferstreckenabschnitt |
| 8 | Fahrmotor | 43 | Bereitstellfördervorrichtung |
| 9 | Führungsvorrichtung | 44 | Bereitstellfördervorrichtung |
| 10 | Führungsrad | 45 | Übernahmeabschnitt |
| | | | |
| 11 | Lastaufnahmevorrichtung | 46 | Übergabeabschnitt |
| 12 | Lagerregal | 47 | Pufferabschnitt |
| 13 | Teleskoparm | 48 | Förderrichtung |
| 14 | Mitnehmer | 49 | Übernahmeabschnitt |
| 15 | Regalgasse | 50 | Übergabeabschnitt |
| | | | |
| 16 | Regalebene | 51 | Pufferabschnitt |
| 17 | Lagerplatz | 52 | Förderrichtung |
| 18 | Regallagerseite | 53 | Umsetzbereich |
| 19 | Regallagerseite | 54 | Fördervorrichtung |
| 20 | vordere Längstraverse | 55 | Fördervorrichtung |
| | | | |
| 21 | hintere Längstraverse | 56 | Fördertechnikebene |
| 22 | Querträger | 57 | Fördertechnikebene |
| 23 | Profilsteg | 58 | Förderabschnitt |
| 24 | oberer Profilflansch | 59 | Förderabschnitt |
| 25 | unterer Profilflansch | 60 | Umsetzheber |
| | | | |
| 26 | Führungssteg | 61 | Transportvorrichtung |
| 27 | Energieversorgungssystem | 62 | Mast |
| 28 | Schleifleitung | 63 | Antriebsmotor |
| 29 | Stromabnehmer | 64 | Übertriebsrolle |
| 30 | Führungsrahmen | 65 | Bereitstellungsbahn |
| | | | |
| 31 | Hubantrieb | 66 | Förderrichtung |
| 32 | Aufnahmevorrichtung | 67 | Ausschleusvorrichtung |
| 33 | Längstraverse | 68 | Förderrichtung |
| 34 | Ladegut-Hebevorrichtung | 69 | Fördervorrichtung |
| 35 | Puffervorrichtung | 70 | Förderrichtung |
| 71 | Fördervorrichtung | 96 | Antriebsscheibe |
| 72 | Förderrichtung | 97 | Schubstange |
| 73 | Fördertechnikebene | 98 | Antriebsmotor |
| 74 | Vorteilsystem | 99 | Antriebsmotor |
| 75 | Förderabschnitt | 100 | Übertragungsmittel |
| | | | |
| 76 | Förderabschnitt | 101 | Übertragungsmittel |
| 77 | Förderabschnitt | 102 | Antriebsmotor |
| 78 | Förderabschnitt | 103 | Antriebsmotor |
| 79 | Gang | 104 | Längsseite |
| 80 | Übergabe- und Übernahmevorrichtung | 105 | |
| | | | |
| 81 | Übergabe- und Übernahmefläche | | |
| 82 | Fördervorrichtung | | |
| 83 | Antriebsmotor | | |
| 84 | Ladegut-Hebevorrichtung | | |
| 85 | Puffervorrichtung | | |
| | | | |
| 86 | Transportvorrichtung | | |
| 87 | Aufnahmeplattform | | |
| 88 | Fördervorrichtung | | |
| 89 | Fördervorrichtung | | |
| 90 | Greifvorrichtung | | |
| | | | |
| 91 | Greifvorrichtung | | |
| 92 | Längsführung | | |
| 93 | Längsführung | | |
| 94 | Antriebsmotor | | |
| 95 | Antriebsmotor | | |

## Patentansprüche

1. Regallagersystem mit
einem Regallager (1) mit Lagerregalen (12a, 12b), welche in übereinander liegenden Regalebenen (16) Lagerplätze (17) für Ladegüter (2) aufweisen, und
einer Ladegut-Manipulationseinheit (4; 4'; 4"), welche zumindest eine erste Ladegut-Hebevorrichtung (34a; 84a) mit einer heb- und senkbaren Transportvorrichtung (36a; 86a) zum Einlagern und Auslagern von Ladegütern (2) sowie eine erste Puffervorrichtung (35a; 85a) mit Bereitstellvorrichtungen (43, 44) für das Zwischenpuffern eines oder mehrerer Ladegüter (2) umfasst, und
zumindest einer sich zwischen benachbart zueinander angeordneten Lagerregalen (12a, 12b) und entlang der Ladegut-Hebevorrichtung (34a; 84a) sowie der ersten Puffervorrichtung (35a; 85a) erstreckenden Regalgasse (15; 15.1, 15.2), und
in zumindest einigen der Regalebenen (16) entlang der Regalgasse (15; 15.1, 15.2) verlaufenden Führungsbahnen (20), und
einem oder mehreren entlang der Führungsbahnen (20) verfahrbaren, autonomen Förderfahrzeugen (3) zum Transport der Ladegüter (2) zwischen den Lagerplätzen (17) der Lagerregale (12a, 12b) und den Bereitstellvorrichtungen (43, 44) der Ladegut-Manipulationseinheit (4; 4'; 4"; 4'"), und
einer an die Ladegut-Hebevorrichtung (34a; 84a) angeschlossenen Fördertechnik (54a, 55a; 69, 71) zum Antransport und Abtransport von Ladegütern (2) zu bzw. von der Ladegut-Hebevorrichtung (34a; 84a), wobei
die Fördertechnik eine erste Fördervorrichtung (54a; 69) zum Antransport von Ladegütern (2) zu der Ladegut-Hebevorrichtung (34a; 84a) und eine zweite Fördervorrichtung (55a; 71) zum Abtransport von Ladegütern (2) von der Ladegut-Hebevorrichtung (34a; 84a) umfasst, welche erste und zweite Fördervorrichtung (54a; 69; 55a; 71) einander gegenüberliegen, und
wobei die Puffervorrichtung (35a; 85a) zumindest in einigen der Regalebenen (16) ortsfest einen ersten Pufferstreckenabschnitt (41a) und zweiten Pufferstreckenabschnitt (42a) umfasst, in welchen die Bereitstellvorrichtungen (43, 44) angeordnet sind, und
wobei die Ladegut-Hebevorrichtung (34a; 84a) zwischen den Pufferstreckenabschnitten (41a, 42a) und den Fördervorrichtungen (54a, 55a; 69, 71) derart angeordnet ist, dass die Transportvorrichtung (36a; 86a) zum Einlagern und Auslagern von Ladegütern (2) relativ zu den Regalebenen (16) entweder zwischen je zwei gegenüberliegende Bereitstellvorrichtungen (43, 44) oder zwischen die Fördervorrichtungen (54a, 55a; 69, 71) vertikal positionierbar ist, sodass ein Ladegut (2) entweder zwischen der Transportvorrichtung (36a; 86a) und einer der Bereitstellvorrichtungen (43, 44) oder zwischen der Transportvorrichtung (36a; 86a) und einer der Fördervorrichtungen (54a, 55a; 69, 71) förderbar ist,
**dadurch gekennzeichnet, dass**
die Führungsbahnen (20) in jenen Regalebenen (16), in welchen die Bereitstellvorrichtungen (43, 44) angeordnet sind, entlang der Regalgasse (15; 15.1, 15.2) und der Ladegut-Hebevorrichtung (34a; 84a) sowie den Bereitstellvorrichtungen (43, 44) durchgehend verlaufen und
der erste Pufferstreckenabschnitt (41a) mit den Bereitstellvorrichtungen (43) und der zweite Pufferstreckenabschnitt (42a) mit den Bereitstellvorrichtungen (44) sowie die zwischen den Fördervorrichtungen (54a, 55a; 69, 71) und den Pufferstreckenabschnitten (41a, 42a) angeordnete Ladegut-Hebevorrichtung (34a; 84a) mit der heb- und senkbaren Transportvorrichtung (36a; 86a) zum Einlagern und Auslagern von Ladegütern (2) seitlich neben der Regalgasse (15; 15.1, 15.2) entlang der Führungsbahnen (20) vorgesehen sind, sodass in der jeweiligen Regalebene (16) entweder die Bereitstellvorrichtung (43) im ersten Pufferstreckenabschnitt (41a) oder die Bereitstellvorrichtung (44) im zweiten Pufferstreckenabschnitt (42a) über die Führungsbahnen (20) vom Förderfahrzeug (4) zum Auslagern und Einlagern von Ladegütern (2) anfahrbar ist, und
dass die Bereitstellvorrichtungen (43) des ersten Pufferstreckenabschnittes (41a) in allen Regalebenen (16), in welchen diese angeordnet sind, jeweils eine Auslagerstrecke für die Ladegüter (2) bilden und die Bereitstellvorrichtungen (44) des zweiten Pufferstreckenabschnittes (42a) in allen Regalebenen (16), in welchen diese angeordnet sind, jeweils eine Einlagerstrecke für die Ladegüter (2) bilden.

2. Regallagersystem nach Anspruch 1, **dadurch gekennzeichnet, dass** die erste Fördervorrichtung (54a; 69) zum Antransport von Ladegütern (2) zu der Ladegut-Hebevorrichtung (34a; 84a) und die zweite Fördervorrichtung (55a; 71) zum Abtransport von Ladegütern (2) von der Ladegut-Hebevorrichtung (34a; 84a) mehrerer Regalgassen (15.1, 15.2) an ein automatisiertes Verteilsystem (74) zum Antransport und Abtransport von Ladegütern (2) zu bzw. von den Fördervorrichtungen (54a, 55a) angeschlossen sind.

3. Regallagersystem nach Anspruch 1 oder 2, **dadurch gekennzeichnet, dass** die erste Fördervorrichtung (54a; 69) und die zweite Fördervorrichtung (55a; 71) parallel zur Regalgasse (15; 15.1, 15.2) verlaufende und fluchtend einander gegenüberliegende erste Förderabschnitte (75, 76) sowie eine der Fördervorrichtungen (54a; 69; 55a; 71) einen zweiten Förderabschnitt (77) und einen parallel zur Regalgasse (15; 15.1, 15.2) verlaufenden dritten Förderabschnitt (78) ausbilden, wobei der erste und dritte Förderabschnitt (75, 78) innerhalb einer Fördertechnikebene (56) zueinander versetzt sind oder der erste und dritte Förderabschnitt (75, 78) in übereinander liegenden Fördertechnikebenen (56, 57) angeordnet sind, wobei der erste und dritte Förderabschnitt (75, 78) über den zweiten Förderabschnitt (77) miteinander verbunden sind.

4. Regallagersystem nach Anspruch 3, **dadurch gekennzeichnet, dass** das Regallager (1) zumindest zwei Regal-Gassen-Einheiten umfasst, wovon jede Regal-Gassen-Einheit durch benachbart zueinander angeordnete Lagerregale (12a, 12b) und eine sich zwischen diesen erstreckende Regalgasse (15.1, 15.2) gebildet ist sowie die Ladegut-Manipulationseinheit (4; 4'; 4"; 4'") umfasst, und dass die ersten Förderabschnitte (75, 76) der Fördervorrichtungen (54a, 55a; 54b, 55b; 69, 71) sich in der Verlängerung eines Lagerregales (12a, 12b) der ersten Regal-Gassen-Einheit und der dritte Förderabschnitt (78) der Fördervorrichtung (54a, 55a; 54b, 55b; 69, 71) sich in der Verlängerung eines Lagerregales (12a, 12b) der zweiten Regal-Gassen-Einheit erstrecken.

5. Regallagersystem nach Anspruch 3, **dadurch gekennzeichnet, dass** das Regallager (1) zumindest zwei Regal-Gassen-Einheiten umfasst, wovon jede Regal-Gassen-Einheit durch benachbart zueinander angeordnete Lagerregale (12a, 12b) und eine sich zwischen diesen erstreckende Regalgasse (15.1, 15.2) gebildet ist sowie die Ladegut-Manipulationseinheit (4; 4'; 4"; 4'") umfasst, wobei die Regal-Gassen-Einheiten mit gegenseitigem Abstand angeordnet sind, sodass zwischen den benachbarten Lagerregalen (12a, 12b) der Regal-Gassen-Einheiten ein Gang (79) entsteht, in dessen Verlängerung oder innerhalb welchem teilweise der dritte Förderabschnitt (78) verläuft.

6. Regallagersystem nach Anspruch 1 oder 2, **dadurch gekennzeichnet, dass** das Regallager (1) zumindest eine Regal-Gassen-Einheit umfasst, welche durch benachbart zueinander angeordnete Lagerregale (12a, 12b) und eine sich zwischen diesen erstreckende Regalgasse (15) gebildet ist sowie die Ladegut-Manipulationseinheit (4") umfasst, und dass die ersten Förderabschnitte (75, 76) der Fördervorrichtungen (69, 71) sich in der Verlängerung eines Lagerregales (12a, 12b) der Regal-Gassen-Einheit und der dritte Förderabschnitt (78) der Fördervorrichtung (69; 71) sich in der Verlängerung der Regalgasse (15; 15.1, 15.2) erstrecken.

7. Regallagersystem nach Anspruch 1 oder 2, **dadurch gekennzeichnet, dass** das Regallager (1) zumindest eine Regal-Gassen-Einheit umfasst, welche durch benachbart zueinander angeordnete Lagerregale (12a, 12b) und eine sich zwischen diesen erstreckende Regalgasse (15; 15.1, 15.2) gebildet ist sowie die Ladegut-Manipulationseinheit (4'; 4") mit einer zweiten Ladegut-Hebevorrichtung (34b; 84b) mit einer heb- und senkbaren Transportvorrichtung (36b; 86b) zum Einlagern und Auslagern von Ladegütern (2) sowie eine zweite Puffervorrichtung (35b; 85b) mit Bereitstellvorrichtungen (43, 44) für das Zwischenpuffern eines oder mehrerer Ladegüter (2) umfasst, wobei sich die Regalgasse (15; 15.1, 15.2) zwischen den benachbart zueinander angeordneten Lagerregalen (12a, 12b) und entlang der Ladegut-Hebevorrichtungen (34a; 84a, 34b; 84b) sowie der Puffervorrichtungen (35a; 85a, 35b; 85b) erstreckt, und wobei
die Fördertechnik einerseits eine erste Fördervorrichtung (54a; 69) zum Antransport von Ladegütern (2) zur ersten Ladegut-Hebevorrichtung (34a; 84a) und eine zweite Fördervorrichtung (55a; 71) zum Abtransport von Ladegütern (2) von der ersten Ladegut-Hebevorrichtung (34a; 84a) und andererseits eine erste Fördervorrichtung (54b; 69) zum Antransport von Ladegütern (2) zur zweiten Ladegut-Hebevorrichtung (34b; 84b) und eine zweite Fördervorrichtung (55b; 71) zum Abtransport von Ladegütern (2) von der zweiten Ladegut-Hebevorrichtung (34b; 84b) umfasst, und
wobei die zweite Puffervorrichtung (35b; 85b) zumindest in einigen der Regalebenen (16) ortsfest einen ersten Pufferstreckenabschnitt (41b) und zweiten Pufferstreckenabschnitt (42b) umfasst, in welchen die Bereitstellvorrichtungen (43, 44) angeordnet sind, und
wobei die zweite Ladegut-Hebevorrichtung (34b; 84b) zwischen den Pufferstreckenabschnitten (41a, 42a) und den Fördervorrichtungen (54a, 55a, 54b, 55b; 69, 71) derart angeordnet ist, dass die Transportvorrichtung (36b; 86b) zum Einlagern und Auslagern von Ladegütern (2) relativ zu den Regalebenen (16) entweder zwischen je zwei gegenüberliegende Bereitstellvorrichtungen (43, 44) oder zwischen die Fördervorrichtungen (54a, 55a, 54b, 55b; 69, 71) vertikal positionierbar ist, sodass ein Ladegut (2) entweder zwischen der Transportvorrichtung (36b; 86b) und einer der Bereitstellvorrichtungen (43, 44) oder zwischen der Transportvorrichtung (36b; 86b) und einer der Fördervorrichtungen (54a, 55a, 54b, 55b; 69, 71) förderbar ist, und
wobei die ersten und zweiten Fördervorrichtungen (54a, 55a, 54b, 55b; 69, 71) jeweils in der Verlängerung der Lagerregale (12a, 12b) verlaufende und fluchtend einander gegenüberliegende erste Förderabschnitte (75, 76) und einen gemeinsamen dritten Förderabschnitt (78) in Verlängerung der Regalgasse (15; 15.1, 15.2) sowie eine der Fördervorrichtungen (54a, 55a, 54b, 55b; 69, 71) einen zweiten Förderabschnitt (77) ausbilden, und
wobei die ersten Fördervorrichtungen (54a, 54b, 69) oder zweiten Fördervorrichtungen (55a, 55b; 71) mit ihren ersten Förderabschnitten (75, 76) über den zweiten Förderabschnitt (77) mit dem dritten Förderabschnitt (78) verbunden sind.

8. Regallagersystem nach einem der Ansprüche 1 bis 7, **dadurch gekennzeichnet, dass** die Fördertechnik (54a; 54b; 69; 55a; 55b; 69, 71) zum Antransport und Abtransport von Ladegütern (2) zu bzw. von der Ladegut-Hebevorrichtung (34a; 84a; 34a; 84a, 34b; 84b) zumindest eine Übergabe- und Übernahmevorrichtung (80) für ein oder mehrere Ladegüter (2) umfasst, wobei die Übergabe- und Übernahmevorrichtung (80) an die erste Fördervorrichtung (54a; 54b; 69) und/oder zweite Fördervorrichtung (55a; 55b; 71) der Fördertechnik (54a; 54b; 69; 55a; 55b; 69, 71) anschließt, und dass sich die Führungsbahn (20) in jener Regalebene (16), in welcher die Fördertechnik (54a; 54b; 69; 55a; 55b; 69, 71) zum Antransport und Abtransport von Ladegütern (2) zu bzw. von der Ladegut-Hebevorrichtung (34a; 84a; 34b; 84b) angeordnet ist, entlang der Übergabe- und Übernahmevorrichtung (80) erstreckt und die Übergabe- und Übernahmevorrichtung (80) vom Förderfahrzeug (3) mittels der Führungsbahn (20) anfahrbar ist, sodass Ladegüter (2) zum Auslagern und Einlagern zwischen dem Förderfahrzeug (3) und der Übergabe- und Übernahmevorrichtung (80) förderbar sind.

9. Regallagersystem nach einem der Ansprüche 1 bis 8, **dadurch gekennzeichnet, dass** die heb- und senkbare Transportvorrichtung (86a; 86b) eine Aufnahmeplattform (87) für ein oder mehrere Ladegüter (2) und zumindest eine Greifereinheit (90a, 90b; 91a, 91b) zum Umlagern der Ladegüter (2) zwischen den Fördervorrichtungen (54a, 55a; 54b, 55b; 69, 71) und der Transportvorrichtung (86a; 86b) oder zwischen den Bereitstellvorrichtungen (43, 44) und der Transportvorrichtung (86a; 86b) umfasst und dass die Bereitstellvorrichtungen (43, 44) in einem Übernahme- bzw. Übergabeabschnitt (45, 46, 49, 50) jeweils einen stationären Auflagetisch für ein oder mehrere Ladegüter (2) ausbilden.

10. Regallagersystem nach einem der Ansprüche 1 bis 9, **dadurch gekennzeichnet, dass** die heb- und senkbare Transportvorrichtung (86a; 86b) eine erste Greifereinheit und eine zweite Greifereinheit umfasst, wobei jede der Greifereinheiten an einander gegenüberliegenden Längsseiten (104) der Aufnahmeplattform (87) angeordnete und relativ gegenüber der Aufnahmeplattform (87) sowohl in einer ersten Richtung parallel zu den Längsseiten (104) als auch in einer zweiten Richtung im Wesentlich senkrecht zu den Längsseiten (104) verstellbare Greifvorrichtungen (90a, 90b, 91a, 91b) zum Umlagern von Ladegütern (2) umfasst,
wobei zumindest ein erstes Ladegut (2) mittels der ersten Greifereinheit entweder von einem der Übernahme- bzw. Übergabeabschnitte (45, 46) im ersten Pufferstreckenabschnitt (41a; 41b) oder von der ersten Fördertechnik (54a; 54b; 69) zum Antransport von Ladegütern (2) auf die Transportvorrichtung (86a; 86b) und
zumindest ein zweites Ladegut (2) mittels der zweiten Greifereinheit von der Transportvorrichtung (86a; 86b) entweder auf einen der Übernahme- bzw. Übergabeabschnitte (49, 50) im zweiten Pufferstreckenabschnitt (42a; 42b) oder auf die zweite Fördertechnik (55a; 55b; 71) zum Abtransport von Ladegütern (2) gleichzeitig bewegbar sind.

11. Regallagersystem nach Anspruch 9 oder 10, **dadurch gekennzeichnet, dass** die heb- und senkbare Transportvorrichtung (86a; 86b) für ein oder mehrere Ladegüter (2) zusätzlich eine oder mehrere in Förderrichtung hintereinander angeordnete Fördervorrichtungen (88, 89) umfasst.

12. Regallagersystem nach einem der Ansprüche 1 bis 8, **dadurch gekennzeichnet, dass** die Bereitstellvorrichtungen (43, 44) jeweils als Bereitstellfördervorrichtungen ausgebildet sind und zwischen welche die Transportvorrichtung (36a; 36b) der Ladegut-Hebevorrichtung (34a; 34b) positionierbar und derart antreibbar ist, dass gleichzeitig zumindest ein erstes Ladegut (2) vom ersten Pufferstreckenabschnitt (41a; 41b) auf die Transportvorrichtung (36a; 36b) und zumindest ein zweites Ladegut (2) von der Transportvorrichtung (36a; 36b) auf den zweiten Pufferstreckenabschnitt (42a; 42b) förderbar ist.

13. Regallagersystem nach Anspruch 12, **dadurch gekennzeichnet, dass** die Fördertechnik eine an die Ladegut-Hebevorrichtung (34a; 34b) angeschlossene erste Fördervorrichtung (54a; 54b; 69) zum Antransport von Ladegütern (3) zur Ladegut-Hebevorrichtung (34a; 34b) und eine zweite Fördervorrichtung (55a; 55b; 71) zum Abtransport von Ladegütern (3) von der Ladegut-Hebevorrichtung (34a; 34b) umfasst, wobei die Transportvorrichtung (36a; 36b) der Ladegut-Hebevorrichtung (34a; 34b) zwischen den fluchtend einander gegenüberliegenden Fördervorrichtungen (54a; 54b; 55a; 55b; 69, 71) positionierbar und derart antreibbar ist, dass gleichzeitig zumindest ein erstes Ladegut (2) von der ersten Fördervorrichtung (54a; 54b; 69) auf die Transportvorrichtung (36a; 36b) und zumindest ein zweites Ladegut (2) von der Transportvorrichtung (36a; 36b) auf die zweite Fördervorrichtung (55a; 55b; 71) förderbar ist.

14. Regallagersystem nach einem der Ansprüche 1 bis 13, **dadurch gekennzeichnet, dass** die erste Fördervorrichtung (54a; 54b) zum Antransport von Ladegütern (3) zur Ladegut-Hebevorrichtung (34a; 34b) in übereinander liegenden Fördertechnikebenen (56, 57) und parallel zur Regalgasse (15) verlaufende Förderabschnitte (58, 59) umfasst, welche über einen Umsetzheber (60) miteinander verbunden sind.

15. Regallagersystem nach einem der Ansprüche 1 bis 13, **dadurch gekennzeichnet, dass** die Fördertechnik eine an die jeweilige Ladegut-Hebevorrichtung (34a; 34b) angeschlossene erste Fördervorrichtung (69) zum Antransport von Ladegütern (2) zur Ladegut-Hebevorrichtung (34a; 34b) und eine zweite Fördervorrichtung (71) zum Abtransport von Ladegütern (2) von der Ladegut-Hebevorrichtung (34a; 34b) und eine in der Regalgasse (15) verlaufende Bereitstellungsbahn (65) sowie eine Ausschleusvorrichtung (67) zum Transport von Ladegütern (2) von der Bereitstellungsbahn (66) auf die erste Fördervorrichtung (69) umfasst.

16. Regallagersystem nach einem der Ansprüche 1 bis 15, **dadurch gekennzeichnet, dass** die Ladegut-Manipulationseinheit (4; 4'; 4"; 4'") stirnseitig an die Lagerregale (12a, 12b) anschließt.

17. Regallagersystem nach einem der Ansprüche 1 bis 15, **dadurch gekennzeichnet, dass** die Ladegut-Manipulationseinheit (4; 4'; 4"; 4'") in den Lagerregalen (12a, 12b) integriert ist.

18. Verfahren zum Betreiben eines gemäß den Ansprüchen 1 bis 17 ausgebildeten Regallagersystems, **dadurch gekennzeichnet, dass** die Transportvorrichtung (36a; 36b) der Ladegut-Hebevorrichtung (34a; 34b) zumindest in einigen der Regalebenen (16) zwischen einen ersten Pufferstreckenabschnitt (41a; 41b) und einen zweiten Pufferstreckenabschnitt (42a; 42b) derart positioniert wird, dass gleichzeitig ein erstes Ladegut (2) vom ersten Pufferstreckenabschnitt (41a; 41b) auf die Transportvorrichtung (36a; 36b) und ein zweites Ladegut (2) von der Transportvorrichtung (36a; 36b) auf den zweiten Pufferstreckenabschnitt (42a; 42b) gefördert bzw. bewegt wird.

## Claims

1. A rack storage system, comprising
a rack storage (1) with storage racks (12a, 12b), having storage places (17) for load (2) in rack levels (16) situated one above the other, and
a load manipulation unit (4; 4'; 4"), comprising at least one first load-lifting device (34a; 84a) with a liftable and lowerable transport device (36a; 86a) for storing and retrieving load (2) as well as a first buffer device (35a; 85a) with provisioning devices (43, 44) for temporarily storing one or more pieces of load (2), and
at least one rack aisle (15; 15.1, 15.2) extending between adjacent storage racks (12a, 12b) and along the load-lifting device (34a; 84a) as well as the first buffer device (35a; 85a), and
guide tracks (20) running in at least some of the rack levels (16) along the rack aisle (15; 15.1, 15.2), and
one or more autonomous conveyor vehicles (3), which are displaceable along the guide tracks (20), for transporting the load (2) between the storage places (17) of the storage racks (12a, 12b) and the provisioning devices (43, 44) of the load manipulation unit (4; 4'; 4"; 4'"), and
a conveying system (54a, 55a; 69, 71) connected to the load-lifting device (34a; 84a) for transporting load (2) to and from the load-lifting device (34a; 84a), wherein
the conveying system comprises a first conveying device (54a; 69) for transporting load (2) to the load-lifting device (34a; 84a) and a second conveying device (55a; 71) for transporting load (2) from the load-lifting device (34a; 84a), wherein the first and the second conveying device (54a; 69; 55a; 71) are located opposite to each other, and wherein in at least some of the rack levels (16), the buffer device (35a; 85a) comprises a fixed first buffer path section (41a) and fixed second buffer path section (42a), in which the provisioning devices (43, 44) are arranged, and
wherein the load-lifting device (34a; 84a) is arranged between the buffer path sections (41a, 42a) and the conveying devices (54a, 55a; 69, 71) in such a way that the transport device (36a; 86a) for storing and retrieving load (2) can be vertically positioned relative to the rack levels (16) either between two oppositely situated provisioning devices (43, 44) or between the conveying devices (54a, 55a; 69, 71), so that a load (2) may either be conveyed between the transport device (36a; 86a) and one of the provisioning devices (43, 44) or between the transport device (36a; 86a) and one of the conveying devices (54a, 55a; 69, 71),
**characterised in that**
in those rack levels (16), in which the provisioning devices (43, 44) are arranged, the guide tracks (20) extend continuously along the rack aisle (15; 15.1, 15.2) and the load-lifting device (34a; 84a) as well as the provisioning devices (43, 44), and
the first buffer path section (41a) with the provisioning devices (43) and the second buffer path section (42a) with the provisioning devices (44) as well as the load-lifting device (34a; 84a), which is arranged between the conveying devices (54a, 55a; 69, 71) and the buffer path sections (41a, 42a) and has the liftable and lowerable transport device (36a; 86a) for storing and retrieving load (2), are provided sideways next to the rack aisle (15; 15.1, 15.2) along the guide tracks (20) so that in the respective rack level (16), either the provisioning device (43) in the first buffer path section (41a) or the provisioning device (44) in the second buffer path section (42a) can be approached by the conveyor vehicle (4) via the guide tracks (20) for retrieving and storing load (2) and
that the provisioning devices (43) of the first buffer path section (41a) each form a removing path for the load (2) in all the rack levels (16), in which they are arranged, and the provisioning devices (44) of the second buffer path section (42a) each form a storing path for the load (2) in all the rack levels (16), in which they are arranged.

2. The rack storage system according to claim 1, **characterised in that** the first conveying device (54a; 69) for transporting load (2) to the load-lifting device (34a; 84a) and the second conveying device (55a; 71) for transporting load (2) from the load-lifting device (34a; 84a) of several rack aisles (15.1, 15.2) are connected to an automated distribution system (74) for transporting load (2) to and from the conveying devices (54a, 55a).

3. The rack storage system according to claim 1 or 2, **characterised in that** the first conveying device (54a; 69) and the second conveying device (55a; 71) form first conveying sections (75, 76) running parallel with the rack aisle (15; 15.1, 15.2) and aligned facing each other, as well as one of the conveying devices (54a; 69; 55a; 71) forms a second conveying section (77) and a third conveying section (78) running parallel with the rack aisle (15; 15.1, 15.2), wherein the first and the third conveying section (75, 78) are offset to each other within a conveying system plane (56), or the first and the third conveying section (75, 78) are arranged in conveying system planes (56, 57) positioned one above the other, wherein the first and the third conveying section (75, 78) are connected via the second conveying section (77).

4. The rack storage system according to claim 3, **characterised in that** the rack storage (1) comprises at least two rack aisle units, each rack aisle unit of which being formed by adjacent storage racks (12a, 12b) and a rack aisle (15.1, 15.2) extending between the latter, as well as comprises the load manipulation unit (4; 4'; 4"; 4'"), and that the first conveying sections (75,76) of the conveying devices (54a, 55a; 54b, 55b; 69, 71) extend in the extension of a storage rack (12a, 12b) of the first rack aisle unit and the third conveying section (78) of the conveying device (54a, 55a; 54b, 55b; 69, 71) extends in the extension of a storage rack (12a, 12b) of the second rack aisle unit.

5. The rack storage system according to claim 3, **characterised in that** the rack storage (1) comprises at least two rack aisle units, each rack aisle unit of which being formed by adjacent storage racks (12a, 12b) and a rack aisle (15.1, 15.2) extending between the latter, as well as comprises the load manipulation unit (4; 4'; 4"; 4'"), the rack aisle units being arranged at a mutual distance, so that an aisle (79) is formed between the adjacent storage racks (12a, 12b) of the rack aisle units, in the extension of which aisle or within which aisle a part of the third conveying section (78) extends.

6. The rack storage system according to claim 1 or 2, **characterised in that** the rack storage (1) comprises at least one rack aisle unit, which is formed by adjacent storage racks (12a, 12b) and a rack aisle (15) extending between the latter, as well as comprises the load manipulation unit (4"), and that the first conveying sections (75, 76) of the conveying devices (69, 71) extend in the extension of a storage rack (12a, 12b) of the rack aisle unit and the third conveying section (78) of the conveying device (69; 71) extends in the extension of the rack aisle (15; 15.1, 15.2).

7. The rack storage system according to claim 1 or 2, **characterised in that** the rack storage (1) comprises at least one rack aisle unit, which is formed by adjacent storage racks (12a, 12b) and a rack aisle (15; 15.1, 15.2) extending between the latter, as well as the load manipulation unit (4'; 4"), which has a second load-lifting device (34b; 84b) with a liftable and lowerable transport device (36b; 86b) for storing and retrieving load (2), as well as a second buffer device (35b; 85b) with provisioning devices (43, 44) for temporarily storing one or more pieces of load (2), wherein the rack aisle (15; 15.1, 15.2) extends between the adjacent storage racks (12a, 12b) and along the load-lifting devices (34a; 84a, 34b; 84b) as well as the buffer devices (35a; 85a, 35b; 85b), and wherein
the conveying system comprises on the one hand a first conveying device (54a; 69) for transporting load (2) to the first load-lifting device (34a; 84a) and a second conveying device (55a; 71) for transporting load (2) from the first load-lifting device (34a; 84a) and on the other hand a first conveying device (54b; 69) for transporting load (2) to the second load-lifting device (34b; 84b) and a second conveying device (55b; 71) for transporting load (2) from the second load-lifting device (34b; 84b), and
wherein, in at least some of the rack levels (16), the second buffer device (35b; 85b) comprises a fixed first buffer path section (41b) and a fixed second buffer path section (42b), in which the provisioning devices (43, 44) are arranged, and
wherein the second load-lifting device (34b; 84b) is arranged between the buffer path sections (41a, 42a) and the conveying devices (54a, 55a, 54b, 55b; 69, 71) in such a way that the transport device (36b; 86b) for storing and retrieving load (2) can be vertically positioned relative to the rack levels (16) either between two oppositely situated provisioning devices (43, 44) or between the conveying devices (54a, 55a, 54b, 55b; 69, 71), so that a load (2) may either be conveyed between the transport device (36b; 86b) and one of the provisioning devices (43, 44) or between the transport device (36b; 86b) and one of the conveying devices (54a, 55a, 54b, 55b; 69, 71), and
wherein the first and the second conveying devices (54a, 55a, 54b, 55b; 69, 71) each form first conveying sections (75, 76) extending in the extension of the storage racks (12a, 12b) and aligned facing each other, and a common third conveying section (78) in the extension of the rack aisle (15; 15.1, 15.2), and one of the conveying devices (54a, 55a, 54b, 55b; 69, 71) forms a second conveying section (77), and
wherein the first conveying sections (75, 76) of the first conveying devices (54a, 54b, 69) or the second conveying devices (55a, 55b; 71) are connected to the third conveying section (78) via the second conveying section (77).

8. The rack storage system according to one of claims 1 to 7, **characterised in that** the conveying system (54a; 54b; 69; 55a; 55b; 69, 71) for transporting load (2) to and from the load-lifting device (34a; 84a; 34a; 84a, 34b; 84b) comprises at least one transfer and pick-up device (80) for one or more pieces of load (2), wherein the transfer and pick-up device (80) directly follows the first conveying device (54a; 54b; 69) and/or second conveying device (55a; 55b; 71) of the conveying system (54a; 54b; 69; 55a; 55b; 69, 71), and that the guide track (20) **in that** rack level (16), in which the conveying system (54a; 54b; 69; 55a; 55b; 69, 71) for transporting load (2) to and from the load-lifting device (34a; 84a; 34b; 84b) is arranged, extends along the transfer and pick-up device (80), and the transfer and pick-up device (80) can be approached by the conveyor vehicle (3) by means of the guide track (20), so that load (2) to be retrieved or stored can be conveyed between the conveyor vehicle (3) and the transfer and pick-up device (80).

9. The rack storage system according to one of claims 1 to 8, **characterised in that** the liftable and lowerable transport device (86a; 86b) comprises a carrying platform (87) for one or more pieces of load (2) and at least one gripping unit (90a, 90b; 91a, 91b) for relocating the load (2) between the conveying devices (54a, 55a; 54b, 55b; 69, 71) and the transport device (86a; 86b) or between the provisioning devices (43, 44) and the transport device (86a; 86b), and that the provisioning devices (43, 44) each form a stationary bearing table for one or more pieces of load (2) in a pick-up and/or transfer section (45, 46, 49, 50).

10. The rack storage system according to one of claims 1 to 9, **characterised in that** the liftable and lowerable transport device (86a; 86b) comprises a first gripping unit and a second gripping unit, wherein each gripping unit comprises gripping devices (90a, 90b, 91a, 91b) for relocating load (2), which are arranged on opposite longitudinal sides (104) of the carrying platform (87) and can be adjusted relative to the carrying platform (87) in both a first direction parallel with the longitudinal sides (104) and a second direction essentially perpendicular to the longitudinal sides (104),
wherein, simultaneously, at least a first load (2) can be moved by means of the first gripping unit either from one of the pick-up and/or transfer sections (45, 46) in the first buffer path section (41a; 41b) or from the first conveying system (54a; 54b; 69) for transporting load (2) to the transport device (86a; 86b) and
at least a second load (2) can be moved by means of the second gripping unit from the transport device (86a; 86b) either onto one of the pick-up and/or transfer sections (49, 50) in the second buffer path section (42a; 42b) or onto the second conveying system (55a; 55b; 71) for retrieving load (2).

11. The rack storage system according to claim 9 or 10, **characterised in that** the liftable and lowerable transport device (86a; 86b) for one or more pieces of load (2) additionally comprises one or more conveying devices (88, 89) arranged one behind the other in conveying direction.

12. The rack storage system according to one of claims 1 to 8, **characterised in that** the provisioning devices (43, 44) are each provided in the form of transport conveying devices and between which the transport device (36a; 36b) of the load-lifting device (34a; 34b) may be positioned and driven such that at least a first load (2) can be conveyed from the first buffer path section (41a; 41b) onto the transport device (36a, 36b) at the same time as at least a second load (2) is being conveyed from the transport device (36a; 36b) onto the second buffer path section (42a; 42b).

13. The rack storage system according to claim 12, **characterised in that** the conveying system comprises a first conveying device (54a; 54b; 69) connected to the load-lifting device (34a; 34b) for transporting load (3) to the load-lifting device (34a; 34b), and a second conveying device (55a; 55b; 71) for transporting load (3) from the load-lifting device (34a; 34b), wherein the transport device (36a; 36b) of the load-lifting device (34a; 34b) can be positioned between the conveying devices (54a; 54b; 55a; 55b; 69, 71), which are aligned facing each other, and driven such that conveying at least a first load (2) from the first conveying device (54a; 54b; 69) onto the transport device (36a; 36b) and conveying at least a second load (2) from the transport device (36a; 36b) onto the second conveying device (55a; 55b; 71) can take place simultaneously.

14. The rack storage system according to one of claims 1 to 13, **characterised in that** the first conveying device (54a; 54b) for transporting load (3) to the load-lifting device (34a; 34b) comprises conveying sections (58, 59), which extend in conveying system planes (56, 57) arranged one above the other and parallel with the rack aisle (15), and which are connected to one another via a transfer lifter (60).

15. The rack storage system according to one of claims 1 to 13, **characterised in that** the conveying system comprises a first conveying device (69) connected to the respective load-lifting device (34a; 34b) for transporting load (2) to the load-lifting device (34a; 34b), and a second transport device (71) for transporting load (2) from the load-lifting device (34a; 34b), and a provisioning track (65) running in the rack aisle (15), as well as a delivery device (67) for transporting load (2) from the provisioning track (66) onto the first conveying device (69).

16. The rack storage system according to one of claims 1 to 15, **characterised in that** the load manipulation unit (4; 4'; 4"; 4'") is arranged at the front ends of the storage racks (12a, 12b).

17. The rack storage system according to one of claims 1 to 15, **characterised in that** the load manipulation unit (4; 4'; 4"; 4'") is integrated in the storage racks (12a, 12b).

18. A method for operating a rack storage system embodied according to claims 1 to 17, **characterised in that** at least in some of the rack levels (16), the transport device (36a; 36b) of the load-lifting device (34a; 34b) is positioned between a first buffer path section (41a; 41b) and a second buffer path section (42a; 42b) such that the movement and/or conveying of a first load (2) from the first buffer path section (41a; 41b) onto the transport device (36a; 36b) and of a second load (2) from the transport device (36a; 36b) onto the second buffer path section (42a; 42b) is carried out simultaneously.

## Revendications

1. Système de stockage à rayonnages avec
un magasin à rayonnages (1) avec des rayonnages de stockage (12a, 12b) qui comprennent, dans des niveaux de rayonnages (16), des emplacements de stockage (17) pour des marchandises (2) et
une unité de manipulation de marchandises (4 ; 4' ; 4") qui comprend au moins un premier dispositif de levage de marchandise (34a ; 84a) avec un dispositif de transport pouvant être levé et baissé (36a ; 86a) pour le stockage et le déstockage de marchandises (2) ainsi qu'un premier dispositif tampon (35a ; 85a) avec des dispositifs de mise à disposition (43, 44) pour l'entreposage d'une ou plusieurs marchandises (2) et
au moins une allée de rayonnages (15 ; 15.1, 15.2) s'étendant entre des magasins à rayonnages (12a, 12b) et le long du dispositif de levage de marchandises (34a ; 84a) ainsi que du dispositif tampon (35a ; 85a) et
dans au moins certains des niveaux de rayonnages (16), des pistes de guidage (20) s'étendant le long de l'allée de rayonnages (15 ; 15.1, 15.2) et
un ou plusieurs véhicules de transport (3) autonomes mobiles le long des pistes de guidage (20), pour le transport des marchandises (2) entre les emplacements de stockage (17) des magasins à rayonnages (12a, 12b) et les dispositifs de mise à disposition (43, 44) de l'unité de manipulation de marchandises (4 ; 4' ; 4" ; 4'") et
un système de convoyage (54a, 55a ; 69, 71), connecté au dispositif de levage de marchandises (34a ; 84a) pour l'entrée et la sortie de marchandises (2) dans et hors du dispositif de levage de marchandises (34a ; 84a),
le système de transport comprenant un premier dispositif de transport (54a ; 69) pour l'entrée de marchandises (2) dans le dispositif de levage de marchandises (34a ; 84a) et un deuxième dispositif de transport (55a ; 71) pour la sortie de marchandises (2) hors du dispositif de levage de marchandises (34a ; 84a), le premier et le deuxième dispositif de connoyage (54a ; 69 ; 55a ; 71) se faisant face et
le dispositif tampon (35a ; 85a) comprenant, au moins dans certains des niveaux de rayonnages (16), un premier tronçon de tampon (41a) et un deuxième tronçon de tampon (42a), dans lesquels se trouvent les dispositifs de mise à disposition (43, 44) et
le dispositif de levage de marchandises (34a ; 84a) étant disposé entre les tronçons de tampon (41a, 42a) et les dispositifs de convoyage (54a, 55a ; 69, 71) de façon à ce que le dispositif de transport (36a ; 86a) puisse être positionné verticalement pour le stockage et le déstockage de marchandises (2) par rapport aux niveaux de rayonnages (16) soit entre deux dispositifs de mise à disposition (43, 44) opposés soit entre les dispositifs de convoyage (54a, 55a ; 69, 71), de façon à ce qu'une marchandise (2) puisse être convoyée soit entre le dispositif de transport (36a ; 86a) et un des dispositifs de mise à disposition (43, 44) soit entre le dispositif de transport (36a ; 86a) et un des dispositifs de convoyage (54a, 55a ; 69, 71),
**caractérisé en ce que**
les pistes de guidage (20) sont disposées dans les niveaux de rayonnages (16) dans lesquels se trouvent les dispositifs de mise à disposition (43, 44), s'étendent de manière continue le long de l'allée de rayonnages (15 ; 15.1, 15.2) et du dispositif de levage de marchandises (34a ; 84a) ainsi que des dispositifs de mise à disposition (43, 44) et
le premier tronçon de tampon (41a) avec les dispositifs de mise à disposition (43) et le deuxième tronçon de tampon (42a) avec les dispositifs de mise à disposition (44) ainsi que le dispositif de levage de marchandises (34a ; 84a) disposé entre les dispositifs de convoyage (54a, 55a ; 69, 71) et les tronçons de tampon (41a, 42a)avec le dispositif de transport pouvant être levé et baissé (36a ; 86a) pour le stockage et le déstockage des marchandises (2) sont prévus latéralement à côté de l'allée de rayonnages (15 ; 15.1, 15.2) le long des pistes de guidage (20), de façon à ce que, dans le niveau de rayonnage (16) correspondant, soit le dispositif de mise à disposition (43) dans le premier tronçon de tampon (41a) soit le dispositif de mise à disposition (44) dans le deuxième tronçon de tampon (42a) puisse être déplacé au-dessus des pistes de guidage (20) du dispositif de convoyage (4) pour le déstockage et le stockage de marchandises (2) et
les dispositifs de mise à disposition (43) du premier tronçon de tampon (41a) forment, dans tous les niveaux de rayonnages (16), dans lesquels ils sont disposés, un trajet de déstockage pour les marchandises (2) et les dispositifs de mise à disposition (44) du deuxième tronçon de tampon (42a) forment, dans tous les niveaux de rayonnages (16), dans lesquels ils sont disposés, un trajet de stockage pour les marchandises (2).

2. Système de stockage à rayonnages selon la revendication 1, **caractérisé en ce que** le premier dispositif de convoyage (54a ; 69) pour l'entrée de marchandises (2) dans le dispositif de levage de marchandises (34a ; 84a) et le deuxième dispositif de convoyage (55a ; 71) pour la sortie de marchandises (2) hors du dispositif de levage de marchandises (34a ; 84a) de plusieurs allées de rayonnages (15.1, 15.2) sont reliés à un système de distribution automatisé (74) pour l'entrée et la sortie de marchandises (2) dans ou hors des dispositifs de convoyage (54a, 55a).

3. Système de stockage à rayonnages selon la revendication 1 ou 2, **caractérisé en ce que** le premier dispositif de convoyage (54a ; 69) et le deuxième dispositif de convoyage (55a ; 71) forment des premières portions de convoyage (75, 76), s'étendant parallèlement à l'allée de rayonnages (15 ; 15.1, 15.2) et alignées les unes en face des autres, et un des dispositifs de convoyage (54a ; 69 ; 55a ; 71) forme une deuxième portion de convoyage (77) et une troisième portion de convoyage (78) s'étendant parallèlement à l'allée de rayonnages (15 ; 15.1, 15.2), la première et la troisième portion de convoyage (75, 78) étant décalées entre elles à l'intérieur d'un niveau d'un système de convoyage (56) ou la première et la troisième portion de convoyage (75, 78) sont disposées dans des niveaux du système de convoyage (56, 57) superposés, la première et la troisième portion de convoyage (75, 78) étant reliées entre elles par l'intermédiaire de la deuxième portion de convoyage (77).

4. Système de stockage à rayonnages selon la revendication 3, **caractérisé en ce que** le magasin à rayonnages (1) comprend au moins deux unités d'allées de rayonnage, chaque unité d'allée de rayonnages étant constituée de rayonnages (12a, 12b) disposés les uns à côté des autres et une allée de rayonnages (15.1, 15.2) s'étendant entre ceux-ci est formée et comprend l'unité de manipulation de marchandise (4 ; 4' ; 4" ; 4"'), et **en ce que** les premières portions de convoyage (75, 76) des dispositifs de convoyage (54a, 55a ; 54b, 55b ; 69, 71) s'étendent dans le prolongement d'un rayonnage (12a, 12b) de la première unité d'allée de rayonnages et la troisième portion de convoyage (78) du dispositif de convoyage (54a, 55a ; 54b, 55b ; 69, 71) s'étend dans le prolongement d'un rayonnage (12a, 12b) de la deuxième unité d'allée de rayonnages.

5. Système de stockage à rayonnages selon la revendication 3, **caractérisé en ce que** le magasin à rayonnages (1) comprend au moins deux unités d'allées de rayonnages, chaque unité d'allées de rayonnages étant constituée de deux rayonnages (12a, 12b) disposés l'un à côté de l'autre et d'une allée de rayonnages (15.1, 15.2) s'étendant entre ceux-ci et comprend une unité de manipulation de marchandises (4 ; 4' ; 4" ; 4"'), les unités d'allées de rayonnages étant disposées avec une distance entre elles de façon à ce que, entre les rayonnages (12a, 12b) adjacents des unités d'allées de rayonnages, un couloir (79) soit formé, dans le prolongement duquel ou à l'intérieur duquel la troisième portion de convoyage (78) s'étend partiellement.

6. Système de stockage à rayonnages selon la revendication 1 ou 2, **caractérisé en ce que** le magasin à rayonnages (1) comprend au moins une unité d'allées de rayonnages, qui est constituée de rayonnages (12a, 12b) disposés les uns à côté des autres et une allée de rayonnages (15) s'étendant entre ceux-ci et comprend l'unité de manipulation de marchandises (4") et **en ce que** les premières portions de convoyage (75, 76) des dispositifs de convoyage (69, 71) s'étendant dans le prolongement d'un rayonnage (12a, 12b) de l'unité d'allée de rayonnages et la troisième portion de convoyage (78) du dispositif de convoyage (69 ; 71) s'étend dans le prolongement de l'allée de rayonnages (15 ; 15.1, 15.2).

7. Système de stockage à rayonnages selon la revendication 1 ou 2, **caractérisé en ce que** le magasin à rayonnages (1) comprend au moins une unité d'allée de rayonnages qui est constituée de rayonnages (12a, 12b) disposés les uns à côté des autres et d'une allée de rayonnages (15 ; 15.1, 15.2) s'étendant entre ceux-ci et comprend l'unité de manipulation de marchandises (4' ; 4") avec un dispositif de levage de marchandises (34b ; 84b) avec un dispositif de transport pouvant être levé et baissé (36b ; 86b) pour le stockage et le déstockage de marchandises (2) et un deuxième dispositif tampon (35b ; 85b) avec des dispositifs de mise à disposition (43, 44) pour l'entreposage d'une ou plusieurs marchandises (2), l'allée de rayonnages (15 ; 15.1, 15.2) s'étendant entre les rayonnages (12a, 12b) disposés les uns à côté des autres et le long des dispositifs de levage de marchandises (34a ; 84a ; 34b ; 84b) ainsi que des dispositifs tampons (35a ; 85a ; 35b ; 85b) et
le système de convoyage comprenant, d'une part, un premier dispositif de convoyage (54a ; 69) pour l'entrée de marchandises (2) dans le premier dispositif de levage de marchandises (34a ; 84a) et un deuxième dispositif de convoyage (55a ; 71) pour la sortie de marchandises (2) hors du premier dispositif de levage de marchandises (34a ; 84a) et, d'autre part, un premier dispositif de convoyage (54b ; 69) pour l'entrée de marchandises (2) dans le deuxième dispositif de levage de marchandises (34b ; 84b) et un deuxième dispositif de convoyage (55b ; 71) pour la sortie de marchandises (2) hors du deuxième dispositif de levage de marchandises (34b ; 84b) et
le deuxième dispositif tampon (35b ; 85b) comprenant au moins dans certains des niveaux de rayonnages (16), un premier tronçon de tampon (41b) et un deuxième tronçon de tampon (42b) dans lesquels se trouvent les dispositifs de mise à disposition (43, 44) et
le deuxième dispositif de levage de marchandises (34b ; 84b) étant disposé entre les tronçons de tampon (41a, 42a) et les dispositifs de convoyage (54a, 55a, 54b, 55b ; 69, 71) de façon à ce que le dispositif de transport (36b ; 86b) peut être positionné verticalement, pour le stockage et le déstockage de marchandises (2), par rapport aux niveaux des niveaux de rayonnages (16), soit entre deux dispositifs de mise à disposition (43, 44) opposés soit entre les dispositifs de convoyage (54a, 55a, 54b, 55b ; 69, 71), de façon à ce qu'une marchandise (2) puisse être convoyée soit entre le dispositif de transport (36b ; 86b) et un des dispositifs de mise à disposition (43, 44) soit entre le dispositif de transport (36b ; 86b) et un des dispositifs de convoyage (54a, 55a, 54b, 55b ; 69, 71) et
les premier et deuxième dispositifs de convoyage (54a, 55a, 54b, 55b ; 69, 71) formant des premières portions de convoyage (75, 76) s'étendant dans le prolongement des rayonnages (12a, 12b) et se faisant face de manière alignée et une troisième portion de convoyage (78) dans le prolongement de l'allée de rayonnages (15 ; 15.1, 15.2) et un des dispositifs de convoyage (54a, 55a, 54b, 55b ; 69, 71) formant une deuxième portion de convoyage (77) et
les premiers dispositifs de convoyage (54a, 54b, 69) ou les deuxièmes dispositifs de convoyage (55a, 55b ; 71) sont reliés, avec leurs premières portions de convoyage (75, 76), par l'intermédiaire de la deuxième portion de convoyage (77), avec la troisième portion de convoyage (78).

8. Système de stockage à rayonnages selon l'une des revendications 1 à 7, **caractérisé en ce que** le système de convoyage (54a ; 54b ; 55a ; 55b ; 69, 71) pour l'entrée et la sortie de marchandises (2) dans ou hors du dispositif de levage de marchandises (34a ; 84a ; 34a ; 84a, 34b ; 84b) comprend au moins un dispositif de transfert et de prise en charge (80) pour une ou plusieurs marchandises (2), le dispositif de transfert et de prise en charge (80) prolongeant le premier dispositif de convoyage (54a ; 54b ; 69) et/ou le deuxième dispositif de convoyage (55a ; 55b ; 71) du système de convoyage (54a ; 54b ; 55a ; 55b ; 69, 71) et **en ce que** la piste de guidage (20) est disposée dans le niveau de rayonnage (16) dans lequel le système de convoyage (54a ; 54b ; 55a ; 55b ; 69, 71) pour l'entrée et la sortie de marchandises (2) dans ou hors du dispositif de levage de marchandises (34a ; 84a ; 34b ; 84b), s'étend le long du dispositif de transfert et de prise en charge (80) et le dispositif de transfert et de prise en charge (80) peut être déplacé par le véhicule de convoyage (3) au moyen de piste de guidage (20), de façon à ce que les marchandises (2) puissent être convoyées pour le déstockage et le stockage entre le véhicule de convoyage (3) et le dispositif de transfert et de prise en charge (80).

9. Système de stockage à rayonnages selon l'une des revendications 1 à 8, **caractérisé en ce que** le dispositif de transport pouvant être levé et baissé (86a ; 86b) comprend une plate-forme de logement (87) pour une ou plusieurs marchandises (2) et au moins une unité de préhension (90a, 90b ; 91a, 91b) pour le déplacement des marchandises (2) entre les dispositifs de convoyage (54a, 55a ; 54b, 55b ; 69, 71) et le dispositif de transport (86a ; 86b) ou entre les dispositifs de mise à disposition (43, 44) et le dispositif de transport (86a ; 86b) et **en ce que** les dispositifs de mise à disposition (43, 44) forment, dans une portion de prise en charge ou de transfert (45, 46, 49, 50) une table de pose pour une ou plusieurs marchandises (2).

10. Système de stockage à rayonnages selon l'une des revendications 1 à 9, **caractérisé en ce que** le dispositif de transport pouvant être levé ou baissé (86a ; 86b) comprend une première unité de préhension et une deuxième unité de préhension, chacune des unités de préhension comprenant des dispositifs de préhension (90a, 90b, 91a, 91b) pour le déplacement de marchandises (2), disposés sur des côtés longitudinaux (104) opposés de la plate-forme de logement (87) et réglables par rapport à la plate-forme de logement (87) aussi bien dans une première direction parallèle aux côtés longitudinaux (104) que dans une deuxième direction globalement perpendiculaire aux côtés longitudinaux (104),
au moins une première marchandise (2) pouvant être déplacée au moyen de la première unité de préhension soit par une des portions de transfert ou de prise en charge (45, 46) dans le premier tronçon de tampon (41a ; 41b) soit par le premier système de convoyage (54a ; 54b ; 69) pour l'entrée de marchandises (2) sur le dispositif de transport (86a ; 86b) et
au moins une deuxième marchandise (2) pouvant être déplacée simultanément au moyen de la deuxième unité de préhension par le dispositif de transport (86a ; 86b) soit sur une des portions de prise en charge ou de transfert (49, 50) dans le deuxième tronçon de tampon (42a ; 42b) ou sur le deuxième système de convoyage (55a ; 55b ; 71) pour la sortie de marchandises (2).

11. Système de stockage à rayonnages selon la revendication 9 ou 10, **caractérisé en ce que** le dispositif de transport pouvant être levé et baissé (86a ; 86b) pour une ou plusieurs marchandises (2) comprend en outre un ou plusieurs dispositifs de convoyage (88, 89) disposés les uns derrière les autres dans la direction de convoyage.

12. Système de stockage à rayonnages selon l'une des revendications 1 à 8, **caractérisé en ce que** les dispositifs de mise à disposition (43, 44) sont conçus chacun comme des dispositifs de convoyage de mise à disposition et entre lesquels le dispositif de transport (36a ; 36b) du dispositif de levage de marchandises (34a ; 34b) peut être positionné et entraîné de façon à ce que, en même temps, au moins une première marchandise (2) puisse être convoyée par le premier tronçon de tampon (41a ; 41b) vers le dispositif de transport (36a ; 36b) et au moins une deuxième marchandise (2) puisse être convoyée par le dispositif de transport (36a ; 36b) vers le deuxième tronçon de tampon (42a ; 42b).

13. Système de stockage à rayonnages selon la revendication 12, **caractérisé en ce que** le système de convoyage comprend un premier dispositif de convoyage (54a ; 54b ; 69), relié au dispositif de levage de marchandises (34a ; 34b), pour l'entrée de marchandises (3) sur le dispositif de levage de marchandises (34a ; 34b) et un deuxième dispositif de convoyage (55a ; 55b ; 71) pour la sortie de marchandises (3) hors du dispositif de levage de marchandises (34a ; 34b), le dispositif de transport (36a ; 36b) du dispositif de levage de marchandises (34a ; 34b) pouvant être positionné entre les dispositifs de convoyage (54a ; 54b ; 55a ; 55b ; 69, 71) se faisant face et alignés entre eux et entraîné de façon à ce que, en même temps, au moins une première marchandise (2) puisse être convoyée par le dispositif de convoyage (54a ; 54b ; 69) vers le dispositif de transport (36a ; 36b) et au moins une deuxième marchandise (2) puisse être convoyée par le dispositif de transport (36a ; 36b) vers le deuxième dispositif de convoyage (55a ; 55b ; 71).

14. Système de stockage à rayonnages selon l'une des revendications 1 à 13, **caractérisé en ce que** le premier dispositif de convoyage (54a ; 54b) pour l'entrée de marchandises (3) dans le dispositif de levage de marchandises (34a ; 34b) est disposé dans des niveaux du système de convoyage (56, 57) et comprend des portions de convoyage (58, 59) s'étendant parallèlement à l'allée de rayonnages (15), qui sont reliées entre elles par l'intermédiaire d'un dispositif de levage de transfert (60).

15. Système de stockage à rayonnages selon l'une des revendications 1 à 13, **caractérisé en ce que** le système de convoyage comprend un premier dispositif de convoyage (69), relié au dispositif de levage de marchandises (34a ; 34b) pour l'entrée de marchandises (2) dans le dispositif de levage de marchandises (34a ; 34b) et un deuxième dispositif de convoyage (71) pour la sortie de marchandises (2) hors du dispositif de levage de marchandises (34a ; 34b) et une piste de mise à disposition (65) s'étendant dans l'allée de rayonnages (15) ainsi qu'un dispositif de sortie (67) pour le transport de marchandises (2) par la piste de mise à disposition (66) vers le premier dispositif de convoyage (69).

16. Système de stockage à rayonnages selon l'une des revendications 1 à 15, **caractérisé en ce que** l'unité de manipulation de marchandises (4 ; 4' ; 4" ; 4"') prolonge les rayonnages (12a, 12b) du côté frontal.

17. Système de stockage à rayonnages selon l'une des revendications 1 à 15, **caractérisé en ce que** l'unité de manipulation de marchandises (4 ; 4' ; 4" ; 4"') est intégrée dans les rayonnages (12a, 12b).

18. Procédé d'exploitation d'un système de stockage à rayonnages conçu selon les revendications 1 à 17, **caractérisé en ce que** le dispositif de transport (36a ; 36b) du dispositif de levage de marchandises (34a ; 34b) est positionné entre au moins certains des niveaux de rayonnages (16) entre un premier tronçon de tampon (41a ; 41b) et un tronçon de tampon (42a ; 42b) de façon à ce que, en même temps, une première marchandise (2) est convoyée ou déplacée par le premier tronçon de tampon (41a ; 41b) vers le dispositif de transport (36a ; 36b) et une deuxième marchandise (2) peut être convoyée ou déplacée par le dispositif de transport (36a ; 36b) vers le deuxième tronçon de tampon (42a ; 42b).
